# EUROPEAN PATENT SPECIFICATION

(11) **EP 3 589 448 B1**
(45) Date of publication and mention of the grant of the patent: **06.08.2025**
(21) Application number: 18710285.0
(22) Date of filing: 28.02.2018
(51) Int. Cl.: B24B 49/00, B24B 49/14, G01N 27/24, G01M 5/00, B24B 23/02, B24B 23/06, B24D 11/00, B24D 9/00, B24D 7/00

(54) **ABRASIVE PRODUCT FOR COMMUNICATION WITH ABRADING TOOL**
SCHLEIFMITTEL ZUR KOMMUNIKATION MIT EINEM SCHLEIFWERKZEUG
PRODUIT ABRASIF COMMUNIQUANT AVEC UN OUTIL ABRASIFS

(30) Priority: 28.02.2017 US 201762464618 P; 14.03.2017 US 201762471125 P
(43) Date of publication of application: 08.01.2020
(73) Proprietor: 3M Innovative Properties Company, Saint Paul, Minnesota 55133-3427 (US)
(72) Inventor: KNUDSON, Orlin B., Saint Paul, Minnesota 55133-3427 (US); SANDERS, Rufus C., Saint Paul, Minnesota 55133-3427 (US); ECKEL, Joseph B., Saint Paul, Minnesota 55133-3427 (US); JOHNSON, Bradley M., Saint Paul, Minnesota 55133-3427 (US); KROPP, Karl M., Saint Paul, Minnesota 55133-3427 (US); RYLANDER, Richard L., Saint Paul, Minnesota 55133-3427 (US); REDINGER, David H., Saint Paul, Minnesota 55133-3427 (US); JESME, Ronald D., Saint Paul, Minnesota 55133-3427 (US); HENRY, Andrew R., Bracknell Berkshire RG12 8HT (GB); SIMON, Theo L., Bracknell Berkshire RG12 8HT (GB); JOLLY, Paul H.R., Bracknell Berkshire RG12 8HT (GB); TUNGJUNYATHAM, Justin, Saint Paul, Minnesota 55133-3427 (US); EGELAND, Marc A., Saint Paul, Minnesota 55133-3427 (US); DOLEZAL, Michael W., Saint Paul, Minnesota 55133-3427 (US); NYLAND, Adam C., Saint Paul, Minnesota 55133-3427 (US)
(74) Representative: Vossius & Partner Patentanwälte Rechtsanwälte mbB
(86) International application number: PCT/US2018/020160
(87) International publication number: WO 2018/160658

(56) References cited:
- WO-A1-00/36543
- WO-A1-2007/085070
- WO-A1-2015/110245
- WO-A2-2006/066259
- WO-A2-2008/002735
- GB-A- 2 062 511

## Description

### TECHNICAL FIELD

This disclosure relates to abrading tools and consumable abrasive products.

### BACKGROUND

Abrading tools and associated consumable abrasive products are used in numerous industries. For example, consumable abrasive products are used in the woodworking industries, marine industries, automotive industries, construction industries, and so on. Common abrading tools include orbital sanders, random orbital sanders, belt sanders, angle grinders, die grinders, and other tools for abrading surfaces. Consumable abrasive products may include sanding disks, sanding belts, grinding wheels, burrs, wire wheels, polishing discs/belts, deburring wheels, convolute wheels, unitized wheels, flap discs, flap wheels, cut-off wheels, and other products for physically abrading workpieces. Consumable abrasive products are consumable in the sense that they may be consumed and replaced much more frequently than the abrading tools with which they are used. For instance, a grinding wheel for an angle grinder may only last for a few days of work before needing to be replaced, but the angle grinder itself may last many years.

WO 2008/002735 A2 relates to abrasive articles useful in chemical-mechanical polishing (CMP). The articles may include a substrate with opposite major surfaces, an abrasive material overlaying at least a portion of at least one of the major surfaces, a means for providing CMP information positioned near the substrate, and a transmitter positioned near the substrate and adapted to transmit the CMP information to a remote receiver. It is said that some embodiments may enable in situ monitoring of the thickness and thickness variation CMP pads within the CMP machine.

### SUMMARY

The invention is set out in the appended claims.

In general, this disclosure describes techniques related to communication equipped abrading tools and consumable abrasive products. As described herein, communication among abrading tools, consumable abrasive products, and potentially one or more other computing systems may enhance safety, asset security, regulatory compliance, and inventory management.

In one example, this disclosure describes a consumable abrasive product comprising: an abrading surface for abrading a workpiece; a communication unit configured to perform at least one of: sending data to one or more external devices, or receiving data from the one or more external devices; and a data storage unit configured to store the data.

In another example, this disclosure describes an abrading tool comprising: a drive component configured to move a consumable abrasive product; and a communication unit configured to communicate with one or more external devices.

In another example, this disclosure describes a system for managing abrading tools and consumable abrasive products, the system comprising: a database; an abrading tool comprising a communication unit; a consumable abrasive product that is attachable to and detachable from the abrading tool; and a computing system comprising one or more computing devices configured to: receive first data; and store second data in the database, the second data being based on the first data.

In another example, this disclosure describes an abrading tool enhancement kit comprising: a housing shaped for attachment to an abrading tool; and a communication unit embedded in the housing, the communication unit configured to communicate with from one or more external devices.

In another example, this disclosure describes a method for storing acceleration data, comprising: monitoring, by a microcontroller, a communication unit for tag data from Near Field Communication (NFC) tags, the tag data comprising at least one of: (i) user identification information identifying a user of an abrading tool or (i) data regarding a consumable abrasive product attachable to the abrading tool; monitoring, by the microcontroller, an accelerometer coupled to the abrading tool for acceleration data, the acceleration data describing a vibration level of the abrading tool; and storing, by the microcontroller and in response to receiving the acceleration data, the acceleration data to a storage device, wherein the acceleration data is associated with the tag data..

In another example, this disclosure describes a method for storing usage data, comprising: receiving, by a computing system, check-out data that comprises (i) tool identification information of an abrading tool and (ii) user identification information identifying a user of the abrading tool; storing, by the computing system, data pairing the abrading tool and the user based on the check-out data; receiving, by the computing system, usage data regarding the abrading tool; and storing, by the computing system, the usage data, wherein the usage data is associated with the abrading tool and the user based on the data pairing the abrading tool and the user.

The details of one or more examples of the disclosure are set forth in the accompanying drawings and the description below. Other features, objects, and advantages of the disclosure will be apparent from the description, drawings, and claims.

### BRIEF DESCRIPTION OF DRAWINGS

FIG. 1 is a block diagram illustrating an example system for managing abrading tools and consumable abrasive products, in accordance with one or more techniques of this disclosure.
FIG. 2 is a flowchart illustrating example actions of a computing system, in accordance with a technique of this disclosure.
FIG. 3 is a block diagram illustrating an example implementation of an abrading tool, in accordance with one or more techniques of this disclosure.
FIG. 4 is a conceptual diagram of a consumable abrasive product (CAP), in accordance with one or more techniques of this disclosure.
FIG. 5 is a conceptual diagram illustrating an example sanding belt, in accordance with one or more techniques of this disclosure.
FIG. 6 is a conceptual diagram illustrating an example sanding disk, in accordance with one or more techniques of this disclosure.
FIG. 7 is a conceptual diagram illustrating an example CAP that includes electrodes for detecting cracks in the CAP, in accordance with one or more techniques of this disclosure.
FIG. 8 is a flowchart illustrating an example operation that detects cracks in a CAP, in accordance with one or more techniques of this disclosure.
FIG. 9 is a conceptual diagram illustrating a simplified schematic of a Radio Frequency Identification (RFID) tag installed in a CAP, in accordance with one or more techniques of this disclosure.
FIG. 10 illustrates disassembled components of a CAP, in accordance with one or more techniques of this disclosure.
FIG. 11 illustrates a simplified schematic of an example RFID tag 500, in accordance with one or more techniques of this disclosure.
FIG. 12A illustrates an example orbital sander that wirelessly powers an RFID on a CAP and reads data from the CAP, processes data from the CAP, and may wirelessly communicate on an external network, in accordance with one or more techniques of this disclosure.
FIG. 12B illustrates an example orbital sander.
FIG. 12C illustrates an example orbital sander in accordance with a technique of this disclosure.
FIG. 13 is a bottom view of an orbital sander 550 with a base removed, in accordance with one or more techniques of this disclosure.
FIG. 14A illustrates an example RFID tag with a removable antenna.
FIG. 14B illustrates an example RFID tag with an original antenna removed and a loop antenna added, in accordance with one or more techniques of this disclosure.
FIG. 15 is an example circuit diagram of a reader component of a communication-equipped abrading tool, in accordance with one or more techniques of this disclosure.
FIG. 16A is a block diagram of electronics of a portion of a communication-equipped abrading tool, in accordance with one or more techniques of this disclosure.
FIG. 16B is a block diagram of electronics of a portion of a communication-equipped abrading tool, in accordance with one or more techniques of this disclosure.
FIG. 17A shows a communication-equipped abrading tool and RFID component, in accordance with one or more techniques of this disclosure.
FIG. 17B shows an example of an abrading tool and RFID component with a lamp illuminated, in accordance with one or more techniques of this disclosure.
FIG. 17C is an example simplified schematic of a RFID component with a lamp, in accordance with one or more techniques of this disclosure.
FIG. 18A illustrates an example communication-equipped abrading tool and sanding disks, in accordance with one or more techniques of this disclosure.
FIG. 18B illustrates an example abrading tool with sanding disk attached, in accordance with one or more techniques of this disclosure.
FIG. 19A illustrates an example communication-equipped abrading tool with a first CAP attached, in accordance with one or more techniques of this disclosure.
FIG. 19B illustrates the communication-equipped abrading tool of FIG. 19B with a second CAP attached, in accordance with one or more techniques of this disclosure.
FIG. 20A illustrates an example communication-equipped CAP and a communication-equipped abrading tool, in accordance with one or more techniques of this disclosure.
FIG. 20B illustrates an example communication-equipped CAP and a communication-equipped abrading tool, in accordance with one or more techniques of this disclosure.
FIG. 21A illustrates an example grinding wheel with an RFID tag, in accordance with one or more techniques of this disclosure.
FIG. 21B illustrates an example grinder, such as a 3M ^{™} grinder 28824, 1.5 HP, in accordance with one or more techniques of this disclosure.
FIG. 22 illustrates example communication-equipped abrasives in belt form, in accordance with one or more techniques of this disclosure.
FIG. 23 illustrates an example file sander, in accordance with one or more techniques of this disclosure.
FIG. 24 illustrates an example random orbital buffer, in accordance with one or more techniques of this disclosure.
FIGS. 25A illustrates an example random orbital buffer, in accordance with one or more techniques of this disclosure.
FIG. 25B illustrates an example random orbital sander, in accordance with one or more techniques of this disclosure.
FIG. 26 illustrates an inventory tracking system, in accordance with one or more techniques of this disclosure.
FIG. 27A is a pictorial representation of a GUI of a tool inventory before check-out of a random orbital buffer by a first user, in accordance with one or more techniques of this disclosure.
FIG. 27B is a pictorial representation of a GUI of a tool inventory after check-out of the random orbital buffer by a first user, in accordance with one or more techniques of this disclosure.
FIG. 27C is a pictorial representation of a GUI of a tool inventory after check-out of a random orbital sander by a second user, in accordance with one or more techniques of this disclosure.
FIG. 28A is a pictorial representation of a GUI of a tool inventory after check-in of a random orbital sander by a second user, in accordance with one or more techniques of this disclosure.
FIG. 28B is a pictorial representation of a GUI of a tool inventory after check-in of the random orbital buffer by a first user, in accordance with one or more techniques of this disclosure.
FIG. 28C is a pictorial representation of a GUI of a tool inventory after an erroneous check-out attempt, in accordance with one or more techniques of this disclosure.
FIG. 29 is a flowchart illustrating an example operation of a computing device that detects vibration in an abrading tool, in accordance with one or more techniques of this disclosure.
FIG. 30 is a flowchart illustrating an example operation that detects acceleration data from an accelerometer of an abrading tool, in accordance with one or more techniques of this disclosure.
FIG. 31 is a flowchart illustrating an example operation for starting up and collecting acceleration data from an abrasive tool, in accordance with one or more techniques of this disclosure.
FIG. 32 is a more detailed flowchart illustrating the example operation of aspects of FIG. 31 above, in accordance with one or more techniques of the disclosure.
FIG. 33 is a schematic diagram of a control board of an abrading tool, in accordance with one or more techniques of the disclosure.
FIG. 34A is a flowchart illustrating an example operation for a first part of initializing a control board, in accordance with one or more techniques of this disclosure.
FIG. 34B is a flowchart illustrating an example operation of a second part of initializing a control board, in accordance with one or more techniques of this disclosure.
FIG. 34C is a flowchart illustrating an example operation of a first part of a process for monitoring a tag reader for tag data and writing acceleration data to a file, in accordance with one or more techniques of this disclosure.
FIG. 34D is a flowchart illustrating an example operation for searching for tag data, in accordance with one or more techniques of this disclosure.
FIG. 34E is a flowchart illustrating an example operation for writing acceleration data, in accordance with one or more techniques of this disclosure.
FIG. 34F is a flowchart illustrating an example operation for writing an acceleration summary of acceleration data, in accordance with one or more techniques of this disclosure.
FIG. 35 is a table of information received from an application configuration file, in accordance with one or more techniques of this disclosure.
FIG. 36 is a table of data file information for an acceleration data file, in accordance with one or more techniques of this disclosure.
FIG. 37A is an example table of time entries in an acceleration data file, in accordance with one or more techniques of this disclosure.
FIG. 37B is an example table of operator entries in an acceleration data file, in accordance with one or more techniques of this disclosure.
FIG. 37C is an example table of consumable products entries in an acceleration data file, in accordance with one or more techniques of this disclosure.
FIG. 38A is an example memory map of badge tag data, in accordance with one or more techniques of this disclosure.
FIG. 38B is an example memory map of tool tag data, in accordance with one or more techniques of this disclosure.
FIG. 38C is an example memory map of consumable abrasive product tag data, in accordance with one or more techniques of this disclosure.
FIG. 39 is an example acceleration data file, in accordance with one or more techniques of this disclosure.

### DETAILED DESCRIPTION

Although use of abrading tools and associated consumable abrasive products are frequently indispensable, abrading tools and associated consumable abrasive products present various challenges for individuals and organizations. For example, vibrations associated with prolonged use of handheld abrading tools are believed to be responsible for causing Hand-Arm Vibration Syndrome (HAVS), a potentially debilitating workplace injury. Accordingly, vibration dosage limits have been adopted to protect workers, such as EN ISO 5349-1 and 5349-2. In another example, inventory of tools, worker information, and consumable abrasive products may not be centrally managed, leading to inconsistent tracking of tool usage. In another example, damaged or worn consumable abrasive products may damage workpieces or cause injury. In another example, workers may use abrading tools improperly, which may result in excessive use of consumable abrasive products, damage to abrading tools or workpieces, injury to workers, and so on. Furthermore, in another example, abrading tools and associated consumable abrasive products are frequently stolen. In still another example, workers frequently develop an intuitive sense of when a workpiece is complete or when a consumable abrasive product is wearing out. However, a robot using an abrading tool may not acquire such an intuitive sense. In another example, consumable abrasive products are consumed and therefore inventory of consumable abrasive products may need to be maintained.

According to aspects of this disclosure, a system includes communication-equipped abrading tools and communication-equipped consumable abrasive products. As described in this disclosure, in some examples, an abrading tool may read information from a consumable abrasive product and may send information to the consumable abrasive product for storage in a memory of the consumable abrasive product. Conversely, in some examples, a consumable abrasive product may send information to an abrading tool, receive data from the abrading tool, and store data based on the received data. Furthermore, in some examples, the abrading tool sends and/or receives data from a computing system that stores and retrieves information from a database. In some examples, the consumable abrasive product sends and/or receives data from a computing system that stores and retrieves information from a database.

As described in detail below, such communication and storage of data may help to address various challenges associated with abrading tools and associated consumable abrasive products. For instance, some examples of this disclosure may enable the collection of vibration dosimetry data for individual workers. Some examples of this disclosure may reduce the chances of using damaged consumable abrasive products. Furthermore, some examples of this disclosure may help to prevent improper use of abrading tools and associated consumable abrasive products. Some examples of this disclosure may reduce the potential of injury. Additionally, some examples of this disclosure may help to prevent theft of abrading tools and associated consumable abrasive products.

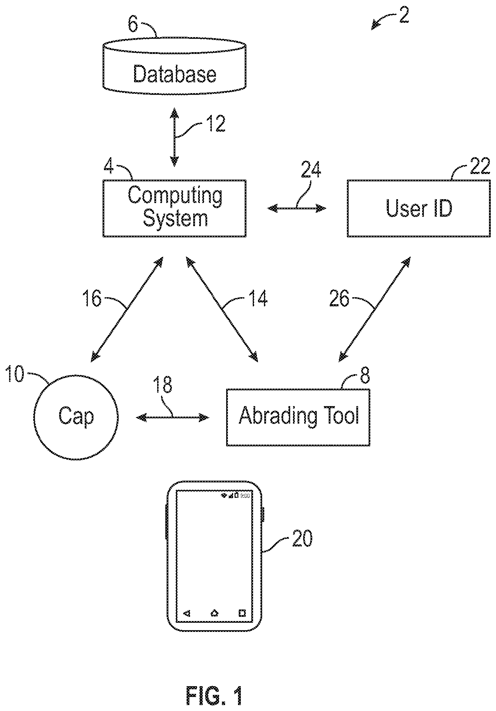

FIG. 1 is a block diagram illustrating an example system 2 for managing abrading tools and consumable abrasive products, in accordance with one or more techniques of this disclosure. In the example of FIG. 1, system 2 includes a computing system 4, a database 6, an abrading tool 8, a consumable abrasive product (CAP) 10, and a user identification (ID) 22. As depicted by arrow 12, computing system 4 may read and write data to database 6. Additionally, as depicted by arrow 14, computing system 4 may communicate with abrading tool 8. Furthermore, as depicted by arrow 16, computing system 4 may communicate with CAP 10. Additionally, as depicted by arrow 18, abrading tool 8 may communicate with CAP 10. Furthermore, as depicted by arrow 24, computing system 4 may communicate with user ID 22. Additionally, as depicted by arrow 26, abrading tool 8 may communicate with user ID 22.

Thus, system 2 comprises database 6, an abrading tool 8 comprising a communication unit, a CAP 10 that is attachable and detachable from abrading tool 8, a user ID 22 that includes user identification information, and a computing system 4 comprising one or more computing devices configured to receive first data and store second data in database 6. In this example, the second data may be based on the first data. For instance, the second data may be the same as the first data or determined in various ways using the first data. In some examples, the first data comprises data received from abrading tool 8. In some instances, the first data comprises data based on one or more sensors in abrading tool 8. Furthermore, in some examples, the first data comprises data received from CAP 10. As described elsewhere in this disclosure, the first data may comprise data regarding CAP 10. Additionally, in some examples, the first data may comprise user identification information from user ID 22.

In examples of this disclosure, computing system 4, abrading tool 8, CAP 10, and user ID 22 may communicate various types of data, in various ways, at various times, and in response to various events. For instance, in some examples, CAP 10 may send to abrading tool 8 and/or computing system 4 one or more of: a manufacture data of CAP 10, a maximum rotations per minute (RPM), product authentication data, sensor data (e.g., wear, temperature, pressure, torque) generated during usage, or other types of data regarding CAP 10. In some examples, user ID 22 may send to abrading tool and/or computing system 4 user identification information. In some instances, CAP 10 may communicate data indicating whether CAP 10 has been potentially damaged. In some examples, certain data (e.g., manufacture date, max RPM) may be stored on CAP 10 prior to initial use of CAP 10. In some examples, CAP 10 receives, from abrading tool 8 and/or computing system 4, one or more of CAP usage time, an operator identifier, operator usage time, abrasive wear state, data enabling dosimetry and wear reporting, and so on. In some examples, certain data (e.g., usage time, operator identification) may be generated during use of CAP 10, written to CAP 10, and then subsequently read from CAP 10.

Computing system 4 may comprise one or more computing devices, such as personal computers, server devices, mainframe computers, and other types of devices. Database 6 comprises an organized collection of data. Database 6 may be implemented in various ways. For example, database 6 may comprise one or more relational databases, object-oriented databases, data cubes, and so on. Although FIG. 1 shows database 6 as a single database, data described in the disclosure as being stored in database 6 may be distributed across one or more separate databases. Database 6 may be stored on non-transitory computer readable data storage media.

Abrading tool 8 may comprise various types of abrading tools, such as orbital sanders, random orbital sanders, belt sanders, angle grinders, die grinders, floor buffers, reciprocating sanders, file sanders, and other tools for abrading surfaces. CAP 10 may comprise a sanding disk, sanding belt, grinding wheel, burr, wire wheel, polishing discs/belts, deburring wheels, convolute wheels, unitized wheels, flap discs, flap wheels, cut-off wheels, and other product for physically abrading workpieces. While initially separate, a worker may attach CAP 10 to abrading tool 8 prior to work and may detach CAP 10 from abrading tool 8. For example, a worker may attach a sanding disk to a random orbital sander prior to using the random orbital sander on a workpiece. In this example, the worker may detach the sanding disk from the random orbital sander after the worker is done using the random orbital sander on the workpiece.

CAP 10 and abrading tool 8 may communicate in various ways. For example, CAP 10 may comprise a communication unit, such as a Radio Frequency Identifier (RFID) or Near Field Communication (NFC) interface (i.e., tag). In some examples, abrading tool 8 may comprise a communication unit, such as an RFID or NFC reader, configured to read data from and/or write data to the RFID or NFC interface of CAP 10 when CAP 10 is brought sufficiently close to abrading tool 8. Thus, in this example, CAP 10 and abrading tool 8 may communicate without WiFi or Bluetooth infrastructure. In some examples, the communication unit of CAP 10 may use energy harvesting techniques to derive power needed for communication, sensing, data storage, and other operations from a source external to CAP 10, such as abrading toll 8. In some examples, CAP 10 comprises an optical code. The optical code may comprise a machine-readable representation of data, such as a barcode or Quick Response (QR) code. Abrading tool 8 or another device may receive data from CAP 10 by reading the optical code.

Furthermore, CAP 10 and computing system 4 may communicate in various ways. For example, CAP 10 may comprise a communication unit, such as an RFID or NFC tag. In this example, a tag reading device, such as a fixed location device or wand, may read data from the communication unit of CAP 10. The tag reading device may send the data to computing system 4 via a communications network. In another example, a mobile device 20 (such as a worker's mobile phone) may read data from the communication unit of CAP 10 and send the data to computing system 4 via a communications network. In some examples, mobile device 20 may perform some or all of the functionality described in this disclosure with respect to computing system 4. In general, a communication network may include the Internet, a cellular data network, a WiFi network, and/or another type of communication networks.

User ID 22 and abrading tool 8 may communicate in various ways. For example, user ID 22 may comprise a communication unit, such as a Radio Frequency Identifier (RFID) or Near Field Communication (NFC) interface (i.e., tag). In some examples, abrading tool 8 may comprise a communication unit, such as an RFID or NFC reader, configured to read data from and/or write data to the RFID or NFC interface of user ID 22 when user ID 22 is brought sufficiently close to abrading tool 8. Thus, in this example, CAP 10 and abrading tool 8 may communicate without WiFi or Bluetooth infrastructure. In some examples, the communication unit of user ID 22 may use energy harvesting techniques to derive power needed for communication, sensing, data storage, and other operations from a source external to user ID 22, such as abrading tool 8. In some examples, user ID 22 comprises an optical code. The optical code may comprise a machine-readable representation of data, such as a barcode or Quick Response (QR) code. Abrading tool 8 or another device may receive data from user ID 22 by reading the optical code.

Furthermore, user ID 22 and computing system 4 may communicate in various ways. For example, user ID 22 may comprise a communication unit, such as an RFID or NFC tag. In this example, a tag reading device, such as a fixed location device or wand, may read data from the communication unit of user ID 22. The tag reading device may send the data to computing system 4 via a communications network. In another example, a mobile device 20 (such as a worker's mobile phone) may read data from the communication unit of user ID 22 and send the data to computing system 4 via a communications network. In yet another example, mobile device 20 may comprise user ID 22 and may send the data to computing system 4 via a communications network. In some examples, mobile device 20 may perform some or all of the functionality described in this disclosure with respect to computing system 4. In general, a communication network may include the Internet, a cellular data network, a WiFi network, and/or another type of communication networks.

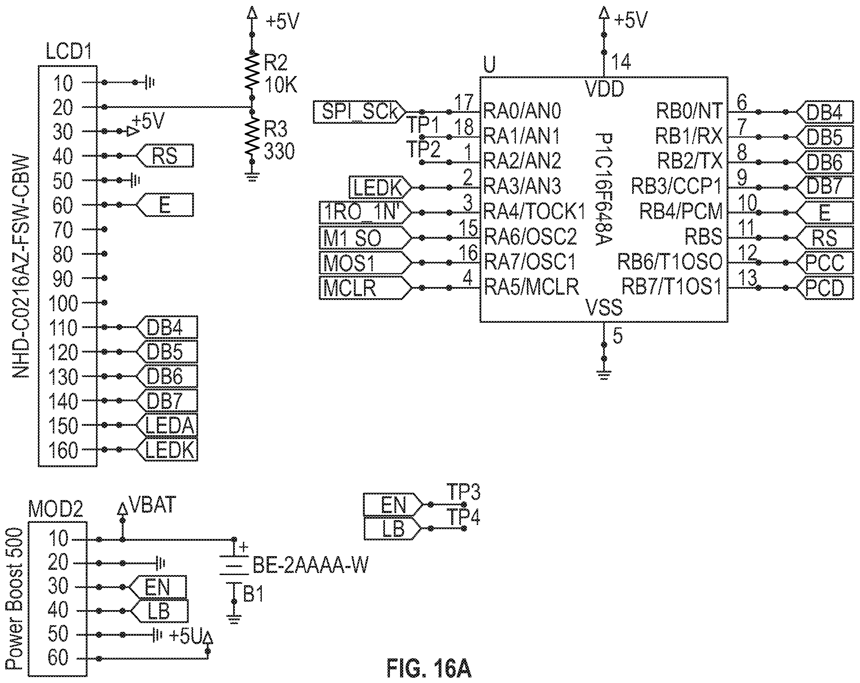

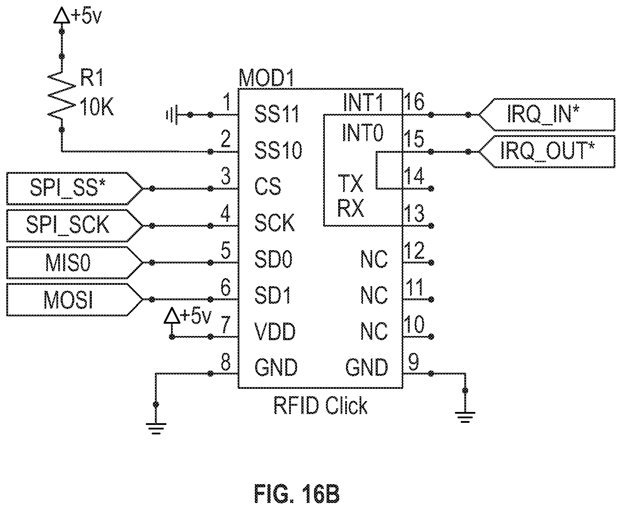

Abrading tool 8 and computing system 4 may communicate in various ways. For example, abrading tool 8 may comprise a communication unit, such as an RFID or NFC interface (e.g., an RFID or NFC tag). In this example, a tag reading device, such as a fixed location device or wand, may read data from the communication unit of abrading tool 8 and send the data to computing system 4 via a communications network. In some examples, abrading tool 8 may comprise a wireless network interface, such as a WiFi interface, Bluetooth interface, cellular data network interface (e.g., a 4G LTE interface), and/or another type of wireless network interface. In such examples, abrading tool 8 may use the wireless network interface to send and/or receive data from computing system 4. In some examples, abrading tool 8 may comprise a wire-based communication interface, such as a Universal Serial Bus (USB) interface. In such examples, abrading tool 8 may use the wire-based communications interface to send and/or receive data from computing system 4. For instance, abrading tool 8 may use a USB connection with another device, such as mobile device 20, that is configured to communicate with computing system 4. In this example, abrading tool 8 may communicate with computing system 4 while connected to the other device. In some examples, abrading tool 8 may comprise an internal communication bus, such as a serial peripheral interface (SPI) bus or I2C bus, such as shown in FIGS. 16A and 16B. In such examples, abrading tools 8 may use the internal communication bus to send and/or receive data from computing system 4.

Furthermore, in some examples, abrading tool 8 communicates with computing system 4 via hub wireless hardware. The hub wireless hardware may comprise a device located at a worksite to which multiple assets (e.g., tools, personal protection equipment, consumable products, etc.) communicate. In this example, the hub wireless hardware may communicate via another network (e.g., the internet) to computing system 4.

In some examples, abrading tool 8 may communicate with computing system 4 via mobile device 20. For instance, abrading tool 8 may comprise a communication unit, such as an RFID or NFC tag, Bluetooth interface, or other short-range wireless communication interface. In this example, mobile device 20 may relay data between computing system 4 and abrading tool 8.

In some examples, abrading tool 8 does not communicate directly with CAP 10. For instance, abrading tool 8 may send data to computing system 4 and computing system 4, in response, may send data to CAP 10. Similarly, CAP 10 may send data to computing system 4 and computing system 4, in response, may send data to abrading tool 8. In some examples, mobile device 20 may read data from CAP 10 and, in response, send data to abrading tool 8. Similarly, abrading tool 8 may send data to mobile device 20 and mobile device 20 may send the data to CAP 10.

In some examples, communication between abrading tool 8 and computing system 4 occurs asynchronously. For instance, data from computing system 4 may be stored at an intermediary device (e.g., mobile device 20, wireless hub hardware, an RFID or NFC reader, etc.) until a communication link between abrading tool 8 and the intermediary device is established. When the communication link is established, the intermediary device transmits the data to abrading tool 8. Additionally, in some examples, abrading tool 8 may generate and store data for transmission to computing system 4. Subsequently, in this example, when a communication link between abrading tool 8 and intermediary device is established, abrading tool 8 may send the data to the intermediary device for transmission to computing system 4. A similar asynchronous communication style may be used for communication between CAP 10 and computing system 4.

In some examples, abrading tool 8, CAP 10, and user ID 22 may communicate with computing system 4 in a similar way. For example, abrading tool 8, CAP 10, and user ID 22 may comprise a communication unit, such as an RFID or NFC tag, while computing system 4 may include or be communicatively coupled, such as through a USB cable, to a tag reading device, such as an RFID or NFC tag reader. In this example, the tag reading device, such as a fixed location device or wand, may read data from the communication unit of abrading tool 8, CAP 10, and/or user ID 22. The tag reading device may send the data to computing system 4 via a communications network. In another example, a mobile device 20 (such as a worker's mobile phone) may read data from the communication unit of abrading tool 8, CAP 10, and/or user ID 22 and send the data to computing system 4 via a communications network. In general, a communication network may include the Internet, a cellular data network, a WiFi network, and/or another type of communication networks.

In some examples, computing system 4 may mine data stored in database 6. For instance, computing system 4 may mine data in database 6 for data that is then reported and fed back to appropriate entities, e.g., safety or compliance manager, production foreman, maintenance manager, and so on. In some examples, computing system 4 may associate the reported data with an urgency level. For instance, reporting that abrading tool 8 is being operated beyond recommended Rotation Per Minute (RPM) level may be more urgent than reporting that a sanding disk inventory is running low. The RPM reporting may be a safety, compliance, or productivity issue which might need to be reported as soon as possible to a safety officer or shop foreman; low inventory can be reported to a purchasing agent with less urgency.

Additionally, computing system 4 may mine and/or analyze data in database 6 for information on productivity, security, inventory, safety, or other topics. For example, computing system 4 may generate various types of reports on these topics. Productivity: reporting on tool RPM, runtime, force, etc., basically how the tool and abrasive is being used. Security: has abrading tool 8 disappeared? Inventory: is the site running low on a specific product, such as CAPs? Computing system 4 may automatically place orders. Safety: is PPE being used correctly? Is a worker using the proper abrading tool? Is the worker using an abrading tool properly?

Examples of this disclosure may be used separately or in combination. Some examples of the disclosure may omit computing system 4, database 6, mobile device 20, and any of abrading tool 8, CAP 10, and/or user ID 22. Examples of this disclosure may be configured in any operable configuration. For example, while computing system 4 and database 6 have been described as separate units, either or both of computing system 4 may be coupled to or part of any of abrading tool 8, mobile device 20, or an external device, such as a local server or remote server.

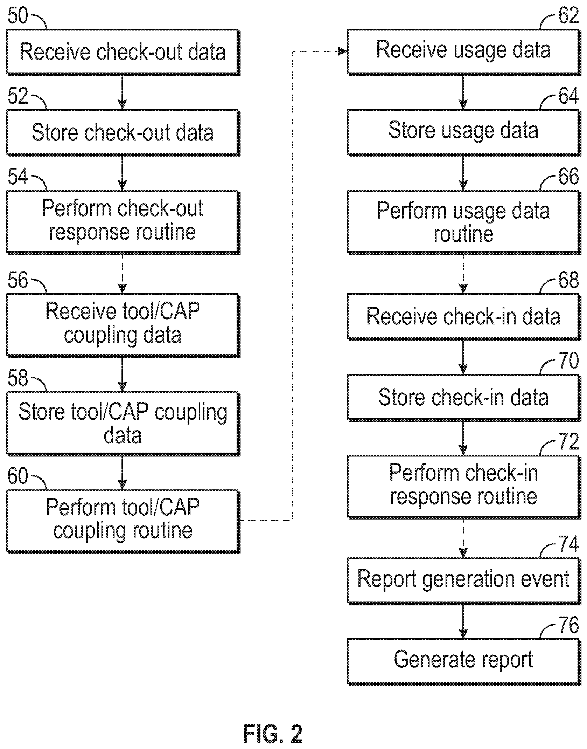

FIG. 2 is a flowchart illustrating example actions of computing system 4, in accordance with a technique of this disclosure. FIG. 2 is provided as an example. Other examples may omit actions shown in FIG. 2, may include more actions, may include actions in different orders, and so on.

As shown in the example of FIG. 2, computing system 4 may receive check-out data (50). In response to receiving the check-out data, computing system 4 may store the check-out data (or data determined based on the check-out data) to database 6 (52). The check-out data may indicate assets checked out from a storage location, including asset identification information such as an asset serial number, a type of asset, and other information regarding the asset. Assets may include an abrading tool (e.g., abrading tool 8), a CAP (e.g., CAP 10), personal protective equipment (PPE), and so on. Additionally, the check-out data may include user identification information that identifies an individual who is checking out the assets and associates usage data of abrading tool 8 with the user during a period that abrading tool 8 is checked out and operated. Checking out an asset may involve removing the asset from a storage location or checking out the asset at a kiosk or station. Thus, computing system 4 may receive an indication that a worker has checked out abrading tool 8 and/or CAP 10 and may store, in database 6, data pairing the worker with at least one of: abrading tool 8 or CAP 10.

Computing system 4 may receive the check-out data in various ways. For example, a reader device may be situated at an exit of the storage location. When a worker passes by the reader device, the reader device receives data from an identification badge of the worker and data from assets carried past the reader device. In some examples, abrading tools, CAPs, PPEs, identification badges, and other assets comprise RFID tags and the reader device comprises an RFID reader. In other examples, abrading tools, CAPs, PPEs, identification badges, and other assets may comprise NFC tags. In other examples, other communication technologies may be used.

Computing system 4 may store the check-out data in various ways. For example, computing system 4 may be communicatively coupled to a reader device and a user input device. A user may bring a tag of abrading tool 8 in close proximity to the reader device. Computing system 4 may recognize the tag and receive data regarding abrading tool 8, such as data from the tag of abrading tool 8 or data from database 6 based on data from the tag of abrading tool 8. The user may bring a tag of user ID 22 in close proximity to the reader device. Computing system 4 may recognize the tag and receive user identification information, such as information from the tag of user ID 22 or information from database 6 based on information from the tag of user ID 22. A user, such as the user checking out abrading tool 8 or a supervisor managing abrading tool inventory, may operate the user input device, such as by pressing a button, to send an indication to computing system 4 to pair abrading tool 8 and user ID 22. In response to receiving the pairing indication, computing system 4 may store data pairing abrading tool 8 and user ID 22. In some examples, computing system 4 may centrally store the data pairing abrading tool 8 and user ID 22 by sending the data pairing abrading tool 8 and user ID 2 to one or more external devices, such as database 6. Other components communicatively coupled to computing device 4 and/or database 6 may access the pairing data, such that an inventory of abrading tools and users may be centrally maintained, accessed, and associated with usage data of any one of abrading tool 8, CAP 10, and user ID 22.

Furthermore, computing system 4 may perform a check-out response routine in response to receiving the check-out data (54). In some examples, the check-out response routine may determine whether the worker has all of the appropriate PPE for abrading tool 8. For instance, the check-out response routine may determine whether the worker has safety glasses, gloves, etc. Computing system 4 may also be configured to provide information related to the appropriate PPE, such as a location of the PPE. Thus, computing system 4 may be configured to determine, in response to receiving the indication that the worker has checked out at least one of abrading tool 8 or CAP 10, that the worker has also checked out personal protection equipment appropriate for use with abrading tool 8 and/or CAP 10. Furthermore, in some examples, computing system 4 may determine, based on the remaining quantity of personal protection equipment in an inventory, whether to order more personal protection equipment and display, in response to determining that more PPE should be ordered, a link to purchase additional PPE.

In some examples, the check-out response routine may determine whether the worker is allowed or qualified to check-out the assets. In some examples, the check-out response routine may determine whether a checked-out CAP is compatible with the checked-out abrading tool. In some examples, the check-out response routine may include determining whether abrading tool 8 is checked by a worker. For example, computing system 4 may receive check-out data regarding an abrading tool that is currently paired with another user. Computing system 4 may look up the check-out data for the abrading tool, determine that the abrading tool is checked out by another user, and send an indication, such as a warning, that the abrading tool is currently checked out or may display data, such as data pairing the abrading tool with the current user, on a display device that identifies the current user.

In some examples, the check-out response routine may perform one or more actions (e.g., generate a warning, instruct abrading tool 8 not to allow a worker to use abrading tool 8 with CAP 10, etc.) if any of the assets checked out are damaged or excessively worn. For instance, the check-out response routine may perform one or more action in response to determining CAP 10 is cracked, has been used at too high a RPM level, been subjected to excessively high temperatures, is worn out, and so on. In some examples, a warning may be audible (e.g., an alarm) and/or visible ((e.g., lighting a lamp, such as a Light Emitting Diode (LED), on an abrading tool or other device), sending a message, or performing another action to alert a person.

In some examples, the check-out response routine may include determining whether the worker has already received a vibration dose exceeding a limit. If so, the check-out response routine may perform an action, such as outputting a warning or instructing abrading tool 8 not to allow the worker to use abrading tool 8 with CAP 10. In other words, computing system 4 may determine, in response to receiving the indication that the worker has checked out at least one of abrading tool 8 or CAP 10, whether the worker has already received a vibration dose exceeding a threshold. In this example, computing system 4 may perform an action in response to determining that the worker has already received a vibration dose exceeding the threshold. For example, if a maximum vibration dosage level (e.g., vibration dose value (VDV)) for the worker is 9.1 m/s^{1.75} per day, and the worker's vibration dosage level for the day is already 9.1 m/s^{1.75} or greater, the check-out response routine may generate a warning. That is, computing system 4 may send instructions to a device (e.g., abrading tool 8, mobile device 20, etc.) to activate a warning indicator, such as a visible and/or audible alarm. The warning may be directed to the worker, a supervisor, or another person. In this way, someone may be warned that the worker should not use abrading tool 8 with CAP 10, or that the worker should be using any vibration inducing equipment for a period of time. In some examples, the threshold and the warnings may be user configurable. In some examples, the check-out response routine may send instructions to abrading tool 8 to prevent the worker from using abrading tool 8 with CAP 10.

In some examples, the check-out response routine may include determining whether the worker is likely to receive more than a maximum allowed vibration dosage level for the current day by using the abrading tool and CAP, the check-out response routine may perform an action, such as generating a warning. For example, if a maximum vibration dosage level for the worker is 9.1 m/s^{1.75} per day and the worker's vibration dosage level for the day is already 8.0 m/s^{1.75}, the check-out response routine may generate a warning.

A device (e.g., a device of computing system 4, abrading tool 8) may generate a warning in various ways. For example, computing system 4 may send a text message to a mobile device of a user (e.g., worker, supervisor, or another person). In another example, the device (e.g., a device of computing system 4) may transmit instructions to the reader device or abrading tool 8 to output an audible and/or visible warning.

Furthermore, in the example of FIG. 2, computing system 4 may receive tool/CAP coupling data (56). Computing system 4 may store the tool/CAP coupling data in database 6 (58). The tool/CAP coupling data may comprise data indicating that a CAP has been coupled to an abrading tool. In some examples, the abrading tool may send the tool/CAP coupling data to computing system 4. In some examples, the CAP sends the tool/CAP coupling data to computing system 4. In some examples, the CAP and the abrading tool separately send parts of the tool/CAP coupling data to computing system 4. The tool/CAP coupling data may include various types of data. For instance, tool/CAP coupling data may identify the abrading tool and the CAP, a time at which the CAP and abrading tool were coupled, data that the abrading tool reads from the CAP, data regarding a status of the abrading tool, and so on.

Additionally, in the example of FIG. 2, computing system 4 may perform a tool/CAP coupling routine (60). In various examples, the tool/CAP coupling routine includes various actions. For example, computing system 4 may receive, from abrading tool 8, a request identifying CAP 10. For instance, the request may comprise an identifier of CAP 10. In this example, in response to the request, computing system 4 may send data regarding CAP 10 to abrading tool 8. In some examples, the tool/CAP coupling routine includes determining a usage limit, such as a maximum amount of time the worker may use the abrading tool, a maximum vibration dose, or other appropriate thresholds for use in determining a limit on the worker's vibration dosage. Furthermore, in this example, computing system 4 may send an indication of the determined usage limit to abrading tool 8. In this example, abrading tool 8 may be configured to shut off or generate a warning in response to abrading tool 8 determining the worker has attempted to use abrading tool 8 with CAP 10 beyond the usage limit. The warning may be directed to the worker, a supervisor, or another person. In this way, chances of the worker being exposed to excessive vibration may be reduced. In some instances, computing system 4 may send the warning to a mobile device (e.g., a mobile phone of the worker or another person). This process may be performed at other times as well, such as during check-out, or when the worker starts using abrading tool 8.

A device, such as a device of computing system 4, abrading tool 8, or another device, may determine the usage limit in various ways. For example, the device may determine, based on data stored in database 6, a worker's vibration dosage level so far for the current day. The device may then subtract the worker's vibration dosage level so far for the current day from a threshold level (e.g., a maximum allowable vibration dosage level for the current day). The resulting value may be the usage limit. Thus, the device may determine, based on data in database 6, a remaining vibration dose that a worker is allowed to receive and send data to the abrading tool, the data being based on the determined remaining vibration dose. In this example, the data may indicate at least one of: the remaining vibration dose, or an amount of use time corresponding to the remaining vibration dose. In this example, the device may determine, based on data in database 6 indicating a vibration dose already received by the worker during a time period (e.g., 1 day, week, hour, etc.), the remaining vibration dose that the worker is allowed to receive in the time period. In some examples, the threshold level is user configurable (e.g., by a compliance officer), and in some instances, may be tailored to specific individual workers or classes of workers based on characteristics (e.g., age, body geometry, previous injuries, etc.) of individual workers or classes of workers. In some examples, there are multiple threshold levels. For instance, there may be a "warning" threshold level, such as may be indicated by a yellow LED, and a "final" threshold level, such as may be indicated by a red LED. When the "warning" threshold level is reached, a warning may be generated, but a worker is not yet required to stop work. In this example, at the "final" threshold level, the worker may be required to stop work using the abrading tool and CAP.

In some examples, the usage limit may be based on a "points" system corresponding to limits on vibration/acceleration. The points system may be used to quantify acceleration exposure. For example, in the European Union, ISO5349-1 defines how to use an acceleration points system. Vibration data, such as acceleration data, may be recorded in the time domain. Time slices of the acceleration data may be transformed to the frequency domain to generate acceleration frequency data. A frequency weighting curve may be applied to the acceleration frequency data. A time an operator is exposed to these weighted frequencies may be recorded and summed. Points may be assigned based on frequency and time exposure to the frequency. This points system may quantify the operator exposure to acceleration energy in frequency bands, and these acceleration points may be accumulated during the shift.

In some examples, points associated with a user may be monitored in real-time. For example, points may be tracked and accumulated throughout a shift of an operator of the tool. In some examples, computing system 4 or abrading tool 8 may determine a projected points accumulation for shift end. For example, computing system 4 or abrading tool 8 may estimate end of shift accumulation by the most recent rate of points per time (e.g., represented as dP/dt). While dP/dt may vary significantly, a sum of points to date in the shift plus the recent work time average dP/dt may provide useful information as to the expected points at the end of the shift. In some examples, a remaining vibration dose may be an estimate based on a rate of vibration dose, such as rate of points per time, and a cumulative vibration dose, such as cumulative points.

Storage of the acceleration data (acceleration vs time, frequency, or points) may be local, such as on abrading tool 8, or remote, such as uploaded to computing system 4, smart phone 20, database 6, or cloud. The acceleration data may be presented to an operator, compliance officer, or other interested party to help maintain an operator and tool within threshold limits or provide information as to product performance. Feedback may be local and immediate (e.g. on the tool to the operator), or delayed (e.g. uploaded in real-time, or periodically) to computing system 4, smart phone 20, data base 6 or cloud and presented to an operator, compliance officer, or other interested party. For example, abrading tool 8 may output an indication of a current or remaining vibration dose, such as a point accumulation or projection, to the operator through an LCD display or LED feedback. As another example, computing system 4 may output an indication of a current or remaining vibration dose, such as a point accumulation or projection, to a compliance officer, safety officer, or other interested party through a display on computing system 4 or smart phone 20.

In another example, the device may determine, based on data stored in database 6 or generated by abrading tool 8, a worker's vibration dosage level based on a safety parameter that incorporates other factors related to worker safety. For example, during operation of abrading tool 8, a vibration level of abrading tool 8 may be modified through a higher application of downward force. However, the physiological effect on the user may be greater than indicated by the vibration level. A safety parameter may account for other variables, such as downward force, when determining a particular vibration dosage level that a worker may receive before exceeding a threshold. In some examples, the safety parameter may be based on real-time sensor feedback of data related to operation of abrading tool 8. For example, a pressure sensor on abrading tool 8 may measure a downward force that may be used in conjunction with vibration or acceleration data to determine a safety parameter. In some examples, the safety parameter may be based on past feedback for a particular user. For example, a particular user may have an average applied downward force determined by previous use of abrading tool 8 or testing with abrading tool 8. The average downward force may be used in conjunction with vibration or acceleration data to determine the safety parameter.

In another example, CAP 10 may store data regarding whether CAP 10 has potentially been damaged or excessively worn (e.g., from excessive heat, excessive RPM, drops, excessive use time, cracked, etc.). In this example, as part of the tool/CAP coupling routine (or at another event, such as check-out), computing system 4 may determine whether CAP 10 can be safely used with abrading tool 8. In this example, if CAP 10 cannot be safely used with abrading tool 8, computing system 4 may send instructions to abrading tool 8 to output a warning, prevent use, or perform some other action. Thus, in this example, in response to receiving data indicating that CAP 10 has been potentially damaged or excessively worn, computing system 4 may be configured to send instructions to abrading tool 8 to instruct abrading tool 8 to perform an action, such as generating a warning or preventing use of abrading tool 8 while CAP 10 is attached to abrading tool 8. In some examples, CAP 10 may comprise a thermometer that measures a temperature of CAP 10 and the data indicating whether CAP 10 has been potentially damaged may comprise data indicating whether the temperature of CAP 10 has exceeded a threshold. In some examples, the data indicating whether CAP 10 has been potentially damaged comprises at least one of: data indicating whether CAP 10 has been subject to an impact of sufficient force to damage CAP 10 or data indicating whether CAP 10 has been used at an RPM level exceeding a maximum allowable RPM level for CAP 10. In some examples, the data indicating whether CAP 10 is excessively worn comprise data indicating an electrical resistance between electrodes mounted on CAP 10. In this example, the electrical resistance may change over time as CAP 10 is used and the electrical resistance crossing a particular threshold may indicate that CAP 10 is excessively worn.

Furthermore, in the example of FIG. 2, computing system 4 may receive usage data (62). Computing system 4 may store the usage data in database 6 (64). In some examples, abrading tool 8 may send the usage data to computing system 4. In some examples, CAP 10 sends the usage data to computing system 4. In some examples, CAP 10 and abrading tool 8 separately send parts of the usage data to computing system 4. For instance, computing system 4 may receive the usage data in response to stoppage of use of abrading tool 8 (e.g., for a given amount of time). In some examples, computing system 4 may receive the usage data when abrading tool 8 and/or CAP 10 are checked back in to a storage area. Thus, in this example, the usage data may be part of the check-in data described elsewhere in this disclosure. In some examples, computing system 4 may receive the usage data when CAP 10 is decoupled from abrading tool 8. The usage data may comprise data indicating a tool run time, an operator use time, an abrasive use time, electrical current, CAP temperature data, vibration data (e.g., acceleration data), and other usage data regarding abrading tool 8 or CAP 10.

In some examples, computing system 4 may receive usage data in real-time from abrading tool 8. Real-time receipt of usage data may include any receipt of usage data during or immediately after generation or storage of the usage data. For example, abrading tool 8 may continuously send usage data regarding abrading tool 8 to computing system 4 as abrading tool 8 stores the usage data to memory. As another example, abrading tool 8 may locally store the usage data on abrading tool 8 and send the usage data to computing system 4 periodically before operation of abrading tool 8 is complete.

In some examples, the stored usage data may be associated with abrading tool 8 and a user based on data pairing abrading tool 8 and the user. For example, the usage data may include acceleration data from abrading tool 8 while abrading tool 8 is checked out by a user associated with user ID 22. The acceleration data may be associated with abrading tool 8 and the user. For example, the acceleration data may be associated with abrading tool 8 for determining whether abrading tool 8 may require maintenance, while the acceleration data may be associated with the user for determining a cumulative vibration dose for the user.

In some examples, usage data may include data received from devices paired to a user of abrading tool 8. For example, a user may be monitored for various physiological responses with respect to operation of abrading tool 8, such as heart rate. A heart rate monitor functionally coupled to the user may record data of the user's heart rate as the user operates abrading tool 8. The heart rate data may be received by computing system 4 and associated with the user specifically or with users of abrading tool 8 generically. For example, the user may be monitored for changes in physiological responses to abrading tool 8 and receive a particular condition for operation of abrading tool 8, such as a vibration limit, usage limit, or the like. As another example, the physiological response to abrading tool 8 may be associated with vibration data of abrading tool 8. Other physiological responses may include, for example, changes in force applied to abrading tool 8 by a user, changes in operating time of abrading tool 8 by the user, and any other operational data of abrading tool 8 that may be related to physiological parameters of the user.

In response to receiving the usage data, computing system 4 may perform a usage data routine (66). As noted above, the usage data may include vibration data. In some examples, the usage data routine may update a worker's vibration dosage level based on the vibration data in the usage data. Furthermore, in some examples, the usage data routine may generate a warning if the worker's vibration dosage level has exceeded or is approaching a maximum allowable vibration dosage level threshold. The warning may be directed to the worker, a supervisor, or another individual.

In some examples, the usage data routine may update physiological responses of a user to abrading tool 8 based on the usage data. Computing system 4 may use the physiological response to, for example, improve operation of abrading tool 8 or change a behavior or operating practice of workers with respect to operation of abrading tool 8 to change the physiological response.

As described above, robots may have difficulty in performing abrading tasks because they lack a human operator's intuitive feel for when work on an area of a workpiece is complete and/or whether a CAP is worn out. However, use of robots to perform abrading tasks may be highly beneficial in some situations, such as when toxic materials are involved, space is constrained, physical access to an area of a workpiece is constrained, work occurs in a hazardous area, and so on. In some instances, computing system 4 may use usage data for training of robots to perform abrading tasks. For example, computing system 4 may aggregate usage data from many work sessions to quantify what a worker might intuitively feel about an area of a workpiece being complete or a CAP being worn out. For instance, computing system 4 may determine (e.g., based on vibration data, electrical current draw data, RPM data, data regarding characteristics of the CAP and workpiece, video information, work duration information, abrading tool movement information, applied pressure information, torque information, electrical resistance measurements, CAP temperature information, and/or other data) when an area of a workpiece is complete. Similar information can be used for determining whether a CAP is worn out. In some examples, computing system 4 may train a machine learning system based on such data to make determinations regarding whether an area of a workpiece is complete and/or whether a CAP is worn out. For instance, usage data may be used as training data for a neural network. Furthermore, the usage data may be used for manufacturer monitoring of CAP and/or abrading tool performance for purposes of product improvement.

In some examples, the usage data indicates how much time CAP 10 was in use. A CAP of a particular type can be expected to last a particular number of hours in use. In examples where the usage data includes how much time CAP 10 was in use, the usage data routine may determine whether CAP 10 is approaching the end of its expected life. Accordingly, based on data stored in database 6, computing system 4 may flag CAP 10 to be discarded. If a worker subsequently tries to check-out CAP 10, computing system 4 may perform an action to warn the worker. Furthermore, in some examples, computing system 4 may determine based on the remaining time left for CAPs in an inventory whether to order more CAPs.

In some examples, the usage data indicates how much time abrading tool 8 was in use. An abrading tool of a particular type may be expected to last a particular number of hours in use between maintenance or replacement. In examples where the usage data includes how much time abrading tool 8 was in use, the usage data routine may determine whether abrading tool 8 is approaching the end of its expected operating time between maintenance events or its expected life. Accordingly, based on data stored in database 6, computing device 4 may flag abrading tool 8 to be removed from service for maintenance, discarded, and/or replaced. If a worker subsequently tries to check-out abrading tool 8, computing system 4 may perform an action to warn the worker. Furthermore, in some examples, computing system 4 may determine based on the remaining time left for abrading tools in an inventory whether to order more abrading tools.

In some examples, the usage data indicates a condition of abrading tool 8. An abrading tool of a particular type may be expected to degrade in operation between maintenance or replacement. For example, an abrading tool that used CAPs at a particular rate or is associated with a particular productivity may change in performance through use or over time. In examples where the usage data includes a condition of abrading tool 8, the usage data routine may determine whether abrading tool 8 is approaching the end of its expected operating time between maintenance events or its expected life. Accordingly, based on data stored in database 6, computing device 4 may flag abrading tool 8 to be removed from service for maintenance, discarded, and/or replaced. If a worker subsequently tries to check-out abrading tool 8, computing system 4 may perform an action to warn the worker. Furthermore, in some examples, computing system 4 may determine based on the condition of abrading tools in an inventory whether to order more abrading tools.

Furthermore, in the example of FIG. 2, computing system 4 may receive check-in data (68). Furthermore, in the example of FIG. 2, computing system 4 may store the check-in data in database 6 (70). The check-in data may indicate assets checked in to a storage location or checked in at a kiosk or station. Additionally, the check-in data may identify an individual worker who is checking in the assets. Thus, computing system 4 may be configured to receive an indication that a worker has checked in abrading tool 8 and CAP 10. Checking in an asset may involve placing the asset in a storage location. The check-in data may include the usage data described elsewhere in this disclosure.

Computing system 4 may receive the check-in data in various ways. For example, a reader device may be situated at an entrance to a storage location. When a worker passes by the reader device, the reader device receives data from an identification badge of the worker and data from assets carried past the reader device.

Computing system 4 may store the check-in data in various ways. For example, computing system 4 may be communicatively coupled to a reader device and a user input device. A user may bring a tag of abrading tool 8 in close proximity to the reader device. Computing system 4 may recognize the tag and receive data regarding abrading tool 8, such as from the tag of abrading tool 8 or database 6 based on data from the tag of abrading tool 8. The user may bring a tag of user ID 22 in close proximity to the reader device. Computing system 4 may recognize the tag and receive user identification information, such as from the tag of user ID 22 or from database 6 based on data from the tag of user ID 22. A user, such as the user checking out abrading tool 8 or a supervisor managing abrading tool inventory, may operate the user input device, such as by pressing a button, to send an indication to computing system 4 to unpair abrading tool 8 and user ID 22. Computing system 4 may determine that abrading tool 4 is associated with the user of user ID 22 based on the data pairing abrading tool 8 and the user. In response to receiving the unpairing indication and determining that abrading tool 8 is associated with the user, computing system 4 may store data unpairing abrading tool 8 and the user. In some examples, computing device 4 may the send data unpairing abrading tool 8 and user ID 22 to one or more external devices, such as database 6, so that the one or more external devices no longer associate abrading tool 8 with the user.

Additionally, in the example of FIG. 2, computing system 4 may perform a check-in response routine (72). For example, computing system 4 may determine whether all assets a worker has checked out have been checked back in. In another example, since a CAP may be discarded at a worksite instead of being checked back in, computing system 4 may remove the CAP from an inventory list, such as may be maintained in database 6, if an abrading tool to which the CAP was coupled was checked in, but the CAP was not. This information may help with inventory management and detecting of theft. In some examples, if computing system 4 determines that an inventory of CAPs is running low, computing system 4 may automatically order more CAPs. Thus, computing system 4 may be configured to determine, based on data stored in database 6, whether to reorder more CAPs. Computing system 4 may perform a similar process of determining whether to reorder more CAPs as part of a check-out response routine, in response to computing system 4 generating a report on an inventory of CAPs, or in response to other events.

In some examples, such as when the check-in data includes tool identification information, the check-in response routine may include determining a user associated with abrading tool 8. For example, computing system 4 may determine, in response to receiving the check-in data, that the user is associated with abrading tool 8 based on the data pairing abrading tool 8 and the user. Computing system 4 may output, in response to determining that the user is associated with abrading tool 8, an indication of the user.

In some examples, the check-in response routine may include determining whether abrading tool 8 is checked in by the user to which abrading tool 8 is paired. For example, computing system 4 may receive check-in data that includes user identification information of a different user than is associated with abrading tool 8. Computing system 4 may look up the check-in data for the abrading tool, determine that the abrading tool is checked out by another user, and output an indication, such as a warning, that the abrading tool is currently checked out or may display data, such as data pairing the abrading tool with the current user, on a display device that identifies the current user.

Furthermore, in the example of FIG. 2, a report generation event may occur at computing system 4 (74). In one example, the report generation event may comprise an indication of user input to generate a report. In another example, the report generation event may comprise a request from another computing device (e.g., a webpage request, web application programming interface (API) request). In another example, the report generation event may be the expiration of a time interval.

In response to the report generation event, computing system 4 may generate one or more reports based at least on part on data stored in database 6 (76). Computing system 4 may generate various types of reports. For example, computing system 4 may generate a report describing how individual workers use CAPs. For instance, a report may indicate how many CAPs a worker uses, how long a worker typically uses a CAP before it is discarded, how many CAPs were damaged by a worker per time spent by the worker using CAPs, how much pressure a worker applies when using an abrading tool, temperatures of CAPs when a worker is using the CAPs, wear states of CAPs before and after a worker uses the CAPs, how much torque an abrading tool applies to CAPs when a worker is using the abrading tool, and so on.

In some examples, computing system 4 may generate a report that provides information for training a worker or analyzing worker behavior. For instance, the report may indicate that a worker seems to be using excessive or insufficient pressure when using a particular type of CAP or abrading tool. In this instance, use of excessive pressure may lead to added risk of damaging or wear on CAPs, while use of insufficient pressure may result in abrading tasks taking too long. In another example, a report may indicate whether a worker is using different types of CAPs in a correct order. For instance, when smoothing a workpiece, CAPs are typically used in order of decreasing grit size. Reports or raw data on how a worker uses CAPs may be provided to various parties, such as governmental organizations (e.g., for regulatory compliance purposes), manufacturers of CAPs and/or abrading tools (e.g., for research and development purposes), private employers, and so on.

In some examples, computing system 4 may generate a report that aggregates how workers use CAPs. For instance, a report may indicate how much time workers typically use a CAP before the CAP is discarded, how frequently CAPs are damaged, how much pressure workers typically apply while using a particular type of CAP with an abrading tool, how much torque abrading tools apply to a particular type of CAP, and other information. Reports or raw data aggregating how workers use CAPs may be provided to various parties, such as governmental organizations (e.g., for regulatory compliance purposes), manufacturers of CAPs and/or abrading tools (e.g., for research and development purposes), private employers, and so on.

In some examples, computing system 4 may generate a report regarding worker vibration exposure. For instance, the report may identify individual workers who have been exposed to excessive vibration, when the workers were exposed to excessive vibration, levels of excessive vibration experienced by workers, and other information regarding vibration exposure for individual workers. In some instances, the report may aggregate information about vibration exposure across workers (e.g., to surface information about how frequently various sets workers in an organization are exposed to excessive vibration). Reports on vibration may be used for a variety of purposes, such as compliance with governmental regulations limiting vibration exposure, epidemiological research, product research and development, and so on.

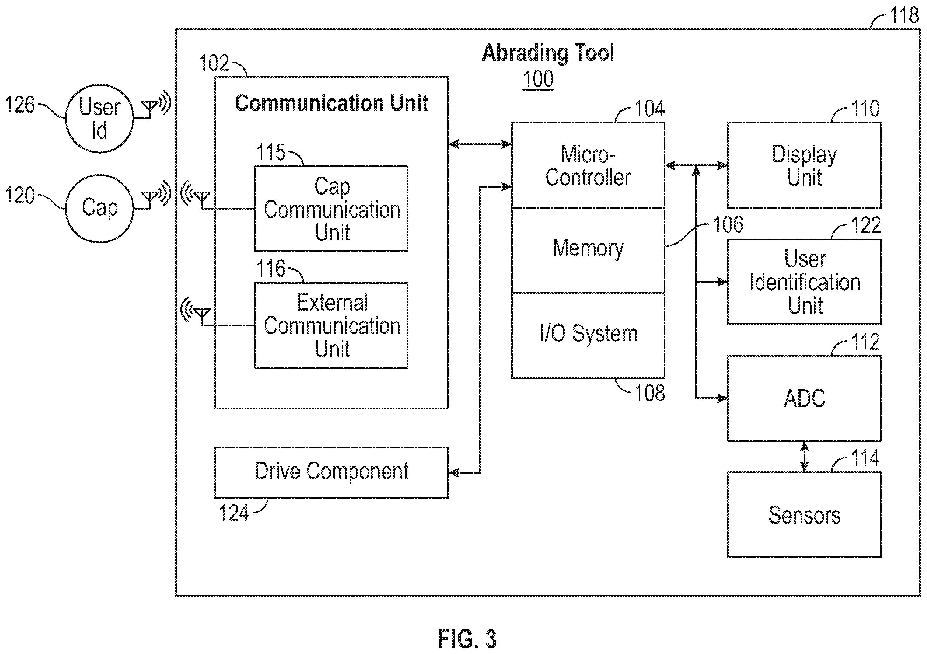

FIG. 3 is a block diagram illustrating an example implementation of an abrading tool 100, in accordance with one or more techniques of this disclosure. Abrading tool 100 may be an instance of abrading tool 8 (FIG. 1). In the example of FIG. 3, abrading tool 100 comprises a communication unit 102, a microcontroller 104, a memory 106, an input/output (I/O) system 108, a display unit 110, an analog to digital converter (ADC) 112, tool-based sensors 114, a user identification unit 122, and a drive component 124. In the example of FIG. 3, communication unit 102 comprises a CAP communication unit 115 and an external communication unit 116. Although shown in the example of FIG. 3 as being part of the same physical unit, CAP communication unit 115 and external communication unit 116 may be physically separate. Communication unit 102, microcontroller 104, memory 106, I/O system 108, display unit 110, ADC 112, sensors 114, user identification unit 122, and drive component 124 may be disposed within a physical housing 118 of abrading tool 100. In other examples, abrading tools may include more, fewer, or different components. Drive component 124 may be configured to move CAP 120. Drive component 124 may comprise an electrical, pneumatic, or hydraulic motor. Drive component 124 may create vibrations in abrading tool 100 as drive component 124 operates, such that abrading tool 100 may have a measurable vibration level.

Microcontroller 104 may comprise a small computer on a single integrated circuit. In one example, microcontroller 104 is configured to implement functionality and/or process instructions for execution within abrading tool 100. For example, microcontroller 104 may be capable of processing instructions stored by memory 106. Microcontroller 104 may include, for example, microprocessors, digital signal processors (DSPs), application specific integrated circuits (ASICs), field-programmable gate array (FPGAs), or equivalent discrete or integrated logic circuitry.

Memory 106 may be configured to store data. For instance, memory 106 may comprise one or more data storage units configured to store received data, such as data regarding CAP 120, data regarding abrading tool 100, data regarding an application specification configuration of abrading tool 100, or user identification information. In some examples, memory 106 comprises an Electrically-Erasable Programmable Read Only Memory (EEPROM) non-volatile memory. Consequently, memory 106 need not be continuously powered to retain stored data. In some examples, memory 106 may include random access memories (RAM), dynamic random access memories (DRAM), static random access memories (SRAM), magnetic hard discs, optical discs, flash memories, forms of electrically programmable memories (EPROM) and/or EEPROM, or other types of data storage unit. Although not shown in the example of FIG. 3, abrading tool 100 may include an onboard battery to power a calendar and/or clock.

I/O system 108 may comprise a physical button array, a touchscreen unit, one or more speakers, a siren, and/or other types of devices for interacting with a user. In some examples, I/O system 108 may include one or more LEDs configured to indicate a vibration level of abrading tool 100 to a user for local and immediate feedback. In some examples of local feedback, abrading tool 100 may include components for sensing, comparing, calculating, and providing feedback. For example, sensors 114 may include a vibration sensor, such as an accelerometer, configured to measure a vibration level, such as acceleration, of the abrading tool. One or more light emitting devices (LED) may be coupled to a housing of abrading tool 100 and configured to indicate the vibration level of the abrading tool to a user. Microcontroller 104 may be configured to compare the sensed vibration level with a threshold and cause, in response to the vibration level exceeding the threshold, at least one LED of the one or more LEDS to activate.

Microcontroller 104 may be configured to cause the one or more LEDs to activate according to a color or blinking pattern when a vibration threshold is exceeded. In some examples, the LEDs may have various colors indicating various vibration levels and conditions. For example, a green LED may indicate operation within a normal operating range; a yellow LED may indicate that a first, less severe acceleration threshold is exceeded; and a red light may indicate that a second, more sever acceleration threshold is exceeded. Additionally or alternatively, the LEDs may be configured to activate at various blinking patterns. For example, a blinking green LED may indicate operation below a minimum operating threshold; a solid green LED may indicate operation within the normal operating range; a blinking yellow LED may indicate that a first, less severe acceleration threshold is exceeded; and a blinking red LED may indicate that a second, more sever acceleration threshold is exceeded. The LEDs may be located on a housing of abrading tool 100, and separately controlled by microcontroller 104 by monitoring acceleration and comparing the acceleration to threshold acceleration values, which may be read from a configuration file.

In some examples, feedback may be more precise or accentuated by combining the LED's color and blinking pattern. For example, a slowly blinking LED may indicate that an acceleration threshold has been slightly exceeded, while a rapidly blinking LED may indicate that the acceleration threshold has been greatly exceeded. Additionally, these the LED colors and blinking patterns may be combined to further customize feedback. For example, a rate at which the blinking occurs can also be used as feedback to the operator, database and monitoring systems. Both acceleration thresholds (e.g., minimum operating threshold, first high threshold, second high threshold, etc.) and blinking rates may be stored in a configuration file in, for example, memory 106.

In addition to the above, location of the visual feedback on abrading tool 100, and the selection of optical feedback (e.g., LED, display unit 110) may be conspicuous. For example, the LEDs may be located on a back of a housing of abrading tool 100, such that a user may view the LEDs while operating abrading tool 100.

CAP communication unit 115 may be configured to receive data regarding CAP 120. CAP communication unit 115 may enable abrading tool 100 to communicate with one or more external devices, such as a CAP 120, computing system 4 (FIG. 1), mobile device 20 (FIG. 1), or other types of devices. For instance, CAP communication unit 115 may be configured to receive data regarding CAP 120 from CAP 120. CAP communication unit 115 may be implemented in various ways. For example, CAP communication unit 115 may comprise an RFID interface, a NFC interface, optical code reader, or other type of wireless communication interface. In such examples, CAP 120 may also comprise a communication unit, such as an RFID interface, NFC interface, or other type of wireless communication interface. In some instances, CAP 120 comprises one or more sensors, such as a temperature sensor, a wear sensor, a crack detection sensor, or another type of sensor. CAP communication unit 115 may receive data based on measurements of the sensors of CAP 120.

User identification unit 122 may be configured to receive user identification information. User identification information comprises data that identifies a user (e.g., a worker) of abrading tool 100. User identification unit 122 may receive the user identification information in various ways. For example, user identification unit 122 may comprise a numerical keypad and user identification unit 122 may receive the user identification information as PIN. In this example, user identification unit 122 may be part of I/O system 108. In some examples, user identification unit 122 comprises a biometric characteristics reader, such as a fingerprint reader, iris or retinal scanner, facial recognition system, voice recognition system, or other system for reading a biometric characteristic of a user. In some examples, user identification unit 122 may receive the user identification information from a user identification (ID) 126, dongle, token, or other object storing the user identification information of a worker. In some examples, user identification unit 122 comprises an RFID or NFC reader. In some examples, user identification unit 122 may comprise a magnetic stripe reader through which a user of abrading tool 100 swipes his or her identification badge. In some examples, user identification unit 122 may comprise a chip reader. In some examples, user identification unit 122 comprises a housing that defines a slot into which an identification badge is inserted. In some such examples, microcontroller 104 may prevent use of abrading tool 100 unless an appropriate identification badge is inserted into the slot.

In some instances, user identification unit 122 may form part of communication unit 102, external communication unit 116, or may be separate from either or both of communication unit 102 and external communication unit 116. For example, user identification unit 122 may be part of communication unit 102, such that communication unit 102 may be configured to receive user identification information identifying a user of abrading tool 100.
External communication unit 116 may comprise one or more powered or unpowered communications interfaces. For example, external communication unit 116 may comprise a USB interface, such as a port for a USB hardwire connection, or USB docking station. In some examples, external communication unit 116 may comprise a WiFi interface, a Bluetooth interface (e.g., a Bluetooth Low Energy (BLE) interface), a mobile data modem (e.g., a 4G LTE modem) or another powered communications interface. In some examples, external communication unit 116 may comprise an RFID interface, an NFC interface, or another unpowered communications interface. In some examples, abrading tool 100 may use external communication tool to communicate with computing system 4 (FIG. 1).

In some examples, communication unit 102 may be configured to receive tag data from NFC tags. For example, communication unit 102 may comprise an NFC tag reader configured to at least read tag data from NFC tags. Tag data comprises data that is stored on NFC tags and is associated with one or more components of system 2 of FIG. 1. Tag data may include a variety of data stored on NFC tags including, but not limited to: user identification information identifying the user of abrading tool 100, such as a tag type ID, a user name, or a badge ID of a user ID 126; data regarding CAP 120, such as the tag type ID, badge ID of a badge of a last user, total runtime of CAP 120, brand name of CAP 120, product ID of CAP 120, manufacturing data of CAP 120, maximum RPM of CAP 120, or grit/grade of CAP 120; and data regarding abrading tool 100, such as tag type ID, part number of abrading tool 100, and serial number of abrading tool 100. NFC tags may send data to the NFC tag reader in a variety of ways. For example, an NFC tag may send tag data to the NFC tag reader in response to the harvesting of RF energy emanating from communication unit 102 that has embedded within the RF signal a command that tells an NFC chip of the NFC tag to respond. In some examples, communication unit 102 may be configured to send tag data to microcontroller 104 in response to receiving tag data from an NFC tag, such as an NFC tag on CAP 120 or user ID 126.

In some examples, communication unit 102 may be configured to act as a passive NFC tag for abrading tool 100. For example, communication unit 102 may have a passive NFC tag mode that is configured to communicate NFC data to another communication device, such as another NFC reader.

In various examples, sensors 114 may include various types of sensors located within housing 118. Sensors 114 are devices that converts real world data (analog) into data that microcontroller 104 can understand using ADC 112. For example, sensors 114 may include an accelerometer, an ammeter (i.e., an electrical current meter) that measures an electrical current draw of abrading tool 100 during use of abrading tool 100, a voltage meter that measures a voltage of an electrical current during use of abrading tool 100, a tachometer that measures rotation of CAP 120, a timer, a pressure sensor that measures force applied to abrading tool 100 by a user of abrading tool 100, a torque sensor that measures torque abrading tool 100 applies to CAP 120, a vibration sensor that measures vibration generated by abrading tool 100 during use of abrading tool 100, sensors (e.g., optical sensors) for determining a wear level of CAP 120, and so on.

In some examples, a vibration sensor may be implemented as one or more accelerometers. An accelerometer may be coupled to abrading tool 100, such that accelerometer may receive acceleration stimuli of drive component 124. The accelerometer may be configured to measure the acceleration stimuli as acceleration data. The acceleration data may describe a vibration level of abrading tool 100.

Microcontroller 104 may receive data from CAP communication unit 115, ADC 112, external communication unit 116, user identification unit 122, communication unit 102, and potentially other components of abrading tool 100. Additionally, microcontroller 104 may process received data and output data for display on display unit 110. For example, display unit 110 may be configured to display data regarding CAP 120. For instance, microcontroller 104 may output the part number of CAP 120, the grit value for CAP 120, the max RPM value for CAP 120, a current wear level of CAP 120, and the usage time of CAP 120 for display on display unit 110. In this example, microcontroller 104 may receive data indicating the part number of CAP 120, grit value for CAP 120, max RPM value for CAP 120, current wear level of CAP 120, and usage time of CAP 120 from communication unit 102 and/or external communication unit 116. Since different CAPs may have different characteristics, display unit 110 may display different data when different CAPs are attached to abrading tool 100.

In some examples, communication unit 102 is configured to receive data regarding an application specific configuration of abrading tool 100. For example, abrading tool 100 may generally operate based on an operating system configuration that defines general purpose inputs and outputs, such as I/O system 108. To direct operation of abrading tool 100 to a particular application having particular operating characteristics and conditions, abrading tool 100 may be initialized with data regarding the application specific configuration that includes parameters configured for the particular operating characteristics and conditions. For example, communication unit 102 may receive an application configuration file that includes a variety of data and configuration parameters for components of abrading tool 100. The data and configuration parameters may include, but are not limited to, a name of abrading tool 100, a part number of abrading tool 100, a serial number of abrading tool 100, and any other identification or configuration data regarding abrading tool 100.

In some examples, the data regarding application specific configuration may include at least one configurable parameter of sensors 114, such as an accelerometer. For example, sensors 114 may include an accelerometer. In this example, the data regarding the application specification configuration may include at least one configurable acceleration parameter such as a minimum acceleration recording threshold, a maximum acceleration recording warning threshold, an accelerometer sampling rate, a hysteresis acceleration threshold. In some examples, microcontroller 104 may be configured to initialize operation of abrading tool 100 using at least one configurable acceleration parameter. For example, memory 106 may include the data regarding application specific configuration.

In some examples, the data regarding the application specific configuration may include at least one configurable parameter of communication unit 102. For example, communication unit 102 may include an NFC reader that may operate to read or write to NFC tags and/or act as a passive NFC tag. In this example, the data regarding the application specific configuration may include an NFC mode of the NFC tag reader, a length of time for communication unit 102 to read/write NFC data from NFC tags, a length of time for communication unit 102 to act as a passive NFC tag for abrading tool 100, an address of NFC tool tag data, and the like.

In some examples, microcontroller 104 may be configured to monitor communication unit 102 for tag data from NFC tags. For example, microcontroller 104 may be configured to receive tag data from communication unit 102 and maintain an open channel of communication from communication unit 102. In some examples, microcontroller 104 may be configured to receive data from communication unit 102 and determine whether the data is tag data, such as based on a tag type ID. For example, microcontroller 104 may receive data from an NFC tag and whether the data includes a tag type ID that matches one of several tag type IDs, such as: a tag type ID of abrading tool 100, identifying the NFC tag as belonging to abrading tool 100; a tag type ID of CAP 120, identifying the NFC tag as belonging to CAP 120; or a tag type ID of user ID 126, identifying the NFC tag as belonging to user ID 126.

In response to communication unit 102 receiving tag data, microcontroller 104 may store the tag data to a storage device, such as memory 106. For example, in response to user identification unit 122 receiving user identification information or CAP communication unit 115 receiving data regarding CAP 120, microcontroller 104 may store the user identification information or data regarding CAP 120 in memory 106. In some examples, communication unit 102 may communicate, to one or more external devices (e.g., CAP 120, computing system 4 (FIG. 1)) user-device pairing data that associates abrading tool 100, CAP 120, and a user of user ID 126. In this way, microcontroller 104 may generate and/or send information associating the user with usage data.

In some examples, microcontroller 104 may perform various actions based at least in part on data from sensors 114. For example, microcontroller 104 may be configured to perform an action in response to determining, based on the acceleration data, that abrading tool 100 has exceeded a maximum vibration warning threshold. In this example, performing the action may comprise generating a warning (e.g., lighting a lamp, such as a Light Emitting Diode (LED), on abrading tool 100), preventing drive component 124 from moving CAP 120, and/or other actions.

In some examples, sensors 114 may comprise a vibration sensor configured to generate vibration measurements, such as acceleration data, of abrading tool 100. In this example, microcontroller 104 may be configured to perform an action in response to determining, based on the vibration measurements generated by the vibration sensor, that a user of abrading tool 100 has received a vibration dose greater than or equal to a threshold. In this example, external communication unit 116 may be configured to receive an indication of a vibration dose already received by the user of abrading tool 100. Furthermore, in this example, microcontroller 104 may be configured to perform the action in response to determining, based on the vibration measurements generated by the vibration sensors and the indication of the vibration dose already received by the user, that the user has received the vibration dose greater than or equal to the threshold. In this example, performing the action may comprise generating a warning (e.g., lighting a lamp, such as a Light Emitting Diode (LED), on abrading tool 100), preventing drive component 124 from moving CAP 120, and/or other actions.

In some examples, sensors 114 may comprise an accelerometer as a vibration sensor that generates acceleration measurements. In this example, microcontroller 104 may be configured to monitor the accelerometer for acceleration data. For example, microcontroller 104 may be configured to receive acceleration data from the accelerometer and maintain an open channel of communication from accelerometer 104. Microcontroller 104 may be configured to store, in response to receiving the acceleration data, the acceleration data to a storage device, such as memory 106. In some examples, microcontroller 104 may be configured to filter the received acceleration data from the accelerometer before storing the acceleration data. For example, microcontroller may receive the acceleration data from the accelerometer and compare the acceleration data to a minimum acceleration recording threshold. If a value of the acceleration data, such as an amplitude, exceeds the minimum acceleration recording threshold, microcontroller 104 may store the acceleration data.

In some examples, external communication unit 116 may be configured to send, to an external device (e.g., computing system 4), data based on one or more measurements from one or more sensors 114. For example, sensors 114 may comprise a vibration sensor configured to measure a vibration level of abrading tool 100. In this example, external communication unit 116 may be configured to send data based on the vibration level to the external device. In some examples, sensors 114 comprise one or more of an ammeter that measures an electrical current draw of abrading tool 100 during use of abrading tool 100, a tachometer that measures rotation of CAP 120, a pressure sensor that measures force applied to abrading tool 100 by a user of abrading tool 100, or a torque sensor that measures torque applied by abrading tool 100 to CAP 120. In such examples, external communication unit 116 may be configured to send, to the external device, data based on measurements of at least one of the ammeter, the tachometer, the pressure sensor, torque sensor, or wear sensor.

In some examples, a wear sensor of CAP 120 measures one or more characteristics of CAP 120 associated with a wear level of CAP 120. For instance, the wear sensor may comprise one or more electrical resistance sensors or electrical impedance sensors. As CAP 120 is used, the thickness of CAP 120 decreases, resulting in a change in electrical resistance and/or impedance between two or more electrodes attached to CAP 120. Furthermore, an abrupt increase in resistance or impedance may indicate the presence of a crack in CAP 120. In some examples, CAP 120 comprises a high permeability material in CAP 120 that is typically lost with wear to CAP 120. A sensor in CAP 120 or abrading tool 100 may sense (e.g., via inductive coupling) the resulting change in permeability (e.g., as a change in inductance). In some examples, CAP 120 may comprise an annular ring that is eroded as CAP 120 is used. In such examples, a sensor may measure wear of CAP 120 based on one or more characteristics of an electrical current applied to the annular ring (e.g., resistance, impedance).

In some examples, microcontroller 104 may determine a wear level of CAP 120 based on data indicating torque required to accelerate CAP 120. For example, as CAP 120 wears out, CAP 120 may lose mass. Thus, the energy required to accelerate CAP 120 to a certain speed (e.g., RPM level) decreases as CAP 120 loses mass. Therefore, the energy required to accelerate CAP 120 to the certain speed may decrease as CAP 120 wears out. In some examples, CAP 120 may gain mass as CAP 120 wears. For instance, CAP 120 may gain mass as spaces between grit particles may become clogged with abraded material as CAP 120 wears. Hence, by measuring the torque required to accelerate CAP 120 to the certain speed, microcontroller 104 may determine a wear level of CAP 120. Microcontroller 104 may determine torque be based on a measurement of electrical current. In some examples, the determination of the wear level of CAP 120 is performed by free spinning CAP 120 (i.e., without applying CAP 120 to a workpiece). Determining the wear level of CAP 120 in this manner may be done before each use of CAP 120. In some instances, free spinning a CAP prior to use may already be recommended for safety reasons. In some examples, an external device (e.g., computer system 4) determines the wear level in this manner based on data from sensors 114 of abrading tool 100.

In some examples, CAP communication unit 115 may receive an identifier of CAP 120 from CAP 120. Microcontroller 104 may instruct external communication unit 116 to use the identifier to retrieve data regarding CAP 120, such as the grit value for CAP 120, the max RPM value for CAP 120, current wear level of CAP 120, and the usage time of CAP 120. Thus, in this example, communication unit 102 may receive, from CAP 120, data identifying CAP 120. Furthermore, in this example, communication unit 102 may send, to a remote device (e.g., computing system 4), a request identifying CAP 120. In this example, the remote device is a device other than CAP 120. In this example, in response to the request, communication unit 102 may receive the data regarding CAP 120 from the remote device.

In some examples, microcontroller 104 may output worker-specific information for display on display unit 110. For example, microcontroller 104 may output worker vibration dosage information for display on display unit 110. In some examples, microcontroller 104 may output a current measure of a current vibration level for display on display unit 110. In some examples, microcontroller 104 may output, and update, on display unit 110 an indication of a remaining vibration dose allowed for a worker and/or a remaining usage time permitted to the worker given the worker's previous and ongoing vibration dose. In some examples, microcontroller 104 may output, for display on display unit 110 or in another manner, an indication (e.g., on display unit 110) that a worker should switch to a finer grit abrasive to prolong work time given the worker's vibration dose.

In some examples, microcontroller 104 may use CAP communication unit 115 to write data to CAP 120. For example, microcontroller 104 may use CAP communication unit 115 to write time information (e.g., tool run time, operator run time, CAP run time) to CAP 120. For instance, CAP communication unit 115 may be configured to send data to CAP 120 based on one or more measurements from one or more of sensors 114. For instance, in some examples, sensors 114 may include a vibration sensor and the one or more measurements may include a measurement of a vibration level of abrading tool 100.

Furthermore, in some examples, microcontroller 104 may use CAP communication unit 115 to write an RPM history level to CAP 120 (e.g., a maximum experienced RPM value). Microcontroller 104 may determine the RPM level based on data from a tachometer in sensors 114. In other words, sensors 114 may include a tachometer and the one or more measurements may include a measurement of an RPM level of CAP 120. In this example, CAP 120 may be damaged if CAP 120 is used at an RPM greater than a maximum allowed RPM limit. Accordingly, in this example, microcontroller 104 may use CAP communication unit 115 to write data to CAP 120 indicating that CAP 120 has been used at RPMs greater than the maximum allowed RPM limit, and may also indicate how long CAP 120 was used at RPMs greater than the maximum allowed RPM limit. In this example, an abrading tool or other device may read data indicating that CAP 120 has been used at an RPM greater than the maximum allowed RPM limit and may generate a warning when a worker subsequently tries to use CAP 120, even after CAP 120 has been detached from abrading tool 100 and reattached to abrading tool 100 or another abrading tool.

Furthermore, CAP 120 may be damaged if dropped or otherwise subjected to excessive acceleration/deceleration. In many instances, this damage is not visible, but could result in pieces flying off CAP 120. Accordingly, microcontroller 104 may receive data on acceleration from one or more accelerometers in sensors 114. In response to determining that the acceleration data is representative of abrading tool 100 being dropped while CAP 120 is attached to abrading tool 100, microcontroller 104 may use CAP communication unit 115 to write data to CAP 120 indicating that CAP 120 has been dropped. In this example, an abrading tool or other device may generate a warning when a worker subsequently tries to use CAP 120, even after CAP 120 has been detached from abrading tool 100 and reattached to abrading tool 100 or another abrading tool. In this example, an abrading tool or other device may read data indicating that CAP 120 has been dropped and generate a warning when a worker subsequently tries to use CAP 120, even after CAP 120 has been detached from abrading tool 100 and reattached to abrading tool 100 or another abrading tool.

In another example, microcontroller 104 may be configured to determine, based on data regarding CAP 120, that CAP 120 has been damaged and cause abrading tool 100 to perform an action in response to determining the received data indicates CAP 120 has been damaged. For instance, the data regarding CAP 120 may indicate whether CAP 120 is potentially damaged (e.g., CAP 120 has been dropped, CAP 120 has been used at an RPM level about the maximum RPM level of CAP 120, a temperature of CAP 120 has risen above a particular temperature threshold or fallen below a particular temperature threshold, etc.). In this example, microcontroller 104 may generate a warning and/or prevent drive component 124 of CAP 120 from moving CAP 120 in response to determining that CAP 120 is potentially damaged. Thus, in one example, the data regarding CAP 120 may indicate whether CAP 120 has been damaged by operating the consumable abrasive product at a RPM level greater than a maximum RPM level of CAP 120. In some examples, the data regarding CAP 120 may indicate whether CAP 120 has been damaged by CAP 120 being used at a temperature greater than a maximum temperature. In another example, the data regarding CAP 120 may indicate how time CAP 120 has been used and a threshold time (e.g., a maximum safe usage time, a typical expected lifespan, etc.). In this example, microcontroller 104 may perform an action (e.g., output warning, prevent movement of CAP 120) in response to determining that the amount of time CAP 120 has been used exceeds the threshold time.

In another example, the received data regarding CAP 120 may indicate that CAP 120 is cracked. In some instances, CAP communication unit 115 receives the indication that CAP 120 is cracked directly from CAP 120. In other instances, external communication unit 116 receives the indication the CAP 120 is cracked. In this example, microcontroller 104 may perform an action in response to receiving an indication that CAP 120 is cracked. For instance, microcontroller 104 may cause abrading tool 100 to generate a warning or microcontroller 104 may cause drive component 124 not to move CAP 120 while CAP 120 is attached to abrading tool 100.

In another example, the data regarding CAP 120 may include product authentication data. In this example, microcontroller 104 may use the product authentication data to determine whether CAP 120 is authorized for use with abrading tool 100. For instance, CAP 120 may be unauthorized for use with abrading tool 100 if CAP 120 is subject to a manufacturer recall, is counterfeit, is registered as stolen, is improperly imported, or is otherwise subject to a condition where CAP 120 should not be used with abrading tool 100. In response to determining CAP 120 is not authorized for use with abrading tool 100, microcontroller 104 may output a warning and/or may prevent use of CAP 120 with abrading tool 100.

In some examples, microcontroller 104 may control how or whether a worker uses abrading tool 100 based on data regarding CAP 120 (e.g., data received from CAP 120, data received from computing system 4 or another device regarding CAP 120, etc.) and/or data regarding a user of abrading tool 100. For example, the data regarding CAP 120 may include a maximum RPM level of CAP 120. In this example, microcontroller 104 may prevent abrading tool 100 from rotating CAP 120 at an RPM level greater than the maximum RPM level of CAP 120. In some examples, microcontroller 104 may prevent use of abrading tool 100 with CAP 120 based on data indicating CAP 120 is damaged. In some examples, microcontroller 104 may adjust (e.g., increase or decrease) a tool performance parameter (e.g., speed, torque, etc.) of abrading tool 100 to prolong a worker's ability to use abrading tool 100 based on a vibration dose the worker has received. For instance, microcontroller 104 may increase or decrease a RPM level to reduce vibration.

Furthermore, in some examples, particular types of PPE should be used when using abrading tool 100 with particular types of CAPs. In some such examples, microcontroller 104 may control how or whether a worker uses abrading tool 100 based on whether appropriate PPE is being used. Thus, in this example, microcontroller 104 may be configured to determine whether a particular type of PPE that is required during use of the abrading tool with CAP 120 is in use. In this example, microcontroller 104 may be configured to perform the action in response to determining that the particular type of PPE is not in use. For example, microcontroller 104 may determine that a particular size of debris shield should be used with CAP 120. In this example, in response to determining that such a debris shield is not properly attached to abrading tool 100, microcontroller 104 may prevent use of abrading tool 100 with CAP 120.

In some examples, a device (e.g., microcontroller 104, a computing device of computer system 4 (FIG. 1)) may determine, based on data regarding CAP 120 and/or data from sensors 114, that abrading tool 100 and/or CAP 120 requires human attention. For example, the device may determine that human maintenance should be performed on abrading tool 100. For example, it may be known that a particular amount of torque is required for a particular type of abrading tool to free spin a particular type of CAP 120 to a particular RPM level. In this example, torque may be determined based on electrical current. Furthermore, in this example, microcontroller 104 may determine, based on the required torque (or a rate of change of torque) being above a threshold, that abrading tool 100 is worn out or requires maintenance or attention (e.g., bearings need to be replaced, lubrication is needed, dust collector not properly engaged). In another example, the device may determine, based on data from accelerometers or other sensors, that CAP 120 is not properly attached to abrading tool 100 (e.g., by detecting an imbalance).

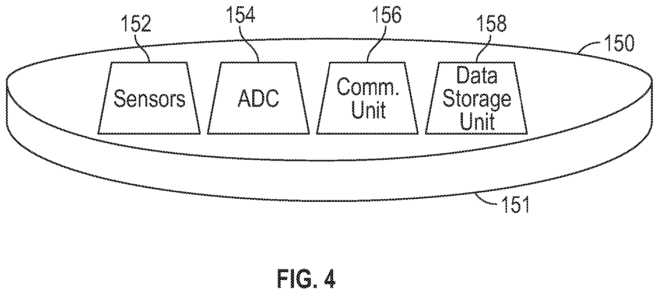

FIG. 4 is a conceptual diagram of a CAP 150, in accordance with one or more techniques of this disclosure. In the example of FIG. 4, CAP 150 is presented as a sanding disk or grinding wheel. However, similar examples may be provided with respect to other types of consumable abrasive products. CAP 150 comprises an abrading surface 151 for abrading a workpiece.

In the example of FIG. 4, CAP 150 comprises one or more sensors 152, an ADC 154, a communication unit 156, and a data storage unit 158. In other examples, CAP 150 may include more or fewer components. For instance, in some examples, sensors 152, ADC 154, and/or data storage unit 158 are not included in CAP 150. In some examples, ADC 154 is part of an RFID interface that also comprises communication unit 156, and, in some instances one or more sensors and/or data storage unit 158. Communication unit 156 may be configured to perform at least one of: sending data to one or more external devices, or receiving data from one or more external devices, such as an abrading tool to which CAP 150 is attached, a mobile device (e.g., a mobile phone), computing system 4 (FIG. 1), and so on. In some examples, communication unit 156 comprises at least one of: a RFID interface or a NFC interface. Data storage unit 158 is configured to store data.

ADC 154 is configured to convert analog measurements from one or more sensors 152 to digital data. For instance, sensors 152 may comprise a temperature sensor and ADC 154 is configured to convert a signal from the analog temperature data into digital data. Data storage unit 158 may be configured to store the digital data. In this example, the digital data may indicate whether a temperature sensed by the temperature sensor has exceeded a threshold.

In some examples, sensors 152 include an impact detection component configured to detect whether CAP 150 has been subjected to an impact with force sufficient to damage CAP 150. For example, the impact detection component may comprise a brittle electrically-conductive material that breaks when subjected to an impact having force sufficient to damage CAP 150. In this example, the impact detection component may determine that CAP 150 has been subjected to an impact with force sufficient to damage CAP 150 if an electrical current will not flow through the material with an expected resistance or impedance. In this example, data storage unit 158 may be configured to store data indicating whether CAP 150 has been subjected to an impact with force sufficient to damage CAP 150.

Furthermore, in some examples, sensors 152 may include an excessive RPM detection component configured to detect whether CAP 150 has been subjected to an RPM level exceeding a threshold sufficient to damage CAP 150. For instance, the excessive RPM detection component may comprise a brittle electrically-conductive material that breaks when subjected to a RPM level exceeding the threshold. In this example, the excessive RPM detection component may determine that CAP 150 has been subjected to a RPM level exceeding the threshold if an electrical current will not flow through the material with an expected resistance or impedance. In this example, data storage unit 158 may be configured to store data indicating whether CAP 150 has been subjected to an RPM level exceeding the threshold sufficient to damage CAP 150.

In some examples, sensors 152 include one or more wear sensors. A wear sensor may be configured to generate data indicating a wear level of CAP 150. A wear sensor may comprise a pair of electrodes and circuitry for detecting electrical resistance or impedance. Electrical resistance and/or impedance may change as CAP 150 thins with use. Hence, changes in electrical resistance and/or impedance may provide a wear level of CAP 150. Other examples of wear sensors are described elsewhere in this disclosure.

In some examples, communication unit 156 may receive various types of data and may send various types of data. For example, communication unit 156 may be configured to receive vibration data from an abrading tool (e.g., abrading tool 8, abrading tool 100). The abrading tool is detachable from CAP 150 and may provide motive power to CAP 150 during a work session. In this example, the vibration data may indicate at least one of: a duration of vibration experienced by a user of the abrading tool during the work session, a frequency of the vibration, and a force of the vibration.

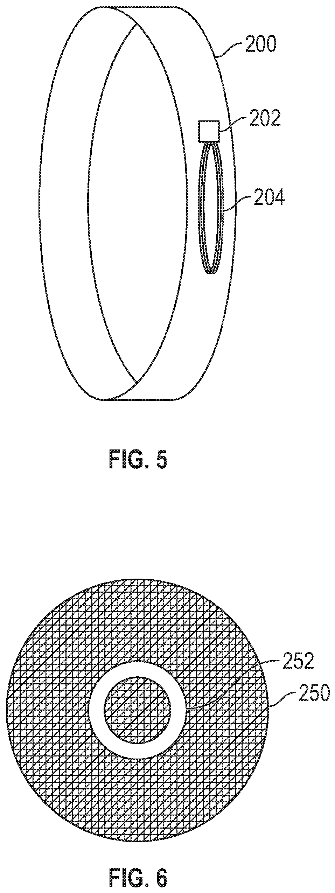

FIG. 5 is a conceptual diagram illustrating an example sanding belt 200, in accordance with one or more techniques of this disclosure. Sanding belt 200 is an example of a consumable abrasive product. In the example of FIG. 5, sanding belt 200 comprises an RFID tag 202 with an antenna 204.

FIG. 6 is a conceptual diagram illustrating an example sanding disk 250, in accordance with one or more techniques of this disclosure. Sanding disk 250 is an example of a consumable abrasive product. In the example of FIG. 6, an annular-shaped RFID communication unit 252 is affixed to a non-abrasive surface of sanding disk 250. RFID communication unit 252 may comprise an antenna, a memory, and RFID radio. As shown in the example of FIG. 6, RFID communication unit 252 may be located near a center of sanding disk 250. In some instances, RFID communication unit 252 encircles a spindle used for attaching sanding disk to an abrading tool. In some examples, RFID communication unit 252 may be positioned between an abrading layer of sanding disk 250 and an attachment layer for attaching sanding disk 250 to an abrading tool. The attachment layer may comprise an adhesive layer, a hook and loop layer, or another surface for attaching sanding disk 250 to an abrading tool.

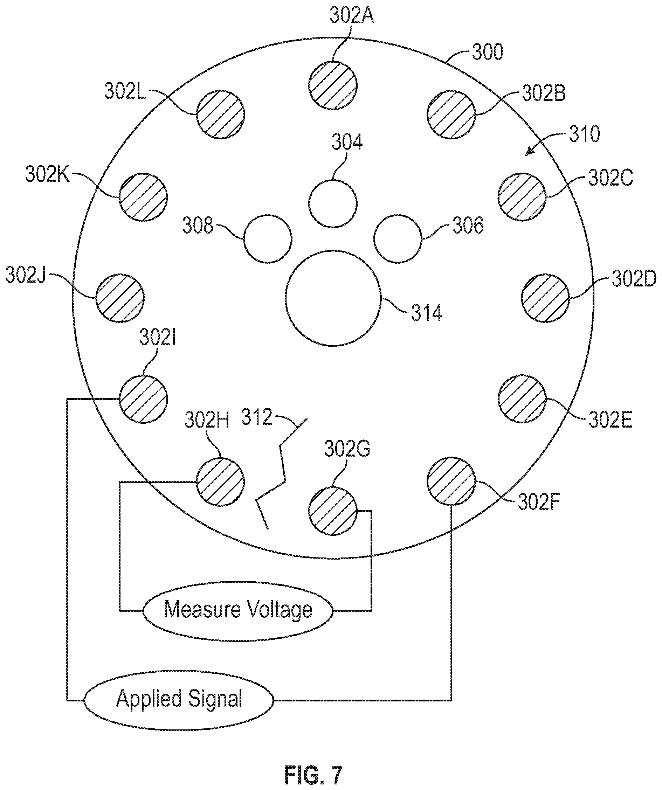

FIG. 7 is a conceptual diagram illustrating an example CAP 300 that includes electrodes 302A-302L (collectively, "electrodes 302") for detecting cracks in CAP 300, in accordance with one or more techniques of this disclosure. Electrodes 302 may form part of sensors 152 (FIG. 4). Furthermore, as shown in the example of FIG. 7, CAP 300 may include a control unit 304, a memory 306, and a communication unit 308.

Failure of a CAP may have serious consequences. For example, the surface of an expensive workpiece may be seriously damaged. In another example, a worker may be injured if the worker is not wearing proper personal protective equipment. CAP 300 may help to reduce the risks of damage or injury due to failure of CAP 300.

In the example of FIG. 7, a control unit 304 of CAP 300 may apply an electrical signal to pairs of electrodes (i.e., drive electrodes) while measuring voltage on other pairs (i.e., measurement electrodes). For instance, control unit 304 may apply an electrical signal across a first pair of electrodes in the plurality of electrodes and measure a voltage across a second pair of electrodes to generate a set of measurements. Each of electrodes 302 may serve as a drive electrode or a measurement electrode at different times. When a pair of electrodes are serving as drive electrodes, control unit 304 applies an electrical signal across the pair of electrodes. When a pair of electrodes are acting as measurement electrodes, control unit 304 uses the electrodes to measure a voltage between the two electrodes. In some examples, the measurement electrodes are the same as the drive electrodes. However, using different electrodes as drive electrodes and measurement electrodes may remove contact impedance from the measurement.

Control unit 304 may repeat the process of applying electrical signals to pairs of drive electrodes for one or more (e.g., a predetermined) number of pairs of electrodes. Control unit 304 may store the resulting measurements as a first dataset in a memory 306. Control unit 304 may comprise a microcontroller or other type of integrated circuit.

Subsequently, control unit 304 may apply an electrical signal to pairs of electrodes while measuring voltage on other pairs. For instance, control unit 304 may be configured to apply a second electrical signal across the first pair of electrodes in the plurality of electrodes and measure a voltage across the second pair of electrodes to generate a second set of measurements. Control unit 304 may repeat this process for one or more (e.g., a predetermined) number of pairs of electrodes. Control unit 304 may store the resulting measurements as a second dataset in memory 306. Control unit 304 may determine, based on a comparison of the first and second datasets, whether the abrasive disk of CAP 300 contains a crack, such as crack 312. That is, control unit 304 may be configured to compare a first set of measurements (e.g., the second data set) to a second set of measurements (e.g., the first dataset) to determine whether there is a crack in CAP 300. Communication unit 308 is configured such that, in response to control unit 304 determining there is a crack in CAP 300, communication unit 308 sends data to the one or more external devices (e.g., an abrading tool) indicating that there is a crack in CAP 300.

Cracks or other damage to materials generally appear as changes in impedance (e.g., a real or imaginary component of impedance). Example of FIG. 7 can run either at direct current (DC) or any alternative current (AC) frequency which is realistically feasible, such as 10 Hz to 100 MHz.

There is a wide range of choices for electrode placement, electrical drive signal, choice of measurement electrodes, and algorithms to compare the two datasets and determine whether there is a crack. When a crack is present, the path the electrical current takes between the drive electrodes is disturbed and the measured voltage may be different when the first and second datasets are compared.

In some examples, the first dataset may be generated not from a measurement of the CAP under test, but may be a 'global average' of many datasets from CAPs known to not contain a crack. The first dataset may also be generated from a simulation or other method. However, measuring a first dataset on each CAP may take into consideration normal manufacturing variation. Non-uniformity of the electrical properties of the CAP can be accounted for, as well as differences in the placement of electrodes.

As shown in the example of FIG. 7, electrodes 302 are placed on a top surface 310 of CAP 300. Top surface 310 may face an abrading tool and may be opposite an abrading surface of CAP 300 (not shown). Electrodes 302 may be placed in any arrangement. However, placement of electrodes 302 in a ring around an outer perimeter may be advantageous for detecting cracks. In the example of FIG. 7, CAP 300 has twelve electrodes, but more or fewer electrodes may be used in other examples. For example, the number of electrodes on CAP 300 may be 16, 24, 32, or another number.

There may be many unique combinations of drive electrode pairs, typically on the order of n*(n-1)/2, where n is the number of electrodes. However, it may not be necessary to test all pairs of electrodes. For instance, it may not be necessary to test pairs of electrodes on opposite sides of CAP 300. In some examples, pairs of electrodes separated by 3 other electrodes may be tested. For instance, in the example of FIG. 7, control unit 304 may apply an electrical signal to electrode pairs 302D and 302H, 302E and 302I, 302F and 302J, and so on. In this example, there are n such pairs for n electrodes.

The electrical signal applied between drive electrodes can be either a current or a voltage. A potential advantage of a current is that contact impedance does not have to be well controlled and the current is identical for all drive pairs. Alternatively, a voltage can be applied and the current can be measured. The measurement can then be normalized to account for different drive currents. The system can be used with either a DC or AC applied signal. Electronics may be simpler with a DC implementation but AC may have the added benefit of looking for changes in complex impedance, which cracks often show.

In some examples, electrodes 302 are manufactured on a 'sticker' which is a piece of paper or plastic with an adhesive backing. In other words, CAP 300 may comprise a sticker that comprises electrodes 302 and control unit 304, wherein the sticker adheres to a surface of CAP 300, such as a surface opposite an abrading surface of CAP 300. Locations where electrodes 302 are present may have a conductive adhesive. The measurement electronics (e.g., control unit 304) may also be on the sticker, and may be powered via connections to an abrading tool (e.g., abrading tool 8 (FIG. 1), abrading tool 100 (FIG. 3)) through a disk mount. In other words, control unit 304 may be powered through a connection to an abrading tool through a disk mount 314 of CAP 300. Communication unit 308 may send a signal to the abrading tool that a crack is present and may prevent the abrading tool from operating. In other words, in response to receiving an indication that a crack is present in CAP 300, the abrading tool will not operate with CAP 300.

In addition to electrodes 302, the applied sticker may also include an inductor for inductive coupling to another antenna in the abrading tool. Thus, power may be provided directly to the sicker from the abrading tool without the need for a physical, wired connection. Additionally, communication may be provided directly from the sticker to the abrading tool without the need for a physical (wired) connection. For instance, communication unit 308 may comprise an RFID interface and control unit 304 may be powered through the RFID interface. On a fast-moving abrading tool, not using a physical connection may be advantageous. In such examples, determination of a crack may take place as soon as CAP 300 starts moving.

There may be many ways to detect a crack in CAP 300 based on the first and second measurements. One way is for control unit 304 to determine a difference between the first and second measurements for a given drive and measurement electrode pair. An increase in resistance may indicate a crack. Another way is to determine a ratio of the first and second measurements. Control unit 304 may determine that a crack is present by finding a statistical outlier among all the measurement ratios.

In some examples, a device separate from CAP 300 may detect the presence of a crack in CAP 300. For example, communication unit 308 may communicate the measurements to another device, such as abrading tool (e.g., abrading tool 8, abrading tool 100), a mobile device (e.g., mobile device 20 (FIG. 1)), a computing system (e.g., computing system 4), or another device or system. In this example, the other device may use the measurements to determine whether there is a crack in CAP 300.

Electrodes 302 may also be used for determining electrical resistance and/or impedance to determine a wear level of CAP 300, as described elsewhere in this disclosure.

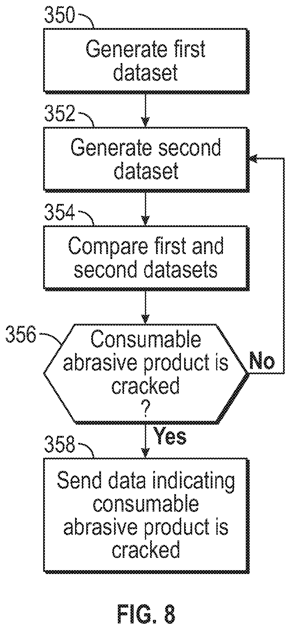

FIG. 8 is a flowchart illustrating an example operation that detects cracks in CAP 300, in accordance with one or more techniques of this disclosure. In the example of FIG. 8, control unit 304 may generate a first dataset (350). In some examples, control unit 304 generates the first dataset by applying electrical signals to pairs of electrodes 302 while measuring voltage with pairs of electrodes 302. Subsequently, control unit 304 may generate a second dataset (352). In some examples, control unit 304 generates the second dataset by applying electrical signals to pairs of electrodes 302 while measuring voltage with pairs of electrodes 302. In some examples, control unit 304 may generate a new second dataset each time an abrading tool starts using CAP 300.

Control unit 304 may compare the first and second datasets to determine whether there are any cracks in CAP 300 (354). In response to determining that there is a crack in CAP 300 ("YES" branch of 356), control unit 304 may configure communication unit 308 to send data to one or more external devices indicating that CAP 300 is cracked (358). On the other hand, when there is no crack in CAP 300 ("NO" branch of 356), control unit 304 may generate a new second dataset when CAP 300 is next used (352).

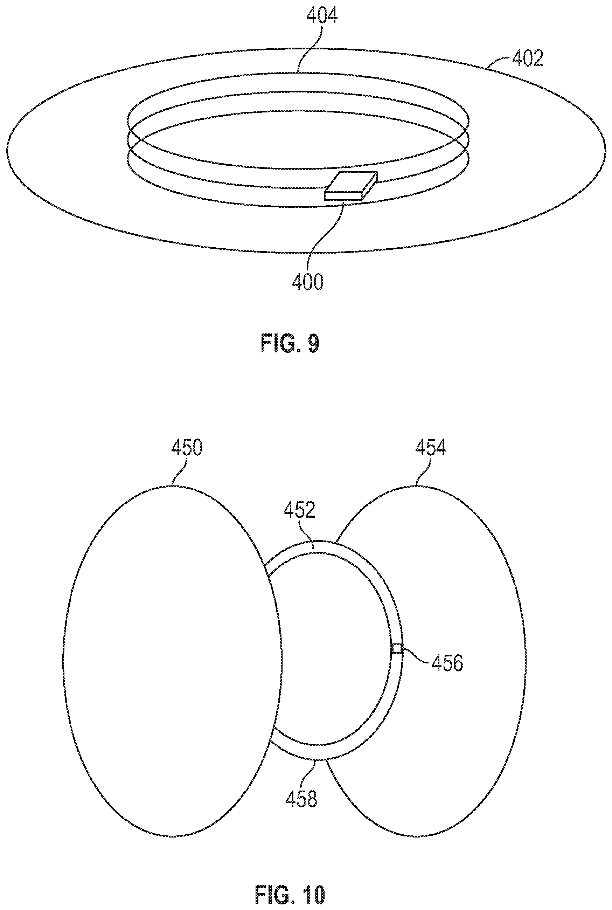

FIG. 9 is a conceptual diagram illustrating a simplified schematic of an RFID tag 400 installed in a CAP 402, in accordance with one or more techniques of this disclosure. In the example of FIG. 9, CAP 402 comprises an abrasive disk, but similar principles may apply for other types of CAPs. In the example of FIG. 9, the RFID tag may be an NXP NT3H1101W0FHK NTAG I2C - Energy harvesting NFC Forum Type 2 Tag with field detection pin and I2C interface with 1k bytes memory as the active electronic element, as described in (http://www.nxp.com/documents/data_sheet/NT3H1101_1201.pdf) and manufactured by NXP (NXP Semiconductors N.V., Eindhoven, Netherlands).

Furthermore, in the example of FIG. 9, an antenna 404 comprises one or more loops. For instance, antenna 404 may comprise or consist of a single 2.7" diameter loop antenna, 0.2" width, of 1/8th oz copper on a 0.008" thick DURAVER^{®}-E-Cu quality 104 ML printed circuit board material (Isola Laminate Systems Corp., 230 North Front Street, LaCrosse, WI 54601 USA). A parallel 400 pF capacitor tunes a resonance frequency of the antenna to about 13.56 Mhz. When this RFID tag assembly is embedded in the 5" diameter abrasive "sandwich," a printed circuit board (PCB) of the RFID tag flexes and bends with CAP 402 during placement and removal of CAP 402 from an abrading tool, such as a sander.

FIG. 10 illustrates disassembled components of a CAP, in accordance with one or more techniques of this disclosure. As illustrated in the example of FIG. 10, the CAP may comprise an abrasive layer 450, an RFID member 452, and a tool attachment layer 454. Abrasive layer 450 may comprise grit for abrading a workpiece. For instance, abrasive layer 450 may comprise a 3M^{™} Stikit^{™} paper disk 236U abrasive disk. In some examples, abrasive layer 450 may comprise a Cubitron ^{™} II abrasive. Tool attachment layer 454 may comprise one side of a hook- and-loop attachment system or other system for attaching the CAP to an abrading tool. For instance, tool attachment layer 454 may comprise a 3M^{™} Stikit^{™} Abrasive layer 450. Abrasive layer 450 may be coupled to tool attachment layer 454, with RFID member 452 sandwiched between abrasive layer 450 and tool attachment layer 454. RFID member 452 may comprise an RFID integrated circuit and support electronics 456 and an antenna 458. In some examples, antenna 458 comprises or consists of a single copper trace.

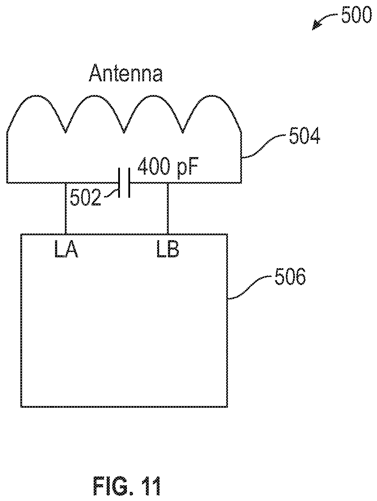

FIG. 11 illustrates a simplified schematic of an example RFID tag 500, in accordance with one or more techniques of this disclosure. Particularly, in the example of FIG. 11, RFID tag 500 comprises a 400 pF capacitor 502 that tunes a resonant frequency of an antenna/capacitor 504 to a given frequency, such as 13.56 Mhz. RFID tag 500 may also comprise circuitry 506, such as an NXP NT3H1101 chip.

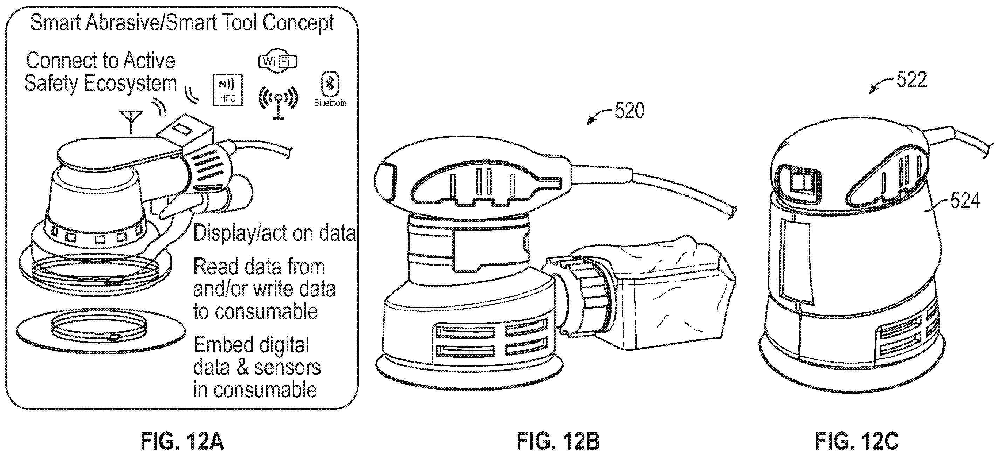

FIG. 12A illustrates an example orbital sander that wirelessly powers an RFID on a CAP and reads data from the CAP, processes data from the CAP, and may wirelessly communicate on an external network, in accordance with one or more techniques of this disclosure. FIG. 12B illustrates an example orbital sander 520. In some examples, orbital sander 520 is not equipped to read data from or write data to a communication-equipped CAP. Furthermore, orbital sander 520 is not equipped for communication with an external network.

FIG. 12C illustrates an example orbital sander 522 in accordance with a technique of this disclosure. Orbital sander 522 is similar to orbital sander 520 of FIG. 12B. In some examples, all components of orbital sander 520 are the same as those of orbital sander 522, except orbital sander 522 additionally includes an enhancement component 524. Orbital sander 522 can be manufactured by adding enhancement component 524 to orbital sander 520. Adding enhancement component 524 to orbital sander 520 may comprise attaching enhancement component 524 to a power supply of orbital sander 520 and, in some examples, positioning one or more antennas.

In the example of FIG. 12C, enhancement component 524 takes the form of a band wrapping around a midsection of orbital sander 522. The band may comprise a non-slip material, such as a nonslip rubber, for comfortable and safe operation by a user. In some examples, enhancement component 524 is 3D printed. In other examples, enhancement component 524 may be attached to orbital sander 522 in other ways, such as being clipped onto, attached with adhesive, or other attachment mechanism.

Enhancement component 524 includes components for communicating with a communication-equipped CAP. In some examples, enhancement component 524 includes components for communicating with an external network or device, such as mobile device 20 or computing system 4. Additionally, as shown in the example of FIG. 12C, enhancement component 524 may include a display screen for displaying information. The display screen may display information as described in examples elsewhere in this disclosure. In some examples, enhancement component 524 may also include one or more sensors, such as the sensors described elsewhere in this disclosure. Furthermore, in some examples, enhancement component 524 comprises a power supply for electronics and communication equipment of enhancement component 524.

Thus, in the example of FIG. 12C, enhancement component 524 may form part of an abrading tool enhancement kit. The abrading tool enhancement kit may be used to modify an abrading tool for communication with one or more external devices. The abrading tool enhancement kit may comprise a housing shaped for attachment to an abrading tool, such as abrading tool 522. For instance, the housing may be in the form of a band that fits around a portion of a housing of the abrading tool. A communication unit may be embedded in the housing of the abrading tool enhancement kit. The communication unit may be configured to communicate with from one or more external devices, such as a consumable abrasive product, mobile device (e.g., mobile device 20), computing system (e.g., computing system 4), or other type of device. Furthermore, in some examples, the abrading tool enhancement kit may comprise a display screen embedded in the housing and control circuitry, such as a microcontroller, embedded in the housing. The control circuitry is configured to cause the display screen to display information based on data received from the one or more external devices. Examples of displaying information based on data received from one or more external devices are described elsewhere in this disclosure. In some examples, the abrading tool enhancement kit comprises wires for receiving power from a power supply of the abrading tool. In some examples, the abrading tool enhancement kit includes one or more sensors, such as those described elsewhere in this disclosure. The communication unit may be configured to communicate data based on measurements from the one or more sensors to the one or more external devices.

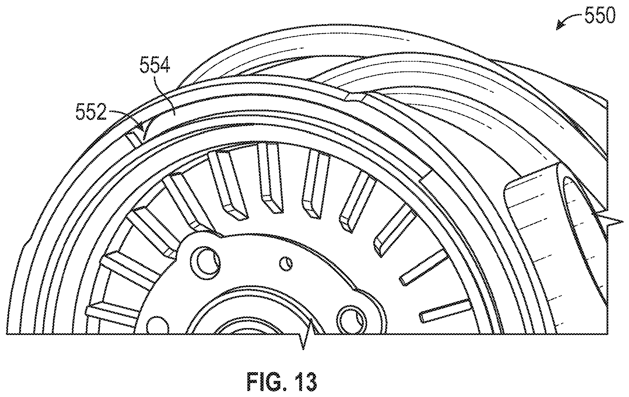

FIG. 13 is a bottom view of an orbital sander 550 with a base removed, in accordance with one or more techniques of this disclosure. As shown in the example of FIG. 13, an antenna 552 is disposed within a circular slot 554. Antenna 552 may be used for communication with a communication-equipped CAP, such as a sanding disk or grinding wheel.

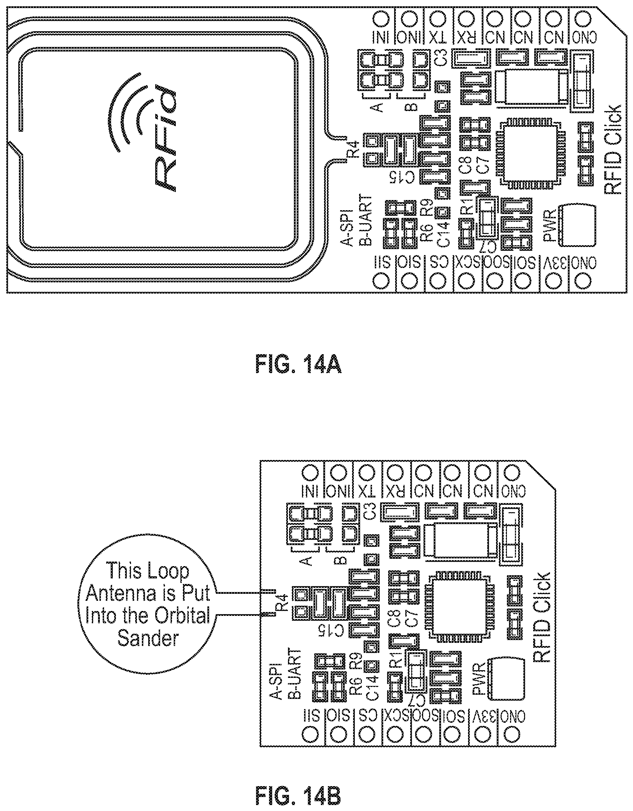

FIG. 14A illustrates an example RFID reader with a removable antenna. In some examples, a communication-equipped abrading tool communicates with an RFID tag using a MikroElektronika "RFID Click" accessory board (MikroElektronika D.O.O., Batajnički drum 23, 11186 Zemun, Belgrade, Address Code: 201063, Europe). The "RFID Click" board may communicate with the RFID tag using the ISO14443 Type A specification. To read data from the RFID tag, the "RFID Click" board wirelessly sends a request to the RFID tag instructing the RFID tag to transmit the data.

The "RFID Click" accessory board has two main ICs:
CR95HF 13.56 Mhz contactless transceiver IC
PIC16F468A microcontroller unit (MCU)

In the example of FIG. 14A, the CR95HF 13.56 Mhz contactless transceiver IC, manufactured by STmicroelectonics, 2755 Great America Way, 3rd Floor, Santa Clara, 95054, CA, United States of America, receives RF input/output from the antenna, and communicates with the MCU. The PIC16F468A MCU controls the communications between the transceiver and display. In this example, communication between the transceiver and MCU may be over an SPI (serial peripheral interface) bus. The display may be an LCD character display (NHD-C0215AZ-FN-GBW-ND).

In some examples, the "RFID Click" board, the rectangular antenna of the CR95HF transceiver may be removed, as shown in FIG. 14B, and a single loop wire antenna may be added and integrated into the power tool housing (e.g., as shown in the example of FIG. 13). Thus, FIG. 14B illustrates an example RFID tag with an original antenna removed and a loop antenna added, in accordance with one or more techniques of this disclosure. In some examples, the removed antenna of the "RFID Click" board may be replaced with an antenna that is tuned with a capacitor and placed into an abrading tool, such as an orbital sander.

In some examples, an application of a mobile device (such as mobile device 20 of FIG. 1) and an "RFID Click" board use the two different communication protocols to communicate with an RFID tag, both for writing to and reading from a tag. For instance, the "RFID Click" board may communicate with an RFID tag using the ISO14443 Type A specification and the application of the mobile device may communicate with the RFID tag using the NFC Forum Type 2 specification.

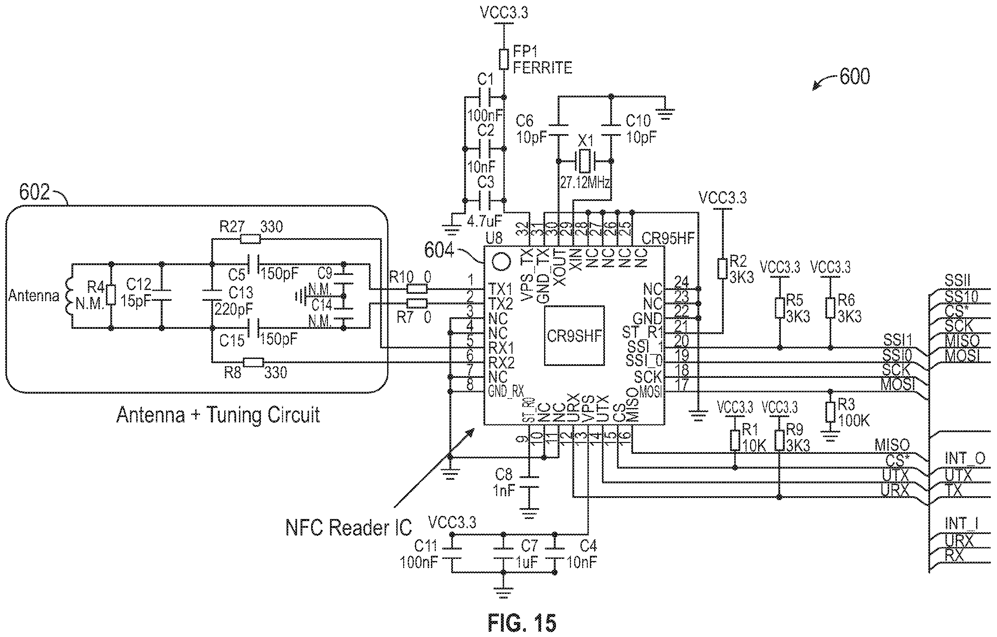

FIG. 15 is an example circuit diagram of a reader component 600 of a communication-equipped abrading tool, in accordance with one or more techniques of this disclosure. In the example of FIG. 15, reader component 600 includes an antenna and tuning circuit 602, a CR95HR transceiver 604 and support circuitry. FIG. 15 also shows bus assignment of signals to a PIC microcontroller unit and display (not shown).

FIGS. 16A and 16B are block diagrams of electronics of a communication-equipped abrading tool, in accordance with one or more techniques of this disclosure. A display may be plugged into the LCD 1 connector at the left of FIG. 16A. A PIC microcontroller is shown in the right of FIG. 16A. A "RFID Click" board is shown in FIG. 16B with interconnections. FIG. 16A shows a power conversion circuit in the lower left. The example of FIGS. 16A and 16B does not show an antenna or matching network.

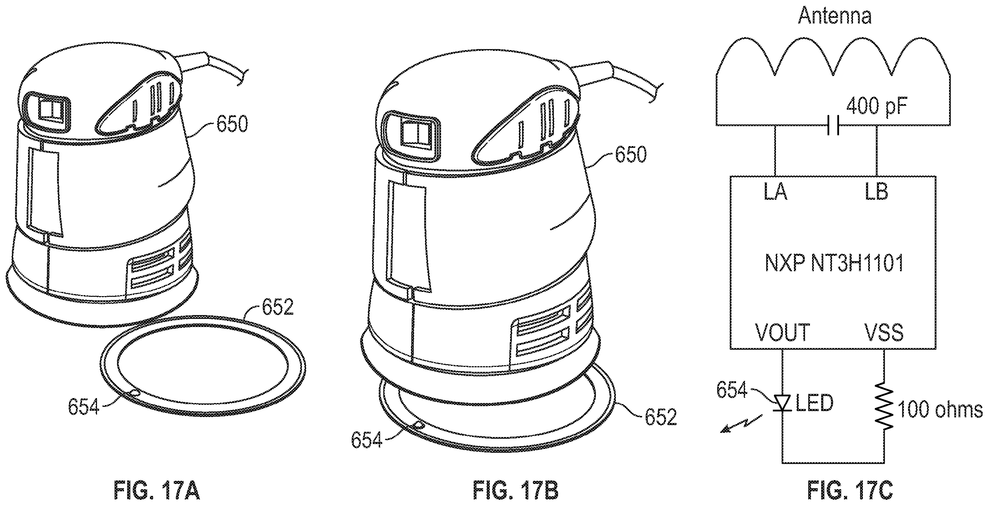

FIG. 17A shows a communication-equipped abrading tool 650 and RFID component 652, in accordance with one or more techniques of this disclosure. RFID component 652 may be integrated into a CAP. When RFID component 652 is sufficiently close to abrading tool 650, RFID component 652 may wirelessly receive power from abrading tool 650. When RFID component 652 is receiving power from abrading tool 650, a lamp 654, such as a light emitting diode (LED) may illuminate to indicate that RFID component 652 is receiving power wirelessly from abrading tool 650. More generally, a CAP may comprise a lamp that illuminates when the consumable abrasive product is wirelessly receiving energy from one of the external devices. FIG. 17B shows an example of abrading tool 650 and RFID component 652 with lamp 654 illuminated, in accordance with one or more techniques of this disclosure. FIG. 17C is an example simplified schematic of RFID component 652 with lamp 654, in accordance with one or more techniques of this disclosure.

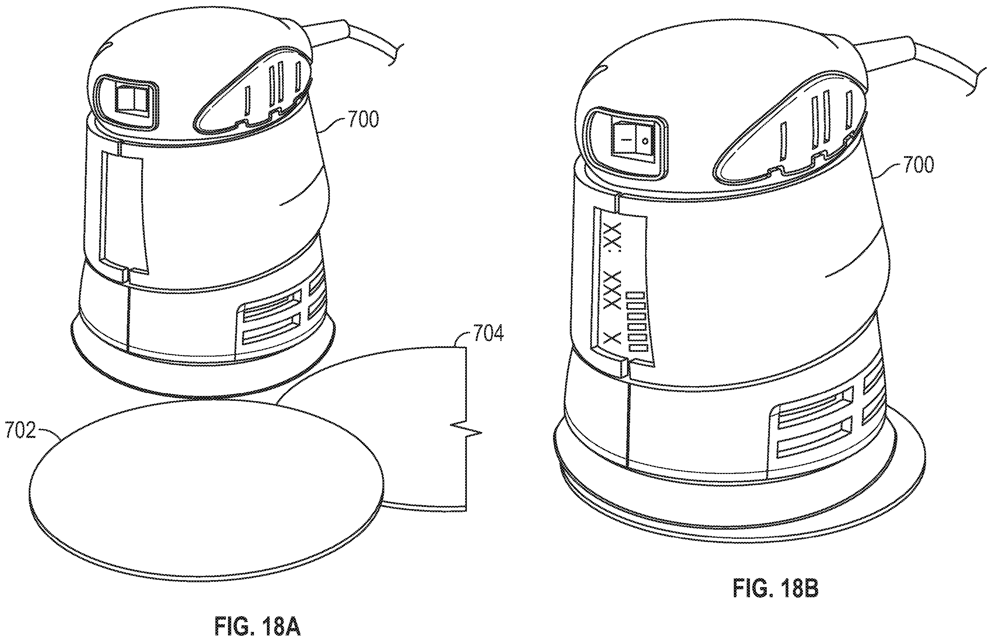

FIG. 18A illustrates an example communication-equipped abrading tool 700 and sanding disks 702, 704, in accordance with one or more techniques of this disclosure. Because no abrasive is attached to abrading tool 700 in FIG. 18A, a display of abrading tool 700 indicates "ATTACH ABRASIVE." FIG. 18B illustrates an example abrading tool 700 with sanding disk 704 attached, in accordance with one or more techniques of this disclosure. With sanding disk 704 attached, a display of abrading tool 700 indicates an RPM level and displays the RPM level as a bar graph. Abrading tool 700 may read the RPM level from sanding risk 704.

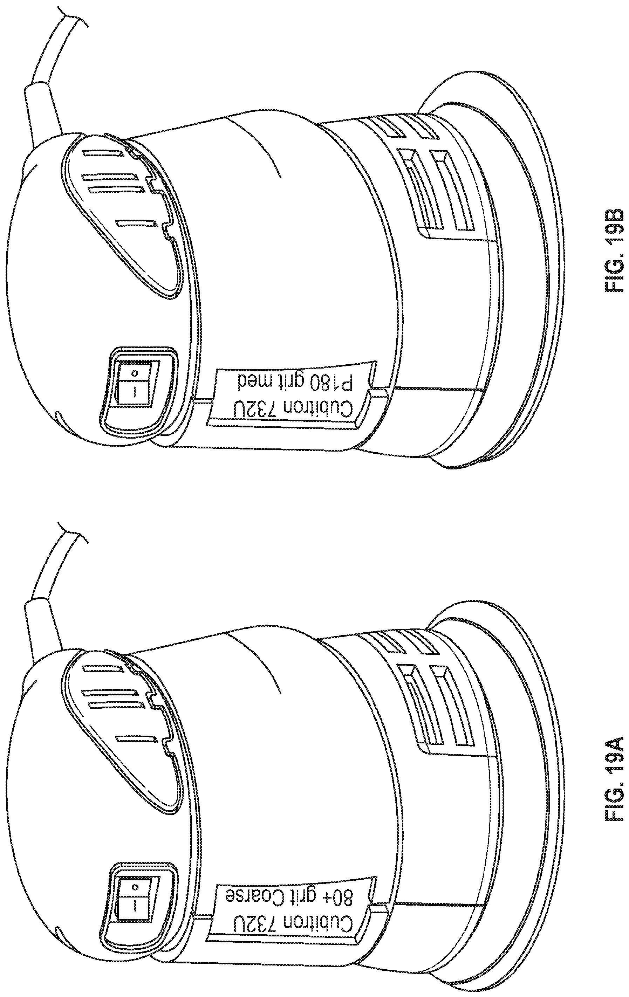

FIG. 19A illustrates an example communication-equipped abrading tool with a first CAP attached, in accordance with one or more techniques of this disclosure. FIG. 19B illustrates the communication-equipped abrading tool of FIG. 19B with a second CAP attached, in accordance with one or more techniques of this disclosure. As illustrated in FIG. 19A and FIG. 19B, information about the different CAPs are displayed on a display screen of the communication-equipped abrading tool. For instance, in FIG. 19A, the display screen indicates "Cubitron 732U 80+ grit coarse" and, in FIG. 19B, the display screen indicates "Cubitron 236U P180 grit med." In this way, the data displayed by the display screen regarding a CAP may identify a type of the CAP.

In some examples, more than one RFID tag or sensor is embedded in a communication-equipped CAP and RFID antennas may not be coaxial with an antenna of a reader. This scenario is possible if there are multiple sensors embedded in the communication-equipped CAP, such as a temperature, wear or pressure sensor and these are not in one single RFID chip. For instance, temperature sensors, and potentially simple ohmmeters are now often integrated into an RFID chip and share the same antenna. However, other sensors are not currently integrated into an RFID chip.

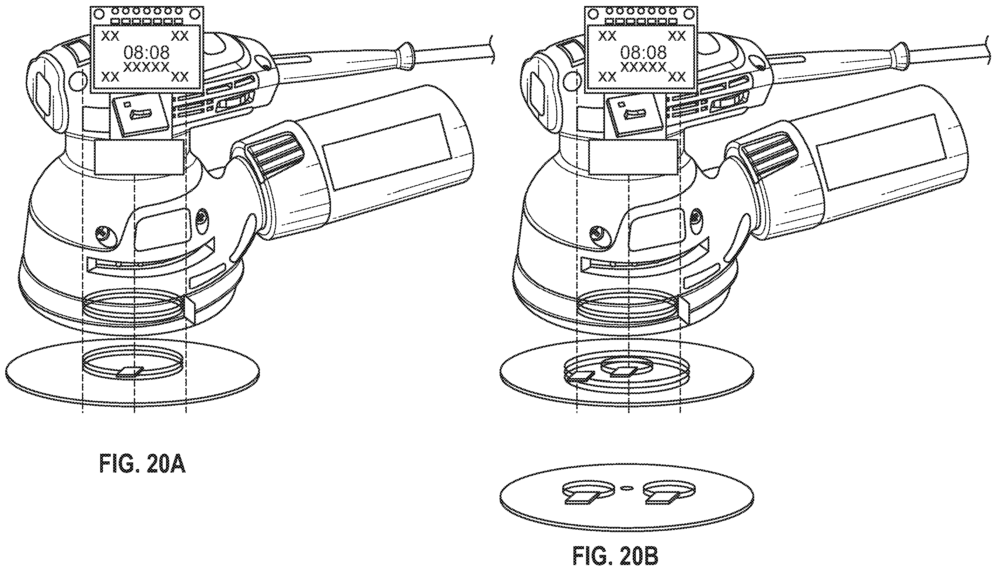

FIG. 20A illustrates an example communication-equipped CAP and a communication-equipped abrading tool, in accordance with one or more techniques of this disclosure. FIG. 20B illustrates an example communication-equipped CAP and a communication-equipped abrading tool, in accordance with one or more techniques of this disclosure. In the example of FIG. 20B, multiple antennas and sensors are embedded in the CAP. For instance, as shown in FIG. 20B, the CAP has two antennas coaxial with a read/write antenna in the abrading tool, and two antennas non-coaxial with the read/write antenna. Thus, a CAP may comprise two communication units, each having separate antennas.

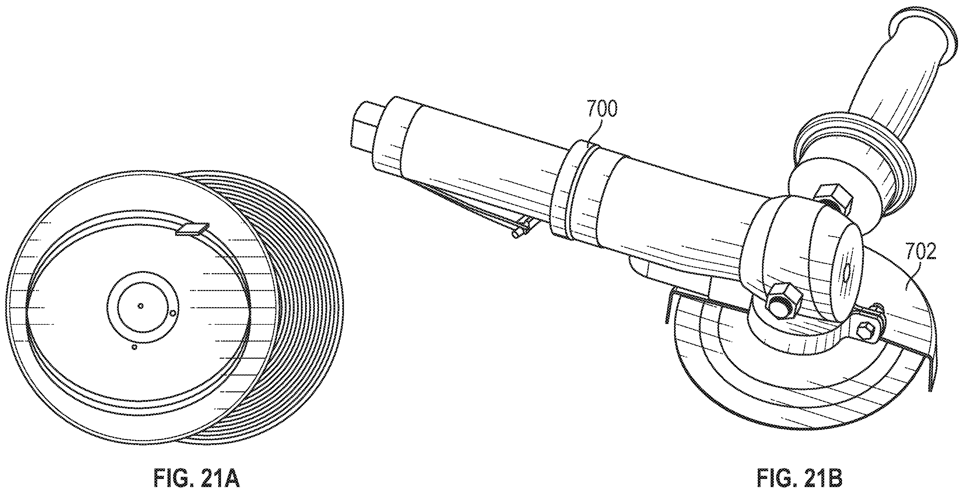

FIG. 21A illustrates an example grinding wheel with an RFID tag, in accordance with one or more techniques of this disclosure. FIG. 21B illustrates an example grinder, such as a 3M ^{™} grinder 28824, 1.5 HP, in accordance with one or more techniques of this disclosure. In the example of FIG. 21B, an RFID reader may be integrated into a shield 702 of grinder 700. Thus, the abrading tool comprises a shield and an antenna of a communication unit is located within the shield.

A random orbital sander permits coaxial alignment reader and appropriately positioned RFID tag antennas, or at least maintaining of RFID tag antennas within the electromagnetic field of the smart power tool reader. This is also true with many other applications, including, floor buffer/sanders, reciprocating sanders, and other tools. Although not rotation, the motion of the reciprocating sander does not remove the reader electromagnetic field from a properly placed RFID tag. Belt type sanders may not permit RFID tags to be under constant power from a reader. Rather, the RFID tag repeatedly passes into and out of the reader electromagnetic field. These sanders move the belt around at least two pulleys over which the belt is mounted.

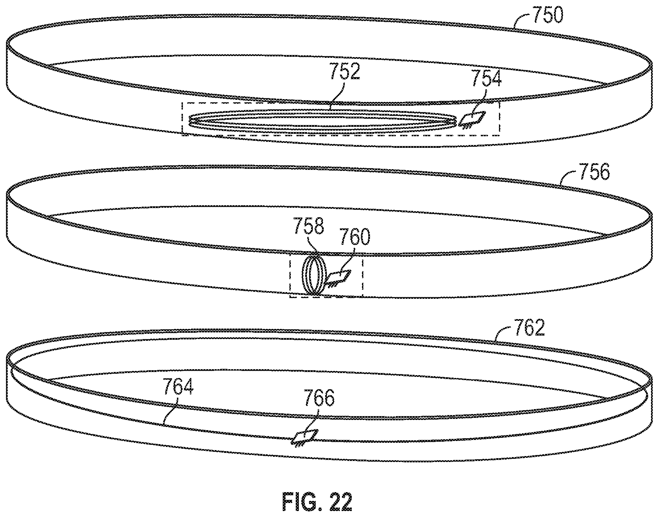

FIG. 22 illustrates example communication-equipped abrasives in belt form, in accordance with one or more techniques of this disclosure. Particularly, in belt 750, major axes of an antenna 752 of an RFID tag 754 of belt 750 are aligned. In belt 756, a major axis of an antenna 758 of an RFID tag 760 of belt 756 are at right angles. In belt 762, an antenna 764 of an RFID tag 766 of belt 762 runs 360 degrees around belt 762.

In some examples, a reader of a file sander is disposed in an arm of the file sander with substantially the same electronics and software as used in a random orbital sander, as described elsewhere in this disclosure. The electromagnetic field of the reader is normal to the antenna of the tag. The orientation of antenna 764 may require a reader antenna to be oriented at a right angle to an arm of a file sander. Thus, an antenna of a communication unit of the file sander may be located in an arm of the file sander.

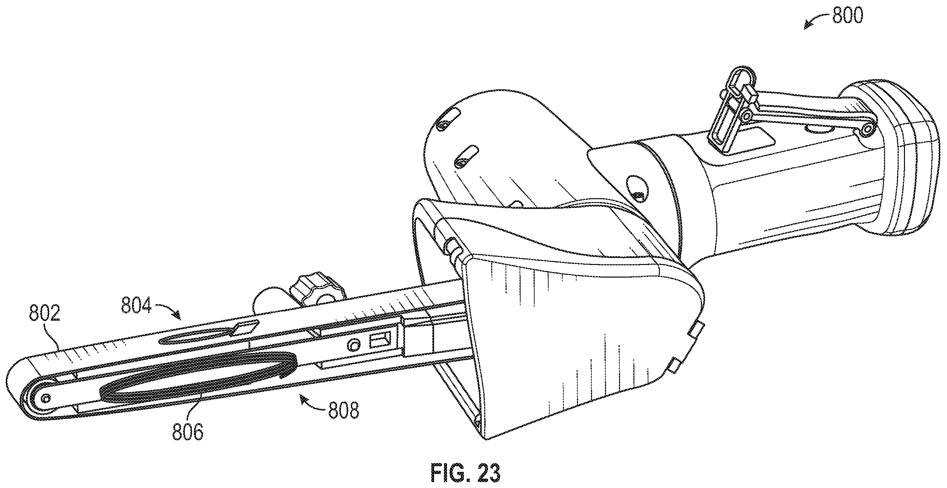

FIG. 23 illustrates an example file sander 800, in accordance with one or more techniques of this disclosure. In the example of FIG. 23, a communication-equipped abrasive 802 is mounted on file sander 800. An RFID tag and antenna 804 is included in abrasive 802. An RFID reader 806 is included in an arm 808 of file sander 800.

In some instances, discussion above with respect to RFID may apply to other communications technologies, such as NFC.

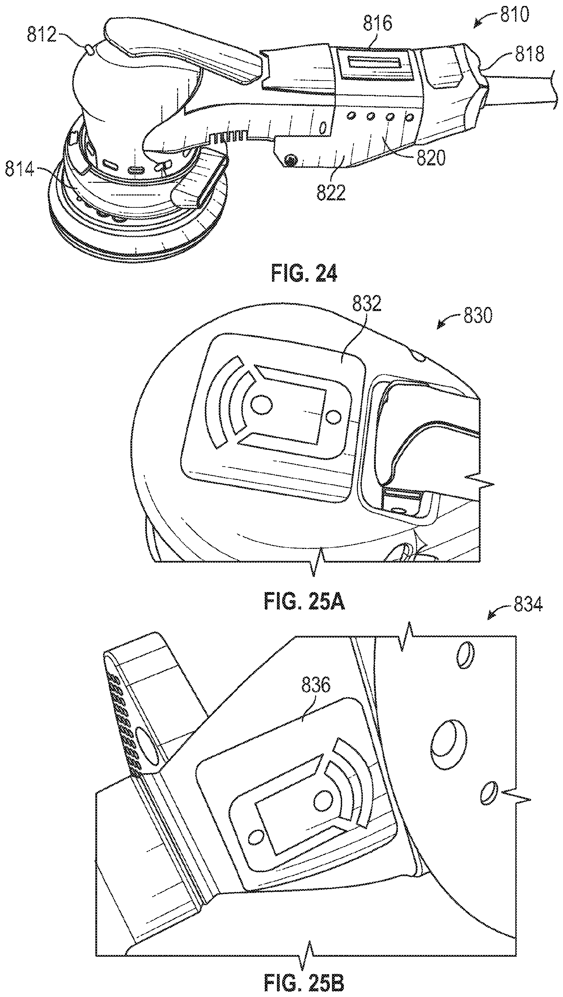

FIG. 24 illustrates an example random orbital buffer 810, in accordance with one or more techniques of this disclosure. In the example of FIG. 24, a communication-equipped abrasive is mounted on buffer 810. Buffer 810 includes an RFID antenna near the abrasive mount. Buffer 810 includes a warning light 812 on a top surface of buffer 810. Buffer 810 include an extension housing 822 that is configured with several input and output features, including a backlit display 816, a USB port 818, and input buttons 820.

FIGS. 25A and 25B illustrate an example random orbital buffer 830 and an example random orbital sander 834, respectively, in accordance with one or more techniques of this disclosure. In the example of FIG. 25A, a tool tag 832 is on a top surface of random orbital buffer 830, while in the example of FIG. 25B, a tool tag 836 is on a bottom surface of random orbital sander 834.

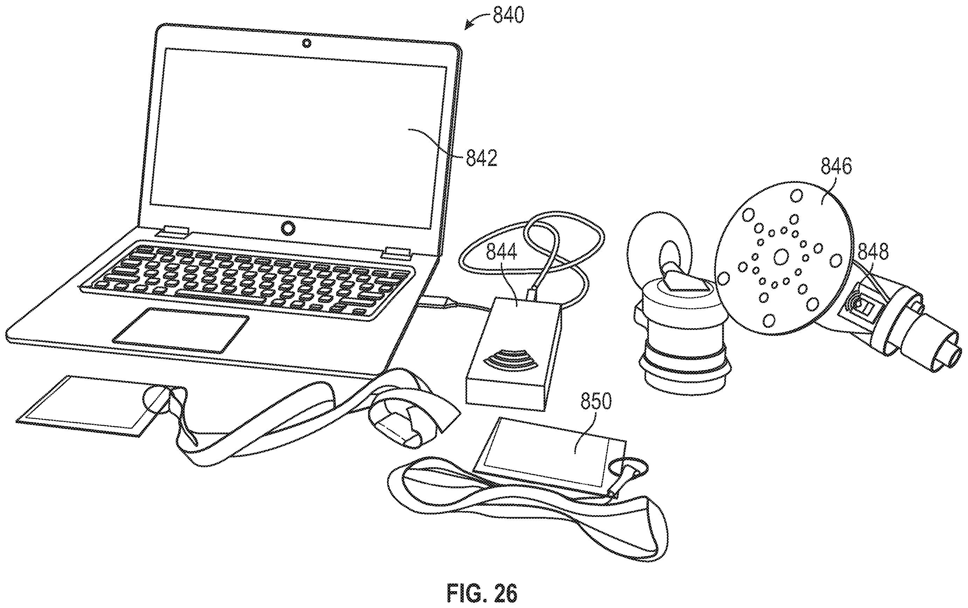

FIG. 26 illustrates an inventory tracking system 840, in accordance with one or more techniques of this disclosure. In the example of FIG. 26, inventory tracking system 840 includes a computing device 842 (e.g., corresponding to computing device 4 of FIG. 1), an NFC reader 844 (e.g., corresponding to computing device 4 of FIG. 1) communicatively coupled to computing device 842, a sanding disc 846 (e.g., corresponding to CAP 10 of FIG. 1) coupled to an orbital sander 848 (e.g., corresponding to abrading tool 8 of FIG. 1), and a badge 850 (e.g., corresponding to user ID 22 of FIG. 1). Each of the sanding disc 846, the orbital sander 848, and the badge 850 may include an NFC tag capable of communicating with NFC reader 844.

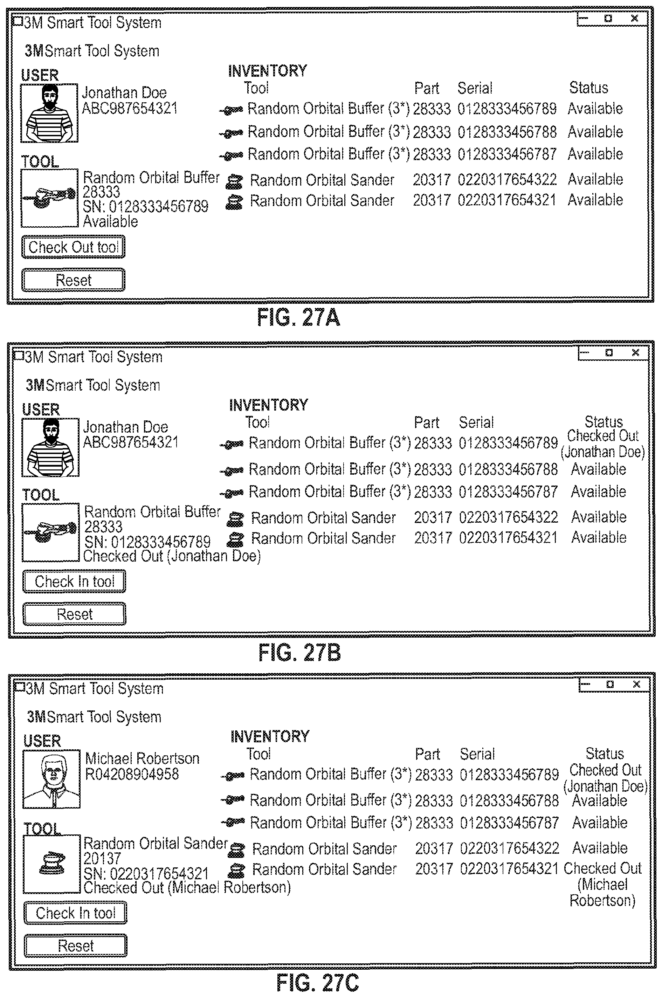

FIGS. 27A-27C are example pictorial representations of graphical user interfaces (GUIs) of a tool inventory, in accordance with one or more techniques of this disclosure. FIG. 27A is a pictorial representation of a GUI of the tool inventory before check-out of a first tool, a random orbital buffer, by a first user, Jonathan Doe. In the example of FIG. 27A, a tool tag of the random orbital buffer and a tag of a user ID of Jonathan Doe have been scanned into a tag reader and displayed by a computing device. FIG. 27B is a pictorial representation of a GUI of the tool inventory after check-out of the random orbital buffer by Jonathan Doe. In the example of FIG. 27B, a "Check out tool" button has been activated that pairs the random orbital buffer with Jonathan Doe. The pairing data is displayed under "status" in the GUI. FIG. 27C is a pictorial representation of a GUI of the tool inventory after check-out of a random orbital sander by Michael Robertson. In the example of FIG. 27C, a tool tag of the random orbital sander and a tag of a user ID of Michael Robertson have been scanned by the tag reader and displayed by the computing device. The "Check out tool" button has been activated that pairs the random orbital sander with Michael Robertson, and the pairing data is displayed under "status" in the GUI.

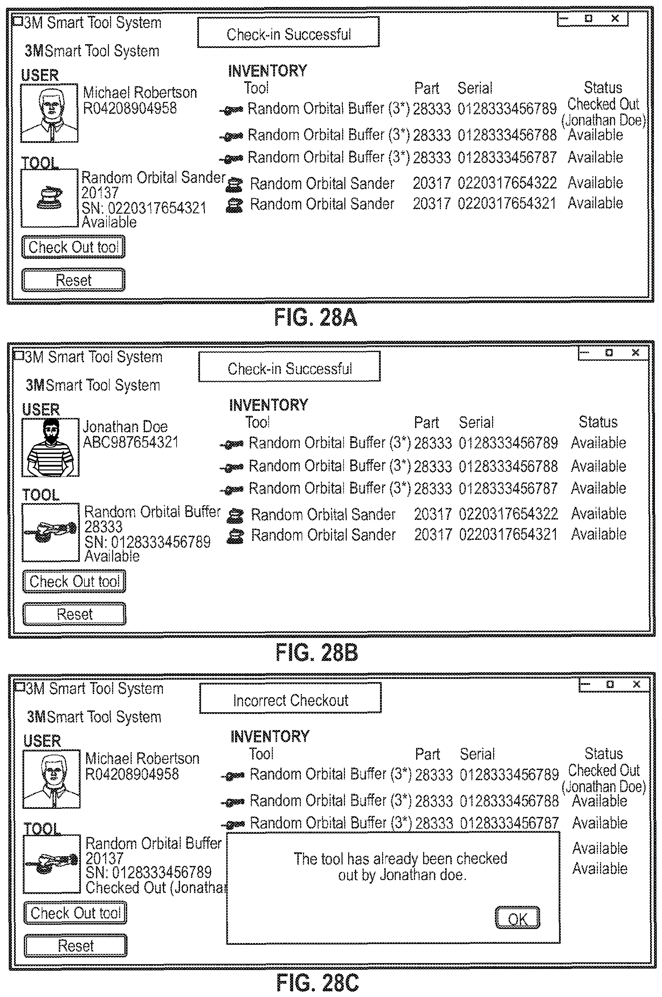

FIGS. 28A-C are example pictorial representations of graphical user interfaces (GUIs) of a tool inventory, in accordance with one or more techniques of this disclosure. The tool inventory may be a part of a database, such as database 6 of FIG. 1. The inventory database may communicate with or be integrated into database 6 for reporting and/or monitoring of tool check-in and check-out. FIG. 28A is a pictorial representation of a GUI of the tool inventory after check-in of a random orbital sander by Michael Robertson. In the example of FIG. 28A, a tool tag of the random orbital sander and a tag of a user ID of Michael Robertson have been scanned by the tag reader and displayed by the computing device. A "Check in tool" button has been activated that unpairs the random orbital sander with Michael Robertson, and the pairing data is no longer displayed under "status" in the GUI. FIG. 27B is a pictorial representation of a GUI of the tool inventory after check-in of the random orbital buffer by Jonathan Doe. In the example of FIG. 27B, a tool tag of the random orbital buffer and a tag of a user ID of Jonathan Doe have been scanned by the tag reader and displayed by the computing device. The "Check in tool" button has been activated that unpairs the random orbital buffer with Jonathan Doe. The pairing data is no longer displayed under "status" in the GUI. FIG. 28C is a pictorial representation of a GUI of the tool inventory after an erroneous check-out attempt, in accordance with one or more techniques of this disclosure. In the example of FIG. 28C, Michael Robertson attempted to check-out the random orbital buffer that was checked out by Jonathan Doe, such as by the techniques described in FIG. 27A-B above. The computing device displayed an error message that "The tool has already been checked out by Jonathan Doe".

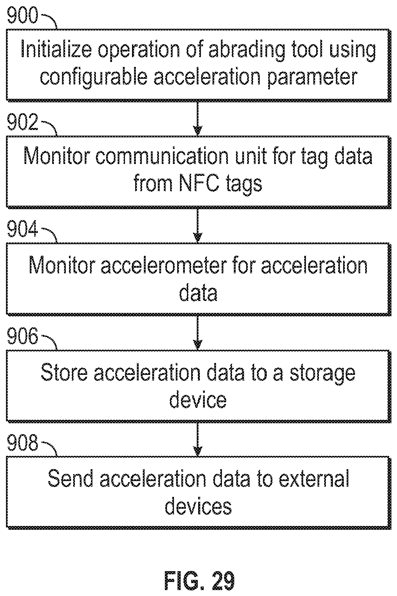

FIG. 29 is a flowchart illustrating an example operation of a computing device that detects vibration in an abrading tool, in accordance with one or more techniques of this disclosure. The computing device may be, for example, microcontroller 104 of abrading tool 100 of FIG. 3. FIG. 29 is provided as an example. Other examples may omit actions shown in FIG. 29, may include more actions, may include actions in different orders, and so on.

As shown in the example of FIG. 29, microcontroller 104 may initialize operation of an abrading tool, such as abrading tool 100, using configurable acceleration parameters (900). Abrading tool 100 may include an accelerometer coupled to abrading tool 100 and configured to measure acceleration data describing a vibration level of abrading tool 100. As described in FIG. 3 above, a configurable acceleration parameter may include any parameter related to acceleration of an accelerometer of abrading tool 100 that may be configured for an application of abrading tool 100. For example, configurable acceleration parameters may include a minimum acceleration recording threshold, a maximum acceleration warning threshold, and an acceleration sample rate.

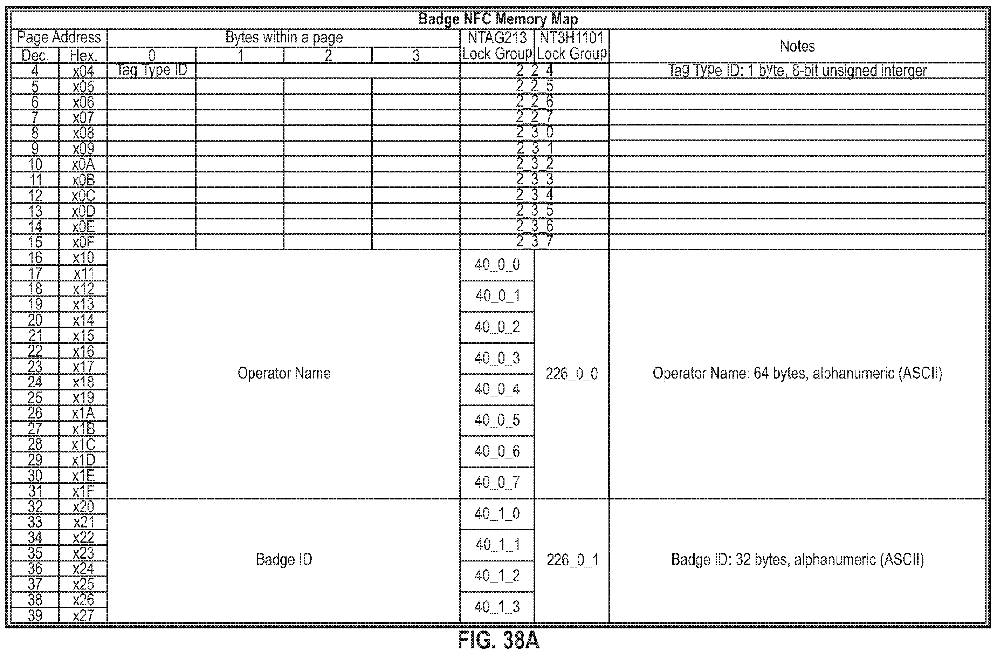

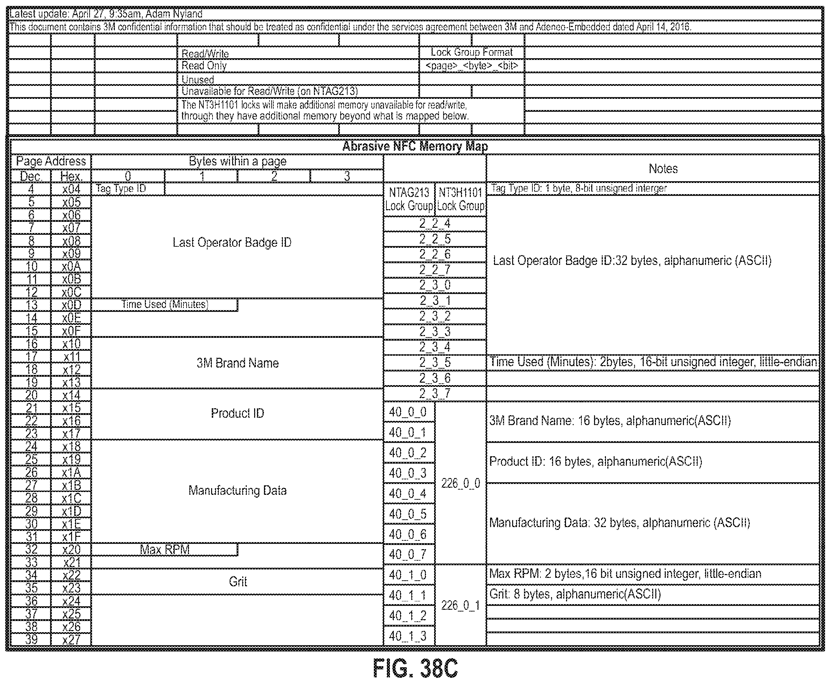

Microcontroller 104 may monitor a communication unit, such as communication unit 102, for tag data from NFC tags (902). In some examples, the tag data may include at least one of: (i) user identification information identifying a user of abrading tool 100, such as shown in FIG. 38A, or (ii) data regarding a consumable abrasive product, such as CAP 120 and shown in FIG. 38C. For example, microcontroller 104 may receive tag data from communication unit 102 and maintain an open channel of communication from communication unit 102. In some examples, microcontroller 104 may receive data from communication unit 102 and determine whether the data is tag data, such as based on a tag type ID. In some examples, communication unit 102 may communicate, to one or more external devices (e.g., CAP 120, computing system 4 (FIG. 1)) user-device pairing data that associates abrading tool 100, CAP 120, and a user of user ID 126.

Microcontroller 104 may monitor the accelerometer for acceleration data (904). For example, microcontroller 104 may receive acceleration data from the accelerometer and maintain an open channel of communication from accelerometer 104.

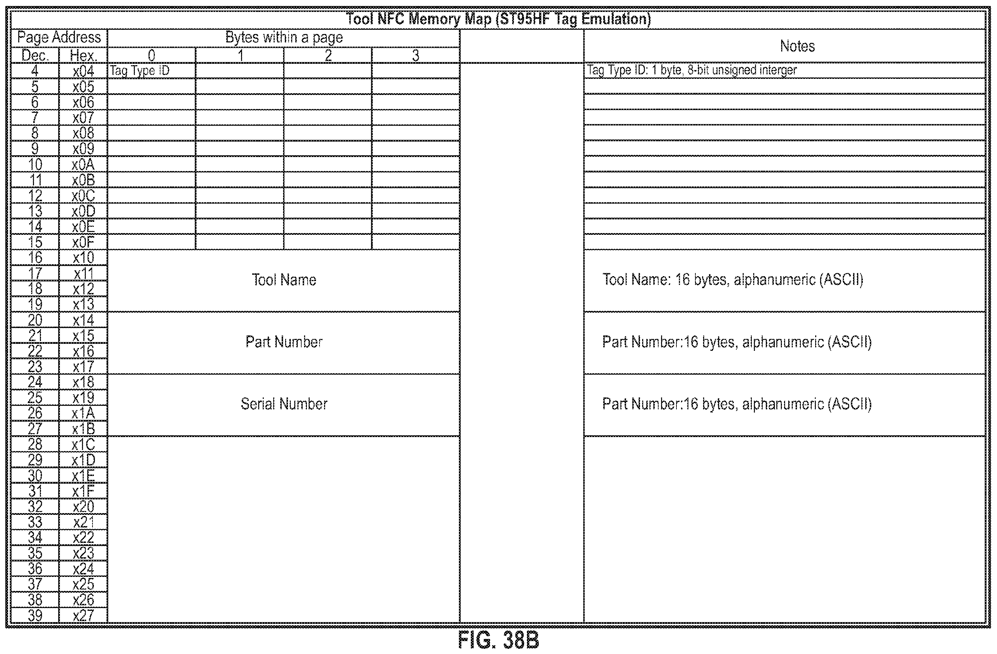

In response to the communication unit receiving the acceleration data, microcontroller 104 may store the acceleration data to a storage device (906). In some examples, microcontroller 104 may optionally filter the received acceleration data from the accelerometer before storing the acceleration data. This filter may also be the H(s) filter described in ISO5349-1. This filtering may be done in the tool, or external computing device (smart phone, computer, database or cloud). For example, microcontroller may receive the acceleration data from the accelerometer and compare the acceleration data to a minimum, maximum, or intermediate acceleration recording thresholds that have been set in the tool config file, database or cloud. If a value of the acceleration data, such as an amplitude, falls below the minimum acceleration recording threshold, microcontroller 104 may optionally store the acceleration data, or turn on an indicator. The stored acceleration data may be associated with the tag data, such as user identification information identifying a user of abrading tool 100, such as shown in FIG. 38A, tool tag data such as shown in FIG. 38B, and/or data regarding a consumable abrasive product, such as shown in FIG. 38C. The acceleration comparison may be to an upper threshold (as set in a config file) and if this threshold is exceeded the microcontroller can provide feedback to the operator. Several thresholds may be set in the configuration file, and feedback provided to the operator and/or uploaded to database when the a first cautionary acceleration threshold is exceeded, and when the more significant warning acceleration threshold is exceeded. Acceleration data may

Microcontroller 104 may perform various actions using the acceleration data. In some examples, microcontroller 104 may cause communication unit 102 to send the acceleration data and the associated tag data to the one or more external devices (908). In some examples, microcontroller 104 may output the acceleration data to the one or more external devices in response to cessation of microcontroller 104 receiving the acceleration data.

In some examples, the acceleration data output by microcontroller 104 includes a summary of the acceleration data. For example, the summary of the acceleration data may include at least one of a user identification (ID) from the user identification information, a consumable abrasive product type from the data regarding the consumable abrasive product, a tool type from data regarding the abrading tool, and a time of operation of the abrading tool, such as a starting and stopping time of recording the acceleration data. In some examples, microcontroller 104 may output, in response to an acceleration value of the acceleration data exceeding the maximum acceleration warning threshold, a warning indication. In some examples, microcontroller 104 outputs the acceleration data in real-time, such as continuously or periodically.

In some examples, microcontroller 104 receives an indication of a cumulative vibration dose of the user and determines, based on the acceleration data and the cumulative vibration dose of the user, a current vibration dose of the user based on the acceleration data and the cumulative vibration dose. For example, microcontroller 104 may receive information on productivity, security, inventory, safety, or other topics based on data mined and/or analyzed by a computing system, such as computing system 4 of FIG. 1. Microcontroller 104 may store the current vibration dose of the user to the storage device, such as locally on memory 106 or remotely to, for example, computing system 4, database 6, and/or smart phone 20 of FIG. 1. If microcontroller 104 determines that the current vibration dose exceeds a threshold, microcontroller 104 may output an indication that the current vibration dose exceeds the threshold.

In some examples, such as examples in which the abrading tool includes a pressure sensor that measures force applied to the abrading tool by the user of the abrading tool, microcontroller 104 may monitor the pressure sensor for force measurements of the force applied to abrading tool 100. In response to receiving the acceleration data, microcontroller 104 may store the force measurements to a storage device and associate the force measurements with the acceleration data. Microcontroller 104 may determine, based on the acceleration data and the force measurements, whether a value of the safety parameter exceeds a threshold. In some examples, in response to determining that the value of the safety parameter exceeds the threshold, microcontroller 104 may cause communication unit 102 to output a safety parameter warning indication. In some examples, in response to determining that the value of the safety parameter exceeds the threshold, microcontroller 104 may cause I/O system 106 to output a safety parameter warning indication, such as a color or blinking pattern of one or more LEDs. For example, I/O system 106 may include one or more LEDS having various colors and/or various blinking patterns configured to indicate that the value of the safety parameter exceeds the threshold.

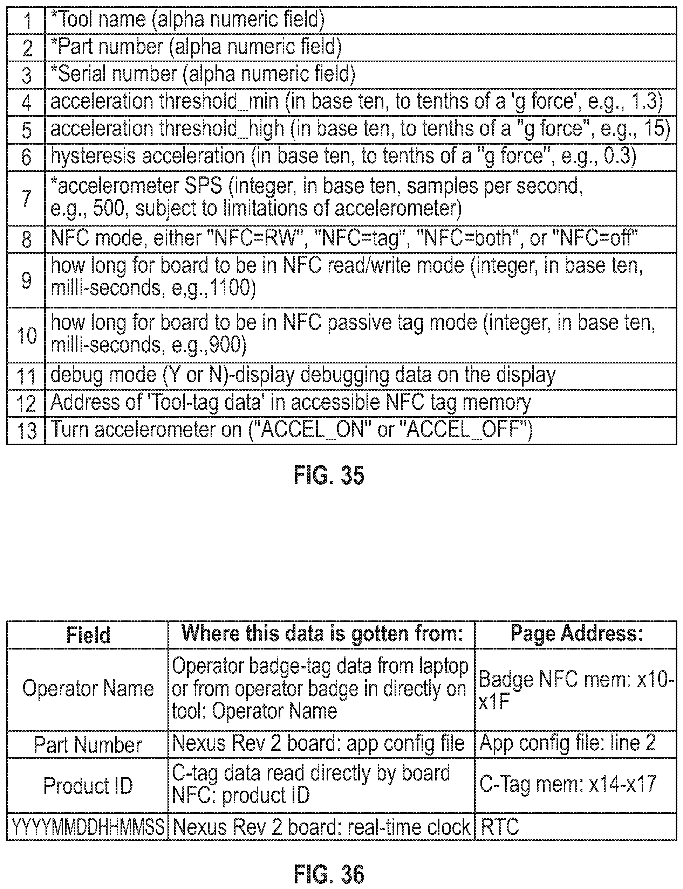

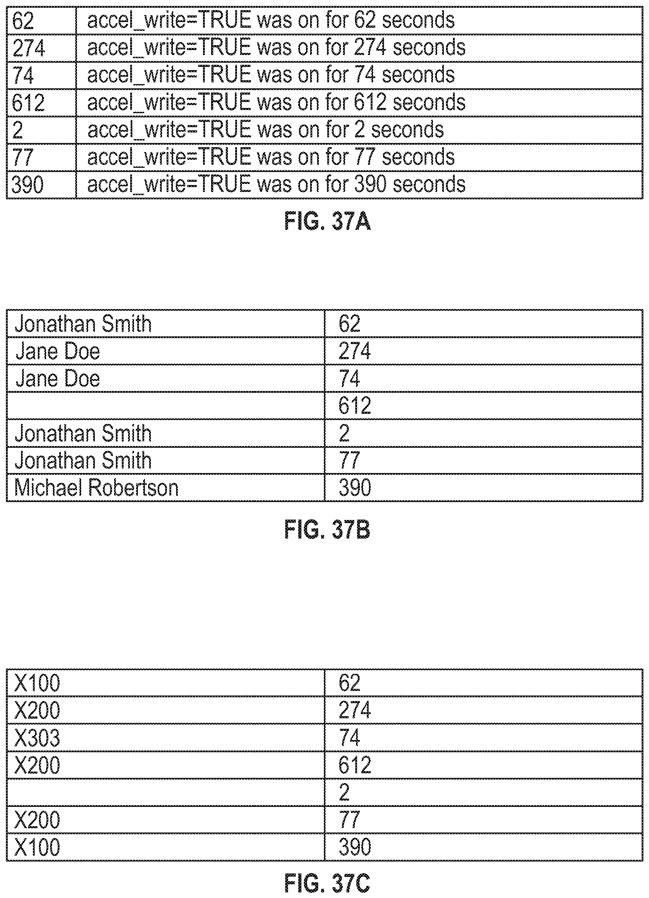

In some examples, microcontroller 104 determines runtime data of the abrading tool based on a start time of receiving the acceleration data and an end time of receiving the acceleration data. Runtime data may include an amount of time that the abrading tool is operated, and may be indicated by an amount of time that the acceleration data is stored. Microcontroller 104 may store the runtime data of the abrading tool. The runtime may be associated with the tag data. For example, the tag data, such as shown in FIGS. 38A-C, may include data regarding a user, a tool, and a consumable abrasive product. The acceleration data may be stored to an acceleration data file that includes the runtime data, the user, the tool, and the consumable abrasive product, such that the runtime data may be mapped to the user. See, for example, FIGS. 36 and 37A-C below.

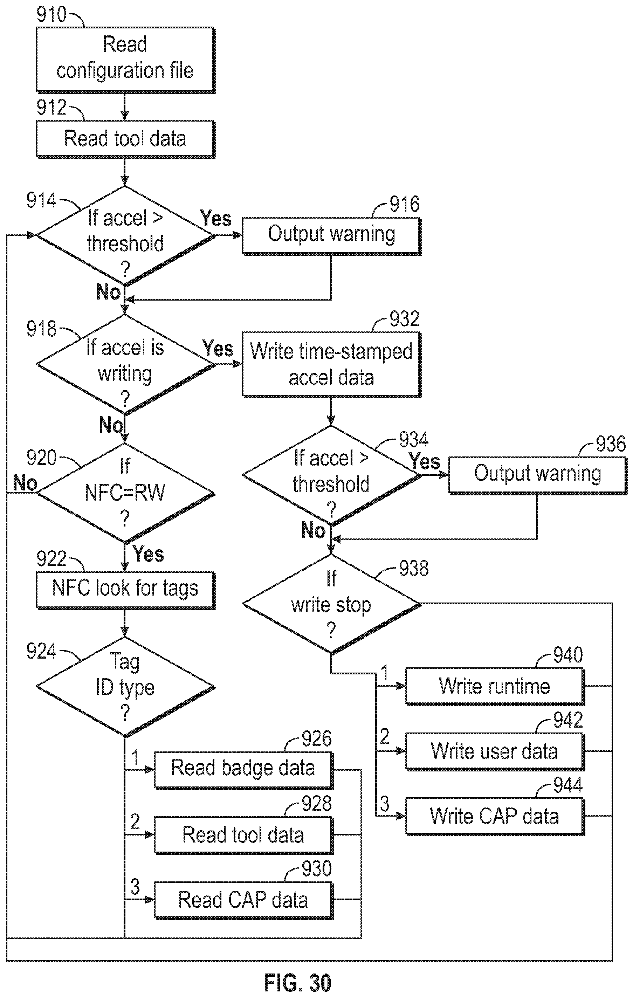

FIG. 30 is a flowchart illustrating an example operation that detects acceleration data from an accelerometer of an abrading tool, in accordance with one or more technique of this disclosure. For example, FIG. 25 may be an example implementation of the method of FIG. 24. FIG. 30 is provided as an example and may be described with reference to abrading tool 100 of FIG. 3. Other examples may omit actions shown in FIG. 30, may include more actions, may include actions in different orders, and so on.

Microcontroller 104 may read a configuration file, such as FIG. 35 (910). For example, microcontroller 104 may read a configuration file that includes data regarding an application specific configuration of abrading tool 100. The configuration file may include values for configurable parameters, such as configurable acceleration parameters. Microcontroller 104 may read tool data (912). For example, tool data may be stored in memory 106 of abrading tool 100, such that microcontroller 104 may read the tool data from memory 106. In other examples, microcontroller 104 may receive the tool data, such as through communication unit 102.

Microcontroller 104 may monitor acceleration data of an accelerometer of abrading tool 100 by receiving the acceleration data from the accelerometer and determining whether the acceleration data exceeds a maximum acceleration threshold (914). If the acceleration exceeds a maximum acceleration threshold, microcontroller 104 may cause abrading tool 100 to output an acceleration indication (916). The microcontroller 104 may monitor and continuously write acceleration data (918) independent of thresholds.

While microcontroller 104 has not received the indication to write the acceleration data, microcontroller 104 may determine whether communication unit 102 is in read/write mode. While communication unit 102 is in a tag read/write mode (920), microcontroller 104 may monitor communication unit 102 for tag data from tags (922). For example, communication unit 102 may read badge data from badge tags (926), may read tool data from tool tags (928), or may read CAP data from CAP tags (930).

In response to receiving a write indication, microcontroller 104 may write time-stamped acceleration data while abrading tool 100 is operating (932). In some examples, the write indication may be a user input, such as a button indicating that microcontroller 104 may write acceleration data. In other examples, the write indication may be an automatic indication in response to communication unit 102 receiving the badge data, tool data, and CAP data and microcontroller 104 receiving the acceleration data. Microcontroller 104 may continue to monitor the accelerometer of abrading tool 100 as described in steps 918 and 920 above (934, 936).

Microcontroller 104 may continue to write acceleration data while microcontroller 104 receives acceleration data. In response to cessation of microcontroller 104 receiving acceleration data, microcontroller 104 may stop writing acceleration data (938). Microcontroller 104 may output a summary of operation of abrading tool 100 by writing a runtime of abrading tool 100 (940), writing user data of the user of abrading tool 100 (942), and writing CAP data of CAP 120 coupled to abrading tool 100 (944).

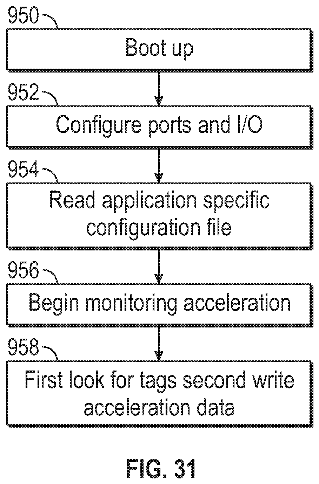

FIG. 31 is a flowchart illustrating an example operation for starting up and collecting acceleration data from an abrasive tool, in accordance with one or more techniques of this disclosure. The technique of FIG. 31 may be implemented by, for example, abrasive tool 100 of FIG. 3. Abrasive tool 100 may boot up (950). For example, memory 106 may include instructions for an operating system. Microcontroller 104 may read the instructions and load the operating system. Abrasive tool 100 may configure input and output ports (952). For example, abrasive tool 100 may include various input buttons and ports and various output screens and indicators. Abrasive tool 100 may read an application specific configuration file, as described in FIG. 3, as input for application software (954). For example, memory 106 may include the application specific configuration file or communication unit 102 may receive the application specific configuration file. Abrading tool 100 may begin monitoring acceleration, such as by monitoring an accelerometer on abrading tool 100 (956). Abrading tool 100 may first look for tags and, once tags are identified, write acceleration data to files associated with the tags (958).

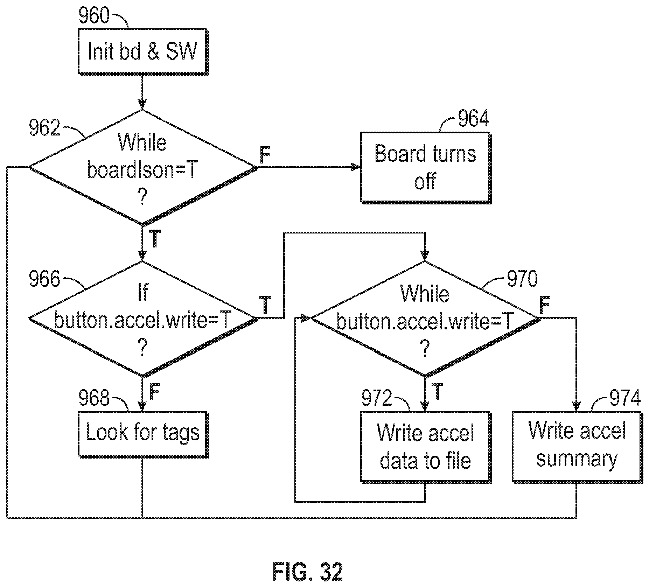

FIG. 32 is a more detailed flowchart illustrating the example operation of aspects of FIG. 31 above, in accordance with one or more techniques of the disclosure. Abrading tool 100 may initialize a board on abrading tool 100, such as described in steps 950-954 of FIG. 31 above (960). The board on abrading tool 100 may include a variety of components, such as communication unit 102, microcontroller 104, memory 106, I/O system 108, and any other components of abrading tool 100. Abrasive tool 100 may monitor the board for power (962). When the board does not have power, indicated by the condition of BoardIsOn=T being F, the board turns off (964). When the board does have power, indicated by the condition of BoardIsOn=T being T, the abrasive tool may monitor abrasive tool 100 for acceleration write indications (966). When the board is not receiving an acceleration write indication, indicated by the condition of Button.Accel.Write=T being F, abrading tool 100 may look for tags (968). When the board is receiving an acceleration write indication, indicated by the condition of Button.Accel.Write=T being T, abrading tool 100 may monitor the receipt of the acceleration write indication (970). While the acceleration write indication is received, indicated by the condition Button.Accel.Write=T being T, abrading tool 100 may write acceleration data to a file, such as a file associated with the tags (972). When the acceleration write indication is no longer received, indicated by the condition Button.Accel.Write=T being F, abrading tool 100 may write an acceleration summary (974).

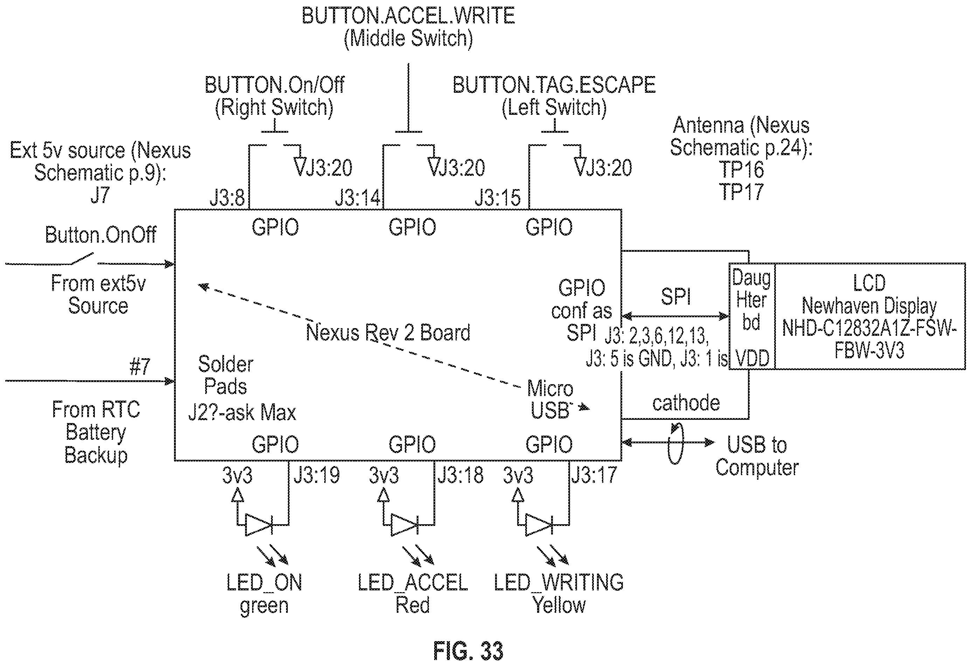

FIG. 33 is a schematic diagram of a control board of an abrading tool, in accordance with one or more techniques of the disclosure. The control board of FIG. 33 may be implemented by, for example, communication unit 102, microcontroller 104, memory 106, I/O system 108, user identification unit 122, ADC 112, and sensor 114 of FIG. 3. As shown in FIG. 33, the control board may include general purpose input/output (GPIO) ports of LED_ON to indicate the control board is powered on; LED_ACCEL to indicate acceleration above a threshold; LED_WRITING to indicate writing acceleration data; DISPLAY, LCD to display information; BUTTON.ONOFF to turn power on and off to the board; BUTTON.ACCEL.WRITE to write acceleration data to an acceleration data file; and BUTTON.TAG.ESCAPE to exit a tag search loop. The control board may receive a USB, such as to receive a configuration file.

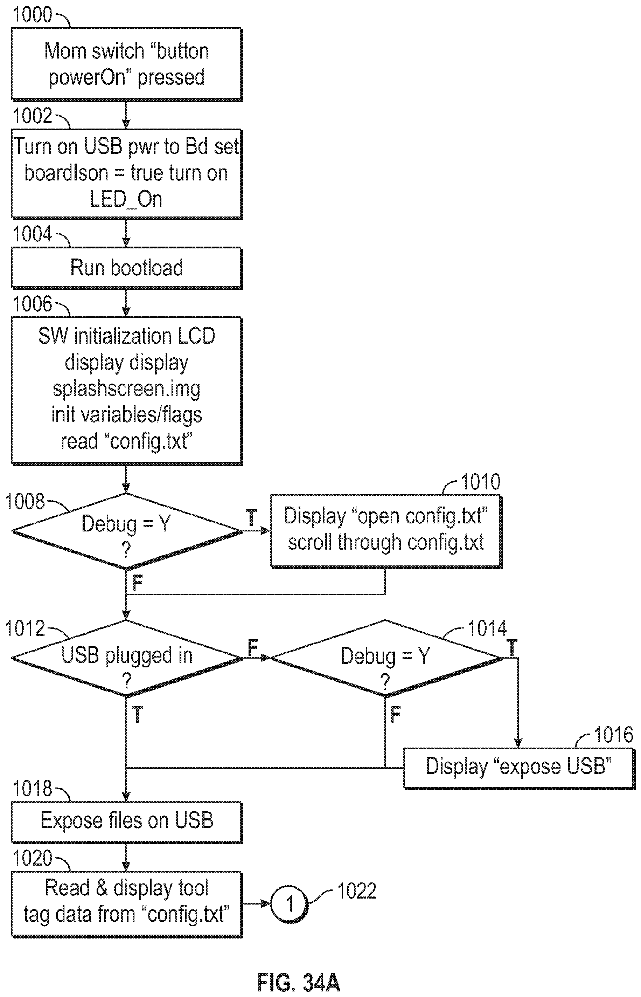

FIGS. 34A-F are more detailed flowcharts illustrating the example operation of aspects of FIGS. 31 and 32 using the control board of FIG. 33, in accordance with one or more techniques of this disclosure.

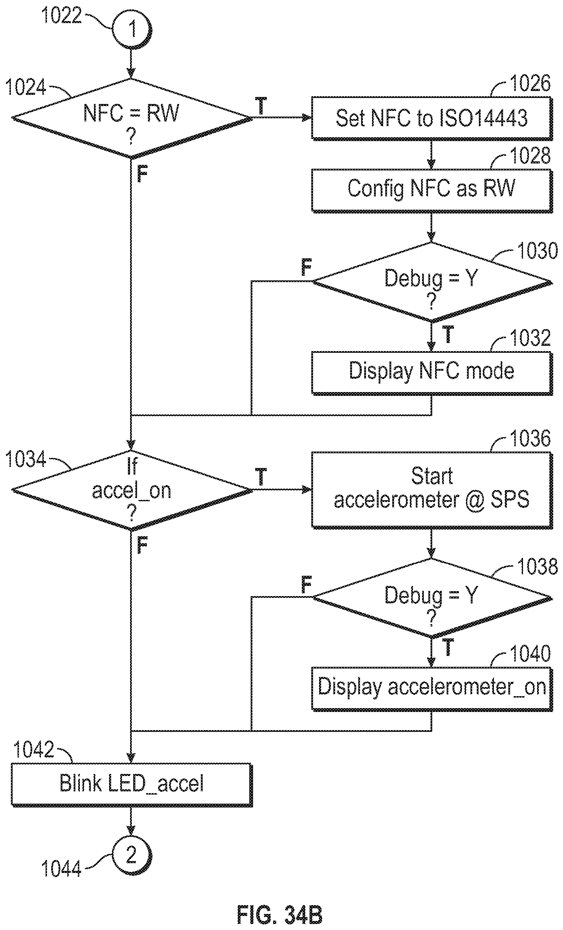

FIG. 34A is a flowchart illustrating an example operation for a first part of initializing a control board, in accordance with one or more techniques of this disclosure. The control board may receive an indication that a momentary switch "Button PowerOn" is pressed (1000) to turn on power. In response, the control board may turn on USB power to the board, set a status of the board to "true", and indicate on an LED light that the board is on (1002). The control board may run bootload to load boot files and begin board initialization (1004). The bootload may customize the board for specific applications and may initialize indicators, such as a LED_ON light to indicate power on, LED_ACCEL light to indicate receiving acceleration above a threshold, and LED_WRITING light to indicate writing acceleration data, and inputs, such as Button.PowerOn to turn on power, Button.Accel.Write to write acceleration data, and Button. Tag. Escape to exit tag searching. The control board may then begin application initialization by displaying a splash screen image, initializing variables and flags such as an undefined tag type ID, and reading an application configuration file "config.txt" (1006). If the process is debugged (1008), the control board may display an "open config.txt" message and scrolling through config.txt (1010). If the config.txt file is loaded, the control board may determine whether the USB is plugged in (1012). If the control board receives an indication that the USB is not plugged in, the control board may debug the process (1014) and display an "expose USB" message. If the control board receives and indication that the USB is plugged in, the control board may expose files through the USB (1018), for example to an external computing system or database. After exposing files on the USB, the control board may read and display tool tag data from the "config.txt" file (1020). The process may move on to transition 1 (1022) in FIG. 34B.

FIG. 34B is a flowchart illustrating an example operation of a second part of initializing a control board, in accordance with one or more techniques of this disclosure. Beginning at transition 1 (1022), the control board may determine whether and NFC reader coupled to the control board is in read/write mode (1024). If the control board receives an indication that the NFC reader is in read/write mode, the control board may set the NFC reader to ISO14443 communication protocol (1026) and configure the NFC reader to read/write mode. If the process is debugged (1030), the control board may display the NFC mode (1032). The control board may determine whether the accelerometer is on (1034). If the control board receives an indication that the accelerometer is on, the control board may start the accelerometer at a sampling rate (1036). If the process is debugged (1038), the control board may display that the accelerometer is on (1040). In response to determining that the accelerometer is not on, the control board may blink an indication of the accelerometer (1042). This may complete initialization and the process may move to transition 2 (1044).

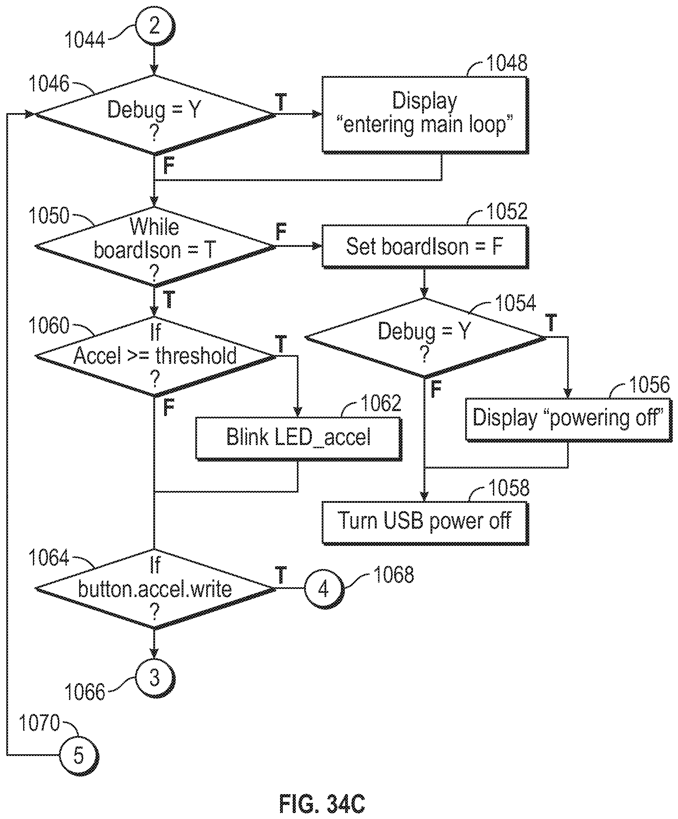

FIG. 34C is a flowchart illustrating an example operation of a first part of a process for monitoring a tag reader for tag data and writing acceleration data to a file, in accordance with one or more techniques of this disclosure. Beginning with transition 2 (1044), if the Debug = Y flag is set to TRUE in the config file (1046), the control board may display that the process is "entering main loop" (1048). If power is lost to the control board, the control board may set a control board condition to off and turn the USB power off ( 1052). If the Debug = Y flag is set to TRUE in the config file (1054), the control board may display that the control board is "powering off" (1056). While the control board receives power (1050), the control board may monitor acceleration to determine whether an acceleration signal from an accelerometer exceeds a threshold (1060). In response to receiving an acceleration signal that exceeds the threshold, the control board may blink an LED light indication (LED_ACCEL) (1062) and/or report to a database. The control board may determine whether an acceleration write button has been initiated (1064). In response to receiving an indication that the acceleration write button has been initiated, the control board may continue to transition 4 to write acceleration data (1068). If the control board has not received an indication that the acceleration write button has been initiated, the control board may continue to transition 3 to look for tag data (1066).

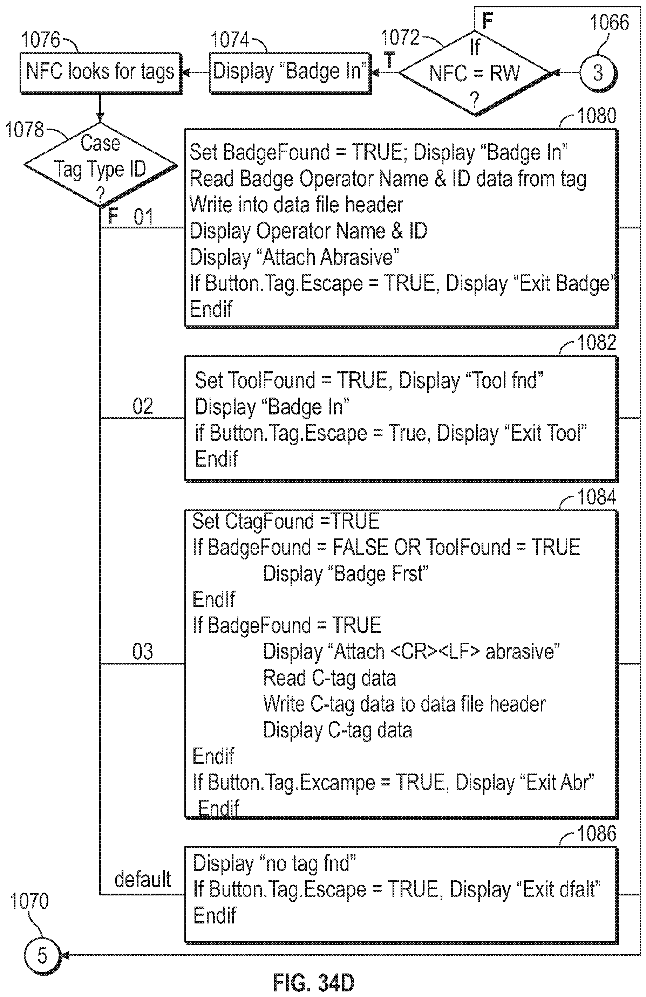

FIG. 34D is a flowchart illustrating an example operation for searching for tag data, in accordance with one or more techniques of this disclosure. Beginning with transition 3 (1066), the control board may determine whether the NFC reader is in read/write mode (1072). In response to determining that the NFC reader is not in read/write mode, the control board may return to step 1050 of FIG. 34C (1070). In response to determining that the NFC reader is in read/write mode, the control board may display a "badge in" message to prompt a user to scan a badge (1074). The NFC reader may begin looking for tags (1076). In response to finding a tag, the control board may evaluate a case tag type ID of the tag (1078).

If the type ID of the tag is 01, the control board may determine the tag to be a badge tag (1080). The control board may set BadgeFound to "TRUE" and display "badge in". The control board may read the operator name and ID data from the tag and write the data into a data file header to identify acceleration data with the operator. The control board may display the operator name and ID and prompt the operator to "attach abrasive". If a tag escape button is activated, the control board may display "exit badge".

If the type ID of the tag is 02, the control board may determine the tag to be a tool tag (1082). The control board may set ToolFound to "TRUE" and display "Tool fnd". The control board may display "badge in". If a tag escape button is activated, the control board may display "exit tool".

If the type ID of the tag is 03, the control board may determine the tag to be a consumable abrasive product tag (1084). The control board may set CtagFound to "TRUE". If the badge has not been found or the tool has been found, the control board may prompt the operator to scan "badge frst". If the badge has been found, the control board may prompt the user to "Attach <CR><LF> abrasive". The control board may read the C-tag data, write the C-tag data to the data file header to identify, and display the C-tag data. If a tag escape button is activated, the control board may display "exit abr".

If the type ID of the tag is not found, the control board may assign a default (1086). The control board may display "no tag fnd". In a tag escape button is activated, the control board may display "exit dfalt".

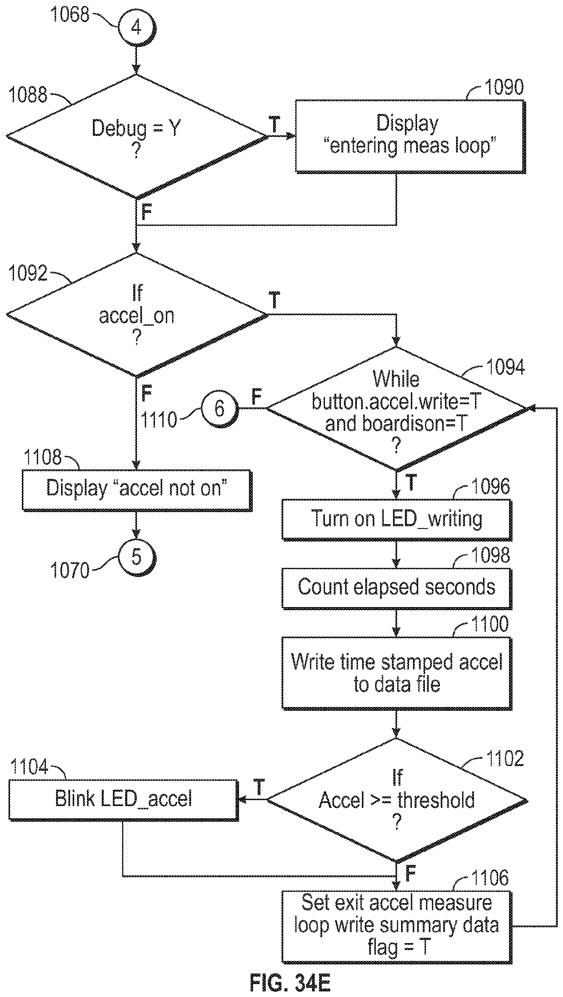

FIG. 34E is a flowchart illustrating an example operation for writing acceleration data, in accordance with one or more techniques of this disclosure. Beginning at transition 4 (1068), if the process is debugged (1088), the control board may display "entering meas loop" (1090). The control board may determine whether the accelerometer is on (1092). In response to determining that the accelerometer is not on, the control board may display "accel not on" (1108) and either debug the process (not shown) or return to transition 5 (1070). In response to determining that the accelerometer is on, the control board may determine whether the acceleration write button has been activated and whether the board is on (1094). In response to determining that at least one of the acceleration write button has not been activated and the board is not on, the control board may proceed to transition 6 (1110). In response to determining that the acceleration write button has been activated and the board is on, the control board may turn on an LED writing light (1096) and begin counting second elapsed (1098). The control board may continuously write time stamped acceleration data to the data file (1100). The control board may monitor the accelerometer to determine whether the accelerometer exceeds a threshold (1102). In response to determining that the accelerometer exceeds a threshold, the control board may blink an acceleration light (1104). Once the control board stops writing acceleration data, the control board may exit an acceleration write loop (1106) and continue to a summary process of transition 6 (1110).

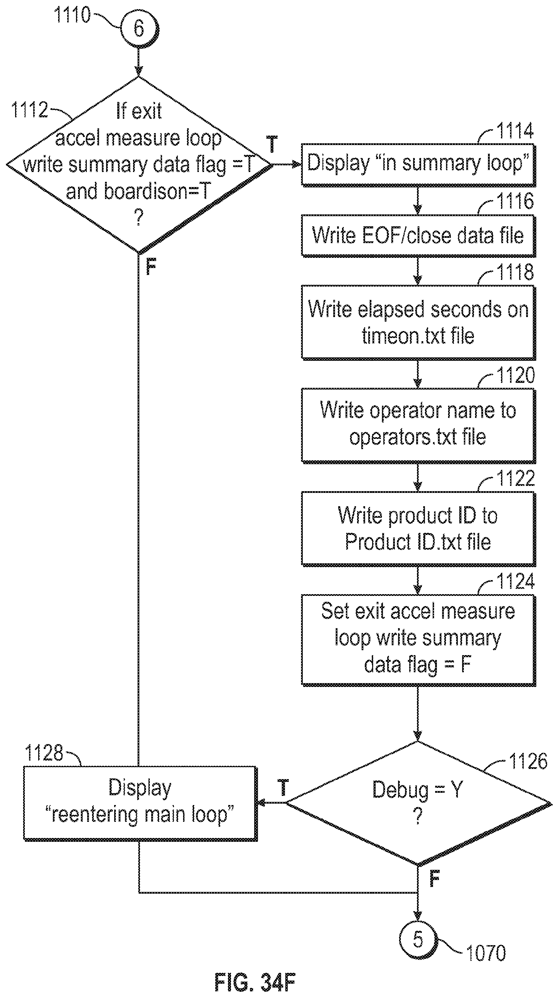

FIG. 34F is a flowchart illustrating an example operation for writing an acceleration summary of acceleration data, in accordance with one or more techniques of this disclosure. Beginning at transition 6 (1110), the control board may determine whether the board is on and the acceleration write loop has been exited and the summary process begun. In response to determining that either the board is not on or the acceleration write loop has not exited and the summary process not begun, the control board may return to transition 5 (1070). In response to determining that the board is on and the acceleration write loop has exited to the summary process, the control board may display an "in summary loop" message (1114) and write end of file (1116). The control board may write the elapsed second in a time file "TimeOn.txt" (1118), write the operator name to an operator file "Operators.txt" (1120), and may write a product ID to a product ID file "ProductID.txt" (1122). The control board may exit the summary loop (1124). If the process is debugged (1126), the control board may display "reentering main loop" and proceed back to transition 5 (1070).

FIG. 35 is a table of information received from an application configuration file, in accordance with one or more techniques of this disclosure. As shown in FIG. 35, the application configuration file may include a variety of information, such as: tool name; part number; serial number; acceleration threshold minimum; acceleration threshold high; hysteresis acceleration; accelerometer sample rate (SPS); NFC mode; a length of time for the board to be in read/write mode; a length of time for the board to be in passive tag mode; debug mode; address of tool tag data; and turn accelerometer on switching.

FIG. 36 is a table of data file information for an acceleration data file, in accordance with one or more techniques of this disclosure. As shown in FIG. 36, the acceleration data file may include identifiers that include an operator name, part number consumable abrasive product ID, and a time stamp. The identifiers may be paired such that acceleration data may be associated with the identifiers.

FIG. 37A is an example table of time entries in an acceleration data file, in accordance with one or more techniques of this disclosure. As shown in FIG. 37A, the table includes a list of operating times of the tool. The time entries in the acceleration data file may record the time the accelerometer is writing data in seconds. The control board may concatenate data to the end of the acceleration file.

FIG. 37B is an example table of operator entries in an acceleration data file, in accordance with one or more techniques of this disclosure. As shown in FIG. 37B, the table includes a list of operators and operating times of the tool. The operator entries record the operators using the tool and the amount of time each operator used the tool in seconds.

FIG. 37C is an example table of consumable products entries in an acceleration data file, in accordance with one or more techniques of this disclosure. As shown in FIG. 37C, the table includes a list of operating times for consumable abrasive products of the tool. The consumable products entries record the type of consumable used with the tool and the amount of time the consumable was used with the tool in seconds.

FIG. 38A is an example memory map of badge tag data, in accordance with one or more techniques of this disclosure. As shown in FIG. 38A, the memory map may include addresses associated with a tag type ID, an operator name, and a badge ID.

FIG. 38B is an example memory map of tool tag data, in accordance with one or more techniques of this disclosure. As shown in FIG. 38B, the memory map may include addresses associated with a tag type ID, a tool name, a part number, and a serial number.

FIG. 38C is an example memory map of consumable abrasive product tag data, in accordance with one or more techniques of this disclosure. As shown in FIG. 38C, the memory map may include addresses associated with a tag type ID, last operator badge ID, a time used, a 3M brand name, a product ID, manufacturing data, a max RPM, and a grit.

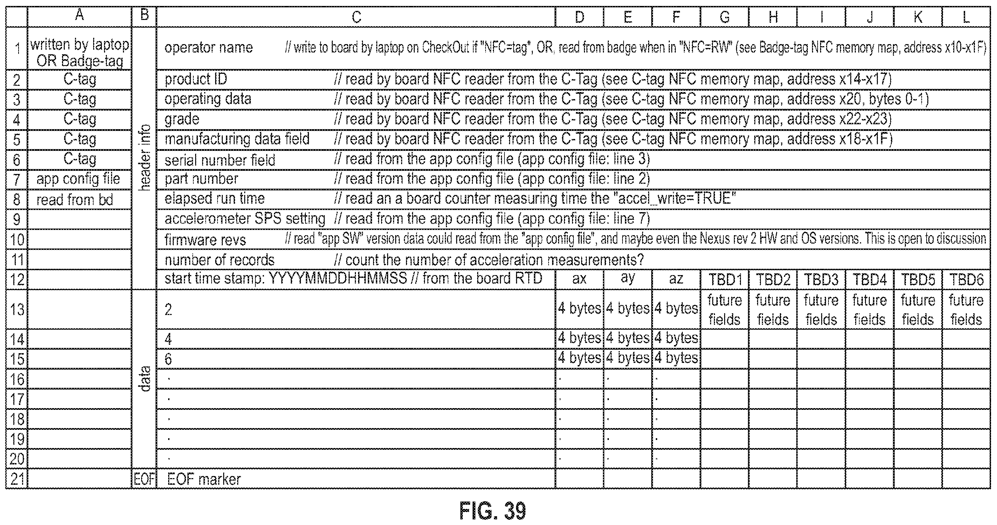

FIG. 39 is an example acceleration data file, in accordance with one or more techniques of this disclosure. The example acceleration data file may be transferred, for example, from abrasive tool 8 to computing system 4 of FIG. 1. The example acceleration data file may include (i) header information, (ii) acceleration data, and (iii) an end of file marker.

It is to be recognized that depending on the example, certain acts or events of any of the techniques described herein can be performed in a different sequence, may be added, merged, or left out altogether (e.g., not all described acts or events are necessary for the practice of the techniques). Moreover, in certain examples, acts or events may be performed concurrently, e.g., through multi-threaded processing, interrupt processing, or multiple processors, rather than sequentially.

In one or more examples, the functions described may be implemented in hardware, software, firmware, or any combination thereof, located locally or remotely. If implemented in software, the functions may be stored on or transmitted over a computer-readable medium as one or more instructions or code, and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium.

It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable gate arrays (FPGAs), or other equivalent integrated or discrete logic circuitry, as well as any combination of such components. Accordingly, the term "processor," as used herein may refer to any of the foregoing structures or any other structure suitable for implementation of the techniques described herein. In addition, in some aspects, the functionality described herein may be provided within dedicated hardware and/or software modules. Also, the techniques could be fully implemented in one or more circuits or logic elements.

The techniques of this disclosure may be implemented in a wide variety of devices or apparatuses, including a wireless communication device or wireless handset, a microprocessor, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

Various examples have been described. These and other examples are within the scope of the following claims.

## Claims

1. A consumable abrasive product (150) comprising:
an abrading surface (151) for abrading a workpiece;
a communication unit (156) in the consumable abrasive product configured to perform at least one of: sending data to one or more external devices, or receiving data from the one or more external devices;
a data storage unit (158) in the consumable abrasive product configured to store the data; and
one or more a detection components (152) configured to detect whether the consumable abrasive product has potentially been damaged or excessively worn, wherein the data storage unit is configured to store data regarding whether the consumable abrasive product has potentially been damaged or excessively worn.

2. The consumable abrasive product of claim 1, wherein the detection component comprises an impact detection component configured to detect whether the consumable abrasive product has been subjected to an impact with force sufficient to damage the consumable abrasive product,
wherein the data storage unit is configured to store data indicating whether the consumable abrasive product has been subjected to an impact with force sufficient to damage the consumable abrasive product.

3. The consumable abrasive product of any of claims 1-2, wherein the detection component comprises an excessive rotation per minute (RPM) detection component configured to detect whether the consumable abrasive product has been subjected to an RPM level exceeding a threshold sufficient to damage the consumable abrasive product,
wherein the data storage unit is configured to store data indicating whether the consumable abrasive product has been subjected to an RPM level exceeding the threshold sufficient to damage the consumable abrasive product.

4. The consumable abrasive product of any of claims 1-3, wherein the one or more external devices include an abrading tool to which the consumable abrasive product is attached.

5. The consumable abrasive product of any of claims 1-4, wherein the one or more external devices include a mobile phone.

6. The consumable abrasive product of any of claims 1-5, wherein the consumable abrasive product comprises a sanding disk, a sanding belt, a grinding wheel, a burr, a wire wheel, polishing discs/belts, deburring wheels, convolute wheels, unitized wheels, flap discs, flap wheels, or cut-off wheels.

7. The consumable abrasive product of any of claims 1-6, wherein the communication unit is configured to receive vibration data from an abrading tool, the abrading tool being detachable from the consumable abrasive product, the abrading tool providing motive power to the consumable abrasive component during a work session, the vibration data indicating at least one of: a duration of vibration experienced by a user of the abrading tool during the work session, a frequency of the vibration, and a force of the vibration.

8. The consumable abrasive product (300) of any of claims 1-7, wherein the consumable abrasive product comprises:
a plurality of electrodes (302); and
a control unit (304) configured to apply an electrical signal across a first pair of electrodes of the plurality of electrodes and measure a voltage across a second pair of electrodes to generate a set of measurements.

9. The consumable abrasive product of claim 8, wherein the set of measurements is a first set of measurements, the control unit being further configured to:
compare the first set of measurements to a second set of measurements to determine whether there is a crack (312) in the consumable abrasive product.

10. The consumable abrasive product of claim 9, wherein the communication unit (308) is configured such that, in response to the control unit determining there is a crack in the consumable abrasive product, the communication unit sends data to the one or more external devices indicating that there is a crack in the consumable abrasive product.

11. The consumable abrasive product of any of claims 9-10, wherein the control unit is configured to apply a second electrical signal across the first pair of electrodes in the plurality of electrodes and measure a voltage across the second pair of electrodes to generate the second set of measurements.

12. The consumable abrasive product of any of claims 9-10, wherein the second set of measurements is based on datasets from other consumable abrasive products known not to contain cracks.

13. The consumable abrasive product of any of claims 8-12, wherein the consumable abrasive product comprises a sticker that comprises the electrodes and the control unit, wherein the sticker adheres to a surface of the consumable abrasive product.

14. The consumable abrasive product of any of claims 8-13, wherein the control unit is powered through a connection to an abrading tool through a disk mount of the consumable abrasive product.

15. An abrading tool (522) comprising:
a consumable abrasive product according to any of claims 1-14; a drive component configured to move the consumable abrasive product; and
a communication unit configured to communicate with one or more external devices.

## Patentansprüche

1. Ein verbrauchbares Schleifprodukt (150), aufweisend:
eine Schleifoberfläche (151) zum Schleifen eines Werkstücks;
eine Kommunikationseinheit (156) in dem verbrauchbaren Schleifprodukt, die konfiguriert ist, um mindestens eines durchzuführen von: Senden von Daten an eine oder mehrere externe Vorrichtungen oder Empfangen von Daten von der einen oder den mehreren externen Vorrichtungen;
eine Datenspeichereinheit (158) in dem verbrauchbaren Schleifprodukt, die konfiguriert ist, um die Daten zu speichern; und
eine oder mehrere Detektionskomponenten (152), die konfiguriert sind, um zu detektieren, ob das verbrauchbare Schleifprodukt möglicherweise beschädigt oder übermäßig abgenutzt ist, wobei die Datenspeichereinheit konfiguriert ist, um Daten darüber zu speichern, ob das verbrauchbare Schleifprodukt möglicherweise beschädigt oder übermäßig abgenutzt ist.

2. Das verbrauchbare Schleifprodukt nach Anspruch 1, wobei die Detektionskomponente eine Aufpralldetektionskomponente aufweist, die konfiguriert ist, um zu detektieren, ob das verbrauchbare Schleifprodukt einem Aufprall mit einer Kraft ausgesetzt war, die ausreicht, um das verbrauchbare Schleifprodukt zu beschädigen,
wobei die Datenspeichereinheit konfiguriert ist, um Daten zu speichern, die angeben, ob das verbrauchbare Schleifprodukt einem Aufprall mit einer Kraft ausgesetzt war, die ausreicht, um das verbrauchbare Schleifprodukt zu beschädigen.

3. Das verbrauchbare Schleifprodukt nach einem der Ansprüche 1 bis 2, wobei die Detektionskomponente eine Detektionskomponente für übermäßige Umdrehungen pro Minute (RPM) aufweist, die konfiguriert ist, um zu detektieren, ob das verbrauchbare Schleifprodukt einer RPM-Höhe ausgesetzt wurde, die einen Schwellenwert überschreitet, der ausreicht, um das verbrauchbare Schleifprodukt zu beschädigen,
wobei die Datenspeichereinheit konfiguriert ist, um Daten zu speichern, die angeben, ob das verbrauchbare Schleifprodukt einer RPM-Höhe ausgesetzt wurde, die den Schwellenwert überschreitet, der ausreicht, um das verbrauchbare Schleifprodukt zu beschädigen.

4. Das verbrauchbare Schleifprodukt nach einem der Ansprüche 1 bis 3, wobei die eine oder die mehreren externen Vorrichtungen ein Schleifwerkzeug enthalten, an dem das verbrauchbare Schleifprodukt befestigt ist.

5. Das verbrauchbare Schleifprodukt nach einem der Ansprüche 1 bis 4, wobei die eine oder die mehreren externen Vorrichtungen ein Mobiltelefon einschließen.

6. Das verbrauchbare Schleifprodukt nach einem der Ansprüche 1 bis 5, wobei das verbrauchbare Schleifprodukt eine Schleifscheibe, ein Schleifband, ein Schleifrad, einen Fräser, eine Drahtscheibe, Polierscheiben/-bänder, Entgratungsscheiben, Spiralscheiben, vereinheitlichte Scheiben, Lamellenschleifteller, Lamellenschleifscheiben oder Trennscheiben aufweist.

7. Das verbrauchbare Schleifprodukt nach einem der Ansprüche 1 bis 6, wobei die Kommunikationseinheit konfiguriert ist, um Vibrationsdaten von einem Schleifwerkzeug zu empfangen, wobei das Schleifwerkzeug von dem verbrauchbaren Schleifprodukt abnehmbar ist, wobei das Schleifwerkzeug während einer Arbeitssitzung Antriebskraft für die verbrauchbare Schleifkomponente bereitstellt, wobei die Vibrationsdaten mindestens eines angeben von: einer Vibrationsdauer, die durch einen Benutzer des Schleifwerkzeugs während der Arbeitssitzung erfahren wird, einer Vibrationsfrequenz und einer Vibrationsstärke.

8. Das verbrauchbare Schleifprodukt (300) nach einem der Ansprüche 1 bis 7, wobei das verbrauchbare Schleifprodukt aufweist:
eine Mehrzahl von Elektroden (302); und
eine Steuereinheit (304), die konfiguriert ist, um ein elektrisches Signal an ein erstes Elektrodenpaar der Mehrzahl von Elektroden anzulegen und eine Spannung an einem zweiten Elektrodenpaar zu messen, um einen Satz von Messungen zu erzeugen.

9. Das verbrauchbare Schleifprodukt nach Anspruch 8, wobei der Satz von Messungen ein erster Satz von Messungen ist, die Steuereinheit ferner konfiguriert ist zum:
Vergleichen des ersten Satzes von Messungen mit einem zweiten Satz von Messungen, um zu bestimmen, ob in dem verbrauchbaren Schleifprodukt ein Riss (312) vorhanden ist.

10. Das verbrauchbare Schleifprodukt nach Anspruch 9, wobei die Kommunikationseinheit (308) derart konfiguriert ist, dass, als Reaktion darauf, dass die Steuereinheit bestimmt, dass in dem verbrauchbaren Schleifprodukt ein Riss vorhanden ist, die Kommunikationseinheit Daten an die eine oder die mehreren externen Vorrichtungen sendet, die angeben, dass in dem verbrauchbaren Schleifprodukt ein Riss vorhanden ist.

11. Das verbrauchbare Schleifprodukt nach einem der Ansprüche 9 bis 10, wobei die Steuereinheit konfiguriert ist, um ein zweites elektrisches Signal an das erste Elektrodenpaar der Mehrzahl von Elektroden anzulegen und eine Spannung an dem zweiten Elektrodenpaar zu messen, um den zweiten Satz von Messungen zu erzeugen.

12. Das verbrauchbare Schleifprodukt nach einem der Ansprüche 9 bis 10, wobei der zweite Satz von Messungen auf Datensätzen von anderen verbrauchbaren Schleifprodukten basiert, von denen bekannt ist, dass sie keine Risse enthalten.

13. Das verbrauchbare Schleifprodukt nach einem der Ansprüche 8 bis 12, wobei das verbrauchbare Schleifprodukt einen Aufkleber aufweist, der die Elektroden und die Steuereinheit aufweist, wobei der Aufkleber an einer Oberfläche des verbrauchbaren Schleifprodukts haftet.

14. Das verbrauchbare Schleifprodukt nach einem der Ansprüche 8 bis 13, wobei die Steuereinheit über eine Verbindung mit einem Schleifwerkzeug über eine Scheibenhalterung des verbrauchbaren Schleifprodukts mit Strom versorgt wird.

15. Ein Schleifwerkzeug (522), aufweisend:
ein verbrauchbares Schleifprodukt nach einem der Ansprüche 1 bis 14;
eine Antriebskomponente, die konfiguriert ist, um das verbrauchbare Schleifprodukt zu bewegen; und
eine Kommunikationseinheit, die konfiguriert ist, um mit einer oder mehreren externen Vorrichtungen zu kommunizieren.

## Revendications

1. Produit abrasif consommable (150) comprenant :
une surface abrasive (151) destinée à l'abrasion d'une pièce de travail ;
une unité de communication (156) dans le produit abrasif consommable, configurée pour mettre en œuvre au moins l'un parmi : l'envoi de données à un ou plusieurs dispositifs externes, ou la réception de données en provenance de l'un ou des plusieurs dispositifs externes ;
une unité de stockage de données (158) dans le produit abrasif consommable, configurée pour stocker les données ; et
un ou plusieurs composants de détection (152) configurés pour détecter si le produit abrasif consommable a potentiellement été endommagé ou usé excessivement, dans lequel l'unité de stockage de données est configurée pour stocker des données concernant le fait de savoir si le produit abrasif consommable a potentiellement été endommagé ou usé excessivement.

2. Produit abrasif consommable selon la revendication 1, dans lequel le composant de détection comprend un composant de détection d'impact configuré pour détecter si le produit abrasif consommable a été soumis à un impact avec une force suffisante pour endommager le produit abrasif consommable,
dans lequel l'unité de stockage de données est configurée pour stocker des données indiquant si le produit abrasif consommable a été soumis à un impact avec une force suffisante pour endommager le produit abrasif consommable.

3. Produit abrasif consommable selon l'une quelconque des revendications 1 à 2, dans lequel le composant de détection comprend un composant de détection de régime excessif de rotation (tr/min) configuré pour détecter si le produit abrasif consommable a été soumis à un régime de rotation dépassant un seuil suffisant pour endommager le produit abrasif consommable,
dans lequel l'unité de stockage de données est configurée pour stocker des données indiquant si le produit abrasif consommable a été soumis à un régime de rotation dépassant le seuil suffisant pour endommager le produit abrasif consommable.

4. Produit abrasif consommable selon l'une quelconque des revendications 1 à 3, dans lequel le ou les dispositifs externes comportent un outil d'abrasion auquel le produit abrasif consommable est fixé.

5. Produit abrasif consommable selon l'une quelconque des revendications 1 à 4, dans lequel le ou les dispositifs externes comportent un téléphone mobile.

6. Produit abrasif consommable selon l'une quelconque des revendications 1 à 5, dans lequel le produit abrasif consommable comprend un disque abrasif, une bande abrasive, une meule, une fraise, un disque métallique, des disques/ bandes de polissage, des meules d'ébavurage, des meules à alvéoles, des meules unitaires, des disques à lamelles, des meules à lamelles ou des meules à tronçonner.

7. Produit abrasif consommable selon l'une quelconque des revendications 1 à 6, dans lequel l'unité de communication est configurée pour recevoir des données de vibration en provenance d'un outil d'abrasion, l'outil d'abrasion étant détachable du produit abrasif consommable, l'outil d'abrasion fournissant de la puissance motrice au composant abrasif consommable pendant une session de travail, les données de vibration indiquant au moins l'une parmi : une durée de vibration subie par un utilisateur de l'outil d'abrasion pendant la session de travail, une fréquence de la vibration et une force de la vibration.

8. Produit abrasif consommable (300) selon l'une quelconque des revendications 1 à 7, dans lequel le produit abrasif consommable comprend :
une pluralité d'électrodes (302) ; et
une unité de commande (304) configurée pour appliquer un signal électrique à travers une première paire d'électrodes de la pluralité d'électrodes et mesurer une tension à travers une seconde paire d'électrodes pour générer un ensemble de mesures.

9. Produit abrasif consommable selon la revendication 8, dans lequel l'ensemble de mesures est un premier ensemble de mesures, l'unité de commande étant configurée en outre pour :
comparer le premier ensemble de mesures à un second ensemble de mesures pour déterminer s'il y a une fêlure (312) dans le produit abrasif consommable.

10. Produit abrasif consommable selon la revendication 9, dans lequel l'unité de communication (308) est configurée de telle sorte que, en réponse à l'unité de commande déterminant qu'il y a une fêlure dans le produit abrasif consommable, l'unité de communication envoie des données à l'un ou aux plusieurs dispositifs externes indiquant qu'il y a une fêlure dans le produit abrasif consommable.

11. Produit abrasif consommable selon l'une quelconque des revendications 9 à 10, dans lequel l'unité de commande est configurée pour appliquer un second signal électrique à travers la première paire d'électrodes dans la pluralité d'électrodes et mesurer une tension à travers la seconde paire d'électrodes pour générer le second ensemble de mesures.

12. Produit abrasif consommable selon l'une quelconque des revendications 9 à 10, dans lequel le second ensemble de mesures est en fonction d'ensembles de données provenant d'autres produits abrasifs consommables connus pour ne pas contenir de fêlures.

13. Produit abrasif consommable selon l'une quelconque des revendications 8 à 12, dans lequel le produit abrasif consommable comprend un autocollant qui comprend les électrodes et l'unité de commande, dans lequel l'autocollant adhère à une surface du produit abrasif consommable.

14. Produit abrasif consommable selon l'une quelconque des revendications 8 à 13, dans lequel l'unité de commande est alimentée en puissance par le biais d'une connexion à un outil d'abrasion par le biais d'un support de disque du produit abrasif consommable.

15. Outil d'abrasion (522) comprenant :
un produit abrasif consommable selon l'une quelconque des revendications 1 à 14 ;
un composant d'entraînement conçu pour déplacer le produit abrasif consommable ; et
une unité de communication configurée pour communiquer avec un ou plusieurs dispositifs externes.
